(19) Europäisches Patentamt / European Patent Office / Office européen des brevets

(11) EP 2 289 973 B1

(12) **EUROPEAN PATENT SPECIFICATION**

(45) Date of publication and mention of the grant of the patent:
**17.07.2013 Bulletin 2013/29**

(21) Application number: **09742755.3**

(22) Date of filing: **08.05.2009**

(51) Int Cl.:
***C08G 75/23*** *(2006.01)* ***H01B 1/12*** *(2006.01)*
***H01M 8/10*** *(2006.01)* ***C08G 81/02*** *(2006.01)*

(86) International application number:
**PCT/JP2009/058665**

(87) International publication number:
**WO 2009/136631 (12.11.2009 Gazette 2009/46)**

(54) **NOVEL SULFONIC ACID GROUP-CONTAINING SEGMENTALIZED BLOCK COPOLYMER, USE THEREOF, AND METHOD FOR PRODUCING NOVEL BLOCK COPOLYMER**

EINE SULFONSÄUREGRUPPE ENTHALTENDES NEUES SEGMENTIERTES BLOCKCOPOLYMER, SEINE VERWENDUNG UND VERFAHREN ZUR HERSTELLUNG EINES NEUEN BLOCKCOPOLYMERS

NOUVEAU COPOLYMÈRE SÉQUENCÉ SEGMENTÉ CONTENANT UN GROUPE ACIDE SULFONIQUE, SON UTILISATION ET PROCÉDÉ DE FABRICATION DU NOUVEAU COPOLYMÈRE SÉQUENCÉ

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **08.05.2008 JP 2008122176**
**10.10.2008 JP 2008263722**
**17.10.2008 JP 2008268126**

(43) Date of publication of application:
**02.03.2011 Bulletin 2011/09**

(73) Proprietor: **Toyobo Co., Ltd.**
**Osaka-shi**
**Osaka 530-8230 (JP)**

(72) Inventors:
- **KITAMURA Kouta**
**Ohtsu-shi**
**Shiga 520-0292 (JP)**
- **ICHIMURA Shunsuke**
**Ohtsu-shi**
**Shiga 520-0292 (JP)**
- **SAKAGUCHI Yoshimitsu**
**Ohtsu-shi**
**Shiga 520-0292 (JP)**
- **AKITOMO Yoshiko**
**Ohtsu-shi**
**Shiga 520-0292 (JP)**
- **NISHIMOTO Akira**
**Ohtsu-shi**
**Shiga 520-0292 (JP)**
- **YAMASHITA Masahiro**
**Ohtsu-shi**
**Shiga 520-0292 (JP)**
- **SASAI Kousuke**
**Ohtsu-shi**
**Shiga 520-0292 (JP)**
- **MATSUMURA Takahiro**
**Ohtsu-shi**
**Shiga 520-0292 (JP)**

(74) Representative: **Müller-Boré & Partner**
**Patentanwälte**
**Grafinger Straße 2**
**81671 München (DE)**

(56) References cited:
**WO-A2-2007/084759**
**JP-A- 2004 244 437**
**JP-A- 2004 263 167**
**JP-A- 2005 255 850**
**JP-A- 2006 176 665**
**JP-A- 2006 176 666**
**JP-A- 2008 037 897**
**JP-A- 2004 244 437**
**JP-A- 2004 263 167**
**JP-A- 2005 126 684**
**JP-A- 2006 176 665**
**JP-A- 2006 176 666**
**JP-A- 2006 206 809**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### TECHNICAL FIELD

The present invention relates to a sulfonic-acid-group-containing segmented block copolymer having a novel structure, applications thereof, and a method of synthesizing a sulfonic-acid-group-containing segmented block copolymer having a novel structure. In addition, the present invention relates to a composition composed of the copolymer, a molded product, a proton exchange membrane for a fuel cell, and a fuel cell.

### BACKGROUND ART

Since a polymer electrolyte fuel cell (PEFC) including a polymer membrane as a proton exchange membrane or a direct methanol fuel cell (DMFC) is portable and can be reduced in size, it is finding applications in a car, a distributed power generation system for home use, and a power supply for portable equipment. A perfluorocarbon sulfonic acid polymer membrane as represented by Nafion® manufactured by DuPont in the United States has currently widely been used as a proton exchange membrane.

These membranes, however, are softened at 100°C or higher, and hence an operating temperature has been restricted to 80°C or lower. Since a higher operating temperature brings about various advantages such as energy efficiency, a smaller size of an apparatus and improvement in catalyst activity, a proton exchange membrane more resistant to heat has been demanded. A sulfonated polymer obtained by treating a heat-resistant polymer such as polysulfone or polyetherketone with a sulfonation agent such as fuming sulfuric acid has been well known as a heat-resistant proton exchange membrane (see, for example, Non-Patent Document 1). In general, however, it is difficult to control sulfonation reaction caused by a sulfonation agent. Thus, a degree of sulfonation has been too high or too low, or decomposition of a polymer, uneven sulfonation or the like has been likely.

Therefore, it has been studied to employ a polymer obtained by polymerizing a monomer having an acidic group such as a sulfonic acid group for a proton exchange membrane. For example, Patent Document 1 shows as a proton-conductive polymer, a copolymer obtained through reaction among disodium-3,3'-disulfonate-4,4'-dichlorodiphenylsulfone, 4,4'-dichlorodiphenyl sulfone and 4,4'-biphenol. The proton exchange membrane composed of this copolymer is less likely to suffer from unevenness of sulfonic acid groups as in an example where the sulfonation agent described previously is used and allows facilitated control of an amount of introduction of sulfonic acid group and a polymer molecular weight. For practical use as a fuel cell, however, improvement in various characteristics such as proton conductivity has been desired.

In an attempt to improve characteristics, studies on a segmented block copolymer having sulfonic acid group have been conducted. A segmented block copolymer is expected to achieve improvement in proton conductivity by formation of a hydrophilic domain as a result of phase separation of a hydrophilic segment. For example, Patent Document 2 describes a sulfonated polyether sulfone segmented block copolymer. One method of obtaining this copolymer is sulfonation of a block copolymer constituted of a segment that is readily sulfonated and a segment that is less likely to be sulfonated. In this method, however, sulfonation reaction is locally caused by difference in electron density in benzene rings in each segment, and a polymer structure of each segment has disadvantageously been restricted. A benzene ring in which oxygen atom in ether group or electron-donating group such as alkyl group is bonded is readily sulfonated, however, reverse reaction due to heat or hydrolysis is also likely. Therefore, the copolymer above has been disadvantageous in low stability of sulfonic acid group in the copolymer. In addition, though a separation membrane is exemplified as an application of this copolymer, this document is silent about an application as a proton exchange membrane for a fuel cell.

Patent Document 3 describes use of a copolymer obtained by sulfonating a segmented block copolymer having a specific repeating unit, as a proton exchange membrane for a fuel cell. This copolymer, however, also utilizes difference in reactivity to sulfonation as in the copolymer in Patent Document 2, and therefore a structure of a hydrophobic segment has been restricted.

Another example of a sulfonated segmented block copolymer is a polymer described in Patent Document 4. The polymer in Patent Document 4 is characterized in that a sequence of principal chains in a block transition portion is the same as that in the inside of the block. That feature, however, restricts a polymer structure.

In addition, Patent Document 5 also describes a proton exchange membrane for a fuel cell including a sulfonated polyether sulfone segmented block copolymer.

Use of such a sulfonated block copolymer for a proton exchange membrane for a fuel cell, however, has suffered a disadvantage of insufficient stability at high temperature or in high humidity. As described previously, since sulfonic acid group introduced in a polymer through sulfonation has poor stability, it is disadvantageous in that elimination thereof is likely in a high-temperature and high-humidity environment, which is a condition for use of a fuel cell. In addition, disadvantageously, a hydrophilic domain greatly swells at a high temperature and in high humidity and lowering in

strength is significant. These disadvantages are derived from a structure of each segment in the polymer, however, a structure has been limited in a conventional segmented block copolymer and optimization as a material for a proton exchange membrane for a fuel cell has not yet been achieved.

Patent Document 6 or 7 describes a sulfonated polyether sulfone segmented block copolymer containing halogen in a repeating unit, as a polymer to be used for a proton exchange membrane for a fuel cell. Some of such copolymers have high swelling property and durability thereof in use in a fuel cell may give rise to a problem. Furthermore, many monomers containing halogen element are difficult to synthesize or expensive, and polymer synthesis has been very difficult. In addition, since the polymer contains a large amount of halogen element, disposal thereof also gives rise to a problem because incineration of the polymer leads to generation of a toxic gas.

Patent Document 8 or Non-Patent Document 2 describes a sulfonated polyether sulfone segmented block copolymer structured to have a structure having halogen element such as fluorine at a terminal end of a specific segment, as a polymer to be used for a proton exchange membrane for a fuel cell. In addition, Non-Patent Document 3 reports as a more simplified technique, synthesis of a block copolymer by causing oligomers to react to each other by using an aromatic-based chain extension agent containing halogen element such as fluorine while terminal groups in each segment are made identical without terminal modification or the like. In these copolymers, since a constituent unit containing halogen element is present only in a bonding portion between segments different in type, an amount of halogen in a molecule is advantageously smaller. Depending on a segment structure, in particular, on a structure of a hydrophobic segment substantially not having sulfonic acid group, however, some polymers have high swelling property and durability thereof in use in a fuel cell may give rise to a problem.

We invented so far, as a polymer to be used for a proton exchange membrane for a fuel cell, a sulfonated polyether sulfone segmented block copolymer in which each segment has a specific structure, which is a sulfonated polyether sulfone segmented block copolymer low in swelling property, and filed a patent application (see Patent Document 9). This application discloses a polymer including a benzonitrile structure in a hydrophobic segment. It is difficult, however, to obtain a segment having a long chain length in the polymer described in the aforementioned application and it is particularly difficult to do so in a polymer including a benzonitrile structure.

PRIOR ART DOCUMENTS

PATENT DOCUMENTS

| | |
|---|---|
| Patent Document 1: | United States Patent Application Publication No. 2002/0091225 |
| Patent Document 2: | Japanese Patent Laying-Open No. 63-258930 |
| Patent Document 3: | Japanese Patent Laying-Open No. 2001-250567 |
| Patent Document 4: | Japanese Patent Laying-Open No. 2001-278978 |
| Patent Document 5: | Japanese Patent Laying-Open No. 2003-31232 |
| Patent Document 6: | Japanese Patent Laying-Open No. 2004-190003 |
| Patent Document 7: | Japanese National Patent Publication No. 2007-515513 |
| Patent Document 8: | Japanese Patent Laying-Open No. 2005-126684 |
| Patent Document 9: | Japanese Patent Laying-Open No. 2006-176666 |


NON-PATENT DOCUMENTS

Non-Patent Document 1: F. Lufrano et al., "Sulfonated Polysulfone as Promising Membranes for Polymer Electrolyte Fuel Cells," Journal of AppLied Polymer Science, the United States, John Wiley & Sons, Inc., 2000, No. 77, pp. 1250-1257

Non-Patent Document 2: Hae-Seung Lee, Abhishek Roy, Ozma Lane, Stuart Dunn, and James E. McGrath, "Hydrophilic-hydrophobic multiblock copolymers based on poly(arylene ether sulfone) via low-temperature coupling reactions for proton exchange membrane fuel cells," Polymer, the United States, Elsevier Ltd., 2008, No. 49, pp. 715-723

SUMMARY OF THE INVENTION

PROBLEMS TO BE SOLVED BY THE INVENTION

Based on the circumstances above, a principal object of the present invention is to provide a proton exchange membrane for a fuel cell, which is not only superior in proton conductivity to a proton exchange membrane obtained from an existing polymer but also has lower property of swelling with hot water and has excellent durability, as well as a sulfonic-acid-group-containing segmented block copolymer forming the proton exchange membrane, a simple method of manufacturing the copolymer, and a composition and a molded product of the copolymer, a fuel cell proton exchange membrane electrode assembly, and a fuel cell.

MEANS FOR SOLVING THE PROBLEMS

The present inventors have conducted dedicated studies on a structure of a hydrophilic segment and a hydrophobic segment as well as on binding group between segments. Then, the present inventors have found that a copolymer having a specific structure exhibits excellent proton conductivity and also has excellent durability, and completed the present invention.

Namely, a first invention of the present application is directed to:

(1) A block copolymer having one or more hydrophilic segment and one or more hydrophobic segment in a molecule and having a structure expressed by Chemical Formula 1 below

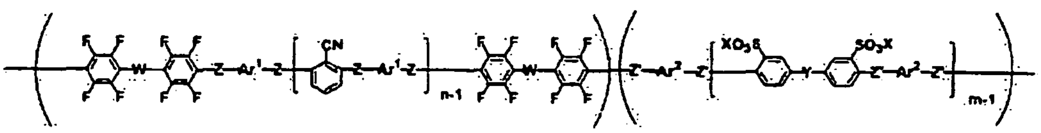

(Chemical Formula 1)

(where X represents H or a univalent cation, Y represents sulfone group or carbonyl group, each of Z and Z' independently represents any of O and S atoms, W represents one or more group selected from the group consisting of direct bond between benzenes, sulfone group and carbonyl group, each of $Ar^1$ and $Ar^2$ independently represents divalent aromatic group, and each of n and m independently represents an integer from 2 to 100), characterized in that logarithmic viscosity measured at 30°C, of a 0.5 g/dL solution containing N-methyl-2-pyrrolidone as a solvent is in a range from 0.5 to 5.0 dL/g.

(2) The block copolymer containing sulfonic acid group described in (1), characterized in that $Ar^2$ has a structure represented by a structure expressed by Chemical Formula 2 below

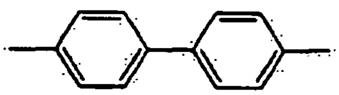

(Chemical Formula 2).

(3) The block copolymer containing sulfonic acid group described in (1), characterized in that $Ar^1$ has a structure represented by a structure expressed by Chemical Formula 2 above.

(4) The block copolymer containing sulfonic acid group described in (1), characterized in that both of $Ar^1$ and $Ar^2$ have a structure represented by a structure expressed by Chemical Formula 2 above.

(5) The block copolymer containing sulfonic acid group described in (1) to (4), characterized in that at least any of Z and Z' represents O atom.

(6) The block copolymer containing sulfonic acid group described in (1) to (4), characterized in that both of Z and Z' represent O atom.

(7) The block copolymer containing sulfonic acid group described in (1) to (6), characterized in that W represents direct bond between benzene rings.

(8) The sulfonic-acid-group-containing segmented block copolymer described in (1) to (7), characterized in that n is in a range from 10 to 70.

(9) The sulfonic-acid-group-containing segmented block copolymer described in (8), characterized in that m is 3 or greater and less than 10.
(10) The sulfonic-acid-group-containing segmented block copolymer described in (9), characterized in that m/n is in a range from 0.4 to 1.0.
(11) The sulfonic-acid-group-containing segmented block copolymer described in (8), characterized in that m is 10 or greater and less than 70.
(12) The sulfonic-acid-group-containing segmented block copolymer described in (11), characterized in that m/n is in a range from 0.4 to 1.5.

A second invention of the present application is directed to:

(13) A method of synthesizing a block copolymer by causing a hydrophilic oligomer, a hydrophobic oligomer and a chain extension agent to react to one another, characterized in that the hydrophobic oligomer contains in a molecule, a structure expressed by Chemical Formula 7 below

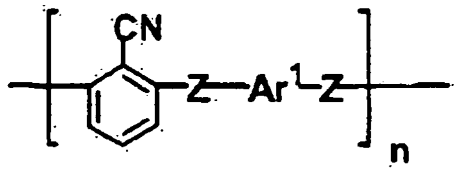

(Chemical Formula 7)

(where Z independently represents any of O and S atoms, $Ar^1$ represents divalent aromatic group, and n represents an integer from 2 to 100), and the hydrophilic oligomer contains in a molecule, a structure expressed by Chemical Formula 8 below

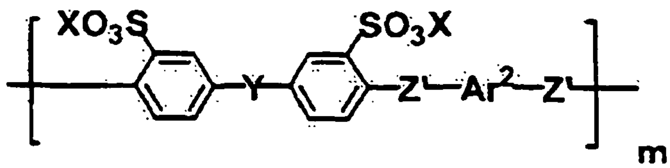

(Chemical Formula 8)

(where X represents H or a univalent cation, Y represents sulfonyl group or carbonyl group, Z' represents any of O and S atoms, $Ar^2$ represents divalent aromatic group, and m represents an integer from 2 to 100).
(14) The method of synthesizing a block copolymer described in (13), characterized in that each of terminal ends of the hydrophilic oligomer and the hydrophobic oligomer is OH group.
(15) The method of synthesizing a block copolymer described in (13), characterized in that each of terminal ends of the hydrophilic oligomer and the hydrophobic oligomer is SH group.
(16) The method of synthesizing a block copolymer described in (13) to (15), characterized in that halogen of an aromatic-based chain extension agent is fluorine.
(17) The method of synthesizing a block copolymer described in (16), characterized in that the aromatic-based chain extension agent is a perfluorochemical (that may contain group selected from the group consisting of cyano group, sulfonyl group, sulfinyl group, and carbonyl group).
(18) The method of synthesizing a block copolymer described in (17), characterized in that the chain extension agent is any of hexafluorobenzene, decafluorobiphenyl, decafluorobenzophenone, decafluorodiphenyl sulfone, and pentafluorobenzonitrile, or a mixture thereof.
(19) The method of synthesizing a block copolymer described in (13) to (18), characterized by being synthesized in a reaction solution of which solid content concentration is 1 to 25 weight %.
(20) The method of synthesizing a block copolymer described in (13) to (19), characterized in that a reaction temperature is in a range from 50 to 160°C.
(21) The method of synthesizing a block copolymer described in (13) to (20), characterized in that at least (A) a hydrophilic oligomer solution, (B) a hydrophobic oligomer solution and (C) an aromatic-based chain extension agent having two or more halogens in a molecule are mixed as essential ingredients for reaction.

(22) The method of synthesizing a block copolymer described in (21), characterized in that a reaction solution obtained as a result of synthesis reaction of the hydrophilic oligomer is employed as the hydrophilic oligomer solution and a reaction solution obtained as a result of synthesis reaction of the hydrophobic oligomer is employed as the hydrophobic oligomer solution.
(23) A molded product made of the block copolymer described in (1) to (12) or a sulfonic-acid-group-containing segmented block copolymer obtained with the synthesizing method described in (13) to (22).
(24) A proton exchange membrane for a fuel cell made of the block copolymer described in (1) to (12) or a sulfonic-acid-group-containing segmented block copolymer obtained with the synthesizing method described in (13) to (22).
(25) A sulfonic-acid-group-containing segmented block copolymer composition composed of the block copolymer described in (1) to (12) or a sulfonic-acid-group-containing segmented block copolymer obtained with the synthesizing method described in (13) to (22).
(26) A molded product obtained from the sulfonic-acid-group-containing segmented block copolymer composition described in (25).
(27) A proton exchange membrane for a fuel cell obtained from the sulfonic-acid-group-containing segmented block copolymer composition described in (25).
(28) The proton exchange membrane for a fuel cell described in (25), characterized by including a fibrous substance.
(29) A fuel cell proton exchange membrane electrode assembly including the proton exchange membrane for a fuel cell described in any of (24), (27) and (28).
(30) A fuel cell including the fuel cell proton exchange membrane electrode assembly described in (29).

## EFFECTS OF THE INVENTION

The sulfonic-acid-group-containing block copolymer according to the first invention of the present application and the sulfonic-acid-group-containing block copolymer obtained with the method of manufacturing a sulfonic-acid-group-containing block copolymer according to the second invention of the present application are superior to a sulfonated block copolymer out of the scope of the present invention, in any of property of swelling with water at a high temperature, durability and proton conductivity. In addition, since a membrane composed of the sulfonic-acid-group-containing block copolymer according to the present invention has excellent methanol inhibition property, it is suitable not only for a fuel cell using hydrogen as fuel but also for a proton exchange membrane for a direct methanol fuel cell.

## BRIEF DESCRIPTION OF THE DRAWINGS

Fig. 1 shows $^1$H-NMR spectrum of a sulfonic-acid-group-containing segmented block copolymer obtained in Example 1.
Fig. 2 shows $^{13}$C-NMR spectrum of the sulfonic-acid-group-containing segmented block copolymer obtained in Example 1.
Fig. 3 shows $^1$H-NMR spectrum of a sulfonic-acid-group-containing segmented block copolymer obtained in Example 2.
Fig. 4 shows $^{13}$C-NMR spectrum of the sulfonic-acid-group-containing segmented block copolymer obtained in Example 2.
Fig. 5 shows $^1$H-NMR spectrum of a sulfonic-acid-group-containing segmented block copolymer obtained in Example 17.
Fig. 6 shows $^{13}$C-NMR spectrum of the sulfonic-acid-group-containing segmented block copolymer obtained in Example 17.

## MODES FOR CARRYING OUT THE INVENTION

The first invention of the present application is directed to a sulfonic-acid-group-containing segmented block copolymer having a specific polymer structure and its applications, and the present invention will be described hereinafter in further detail with reference to embodiments.
The sulfonic-acid-group-containing segmented block copolymer according to the first invention of the present application is a block copolymer including one or more hydrophilic segment and one or more hydrophobic segment in a molecule and having a structure expressed by Chemical Formula 1 below

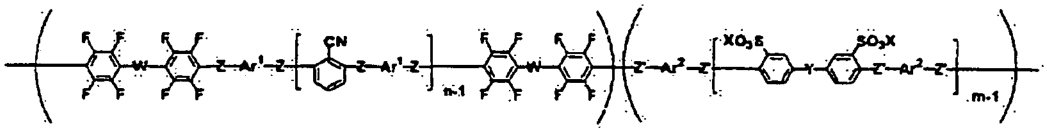

(Chemical Formula 1)

(where X represents H or a univalent cation, Y represents sulfone group or carbonyl group, each of Z and Z' independently represents any of O and S atoms, W represents one or more group selected from the group consisting of direct bond between benzenes, sulfone group and carbonyl group, each of $Ar^1$ and $Ar^2$ independently represents divalent aromatic group, and each of n and m independently represents an integer from 2 to 100), characterized in that logarithmic viscosity measured at 30°C, of a 0.5 g/dL solution containing N-methyl-2-pyrrolidone as a solvent, is in a range from 0.5 to 5.0 dL/g.

In use as a proton exchange membrane, X being H is preferred because proton conductivity is high. In working and molding a copolymer, X being a univalent ion of metal such as Na, K or Li is preferred, because stability of a copolymer is enhanced. Alternatively, X may be an organic cation such as monoamine. Y being sulfone group is preferred, because dissolubility of a copolymer in a solvent tends to be higher. $Ar^1$ and $Ar^2$ should only independently be any known divalent group mainly composed of aromatic-based group, and preferred examples include divalent aromatic group selected from the group expressed by Chemical Formulae 3A to 3N below

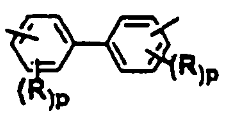

Chemical Formula 3A

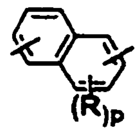

Chemical Formula 3B

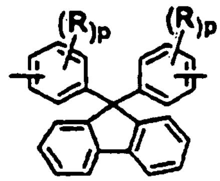

Chemical Formula 3C

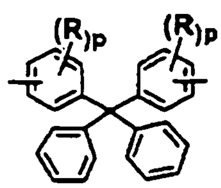

Chemical Formula 3D

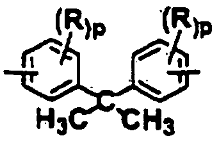

Chemical Formula 3E

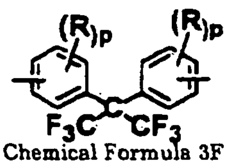

Chemical Formula 3F

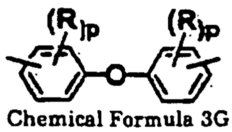

Chemical Formula 3G

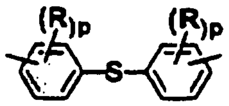

Chemical Formula 3H

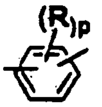

Chemical Formula 3I

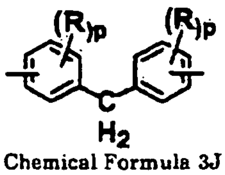

Chemical Formula 3J

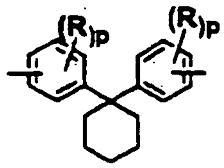

Chemical Formula 3K

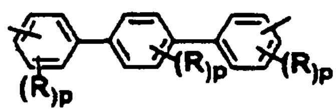

Chemical Formula 3L

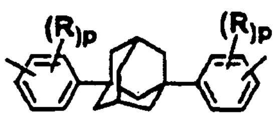

Chemical Formula 3M

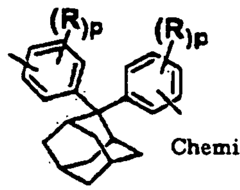

Chemical Formula 3N

(where R represents methyl group and p represents an integer from 0 to 2).

Regarding a copolymer with p being 1 or 2, in some cases, it is difficult to obtain a copolymer having a high molecular weight, and hence p is preferably 0. $Ar^1$ and $Ar^2$ independently more preferably have a structure expressed by Chemical Formula 3A, 3C, 3E, 3F, 3K, 3M, 3N among Chemical Formulae 3A to 3N above, further preferably have a structure expressed by Chemical Formula 3A', 3F' shown below, and still preferably have a structure expressed by Chemical Formula 3A'. In addition, both of $Ar^1$ and $Ar^2$ most preferably have a structure expressed by Chemical Formula 3A'. Moreover, each of $Ar^1$ and $Ar^2$ may independently have two or more types of structures selected from the structures expressed by Chemical Formulae 3A to 3N above. In that case, for exhibiting further superior characteristics, $Ar^1$ and

$Ar^2$ preferably have at least any structure of Chemical Formulae 3A', 3F' and 3M' below and more preferably have a structure of Chemical Formula 3A' or 3M' below. A structure of Chemical Formula 3A' is preferred because excellent resistance to swelling and durability are achieved. A structure of Chemical Formula 3M' is preferred because excellent durability is achieved.

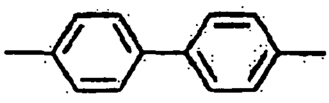
(Chemical Formula 3A')

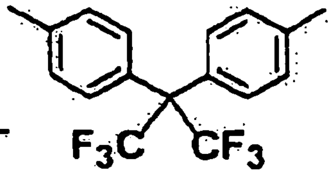
(Chemical Formula 3F')

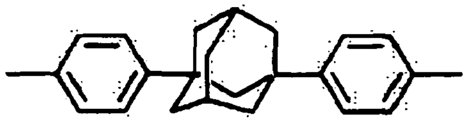
(Chemical Formula 3M')

At least any of Z and Z' is preferably an O atom, from a point of view of availability of a raw material or ease in synthesis. More preferably, both of Z and Z' are O atoms. It is noted that S atom may improve resistance to oxidation.

W being direct bond between benzene rings is preferred because characteristics or durability of a membrane can be improved. W being sulfone group is advantageous in that side reaction at the time of synthesis can be suppressed.

N in a range from 10 to 70 is preferred because mechanical characteristics of a membrane are improved. If n is less than 10, swelling property may be too high or durability may be lowered. If n exceeds 70, control of a molecular weight becomes difficult and synthesis of a copolymer having a designed structure may become difficult. N in a range from 20 to 60 is more preferred.

M not smaller than 3 and less than 10 is preferred, because a membrane suitable for a proton exchange membrane for a direct methanol fuel cell using methanol as fuel can be obtained. M in a range from 3 to 8 is more preferred. M less than 3 is not preferred because characteristics similar to those of a membrane composed of a random copolymer can only be obtained. If m is 10 or greater, methanol permeability may be too great. For a copolymer for obtaining a membrane suitable for a proton exchange membrane for a direct methanol fuel cell, m/n is preferably in a range from 0.4 to 1.0. M/n smaller than 0.4 may lead to significant lowering in proton conductivity of a membrane. M/n not smaller than 1.0 may lead to too great methanol permeability. More preferably, m/n is in a range from 0.5 to 0.8.

M not smaller than 10 and less than 70 is preferred, because a membrane suitable for a proton exchange membrane for a fuel cell using hydrogen as fuel can be obtained. M is more preferably in a range from 15 to 55. Even if m is less than 10, a copolymer to be used for a proton exchange membrane for a fuel cell using hydrogen as fuel can be synthesized, however, sufficient improvement in characteristics may not be expected. If m is 70 or greater, it may become difficult to synthesize a copolymer to be used for a proton exchange membrane for a fuel cell using hydrogen as fuel. If synthesis can be carried out, however, m equal to or greater than 70 does not give rise to a problem. For a copolymer to be used for a proton exchange membrane for a fuel cell using hydrogen as fuel, m/n is preferably in a range from 0.4 to 1.5. M/n smaller than 0.4 may lead to significant lowering in output from a fuel cell. M/n equal to or greater than 1.5 may lead to too great swelling of a membrane. More preferably, m/n is in a range from 0.6 to 1.3.

The sulfonic-acid-group-containing segmented block copolymer according to the first invention of the present application can be synthesized with any known method. It can also be synthesized by binding oligomers synthesized in advance and serving as hydrophilic and hydrophobic segments by using a coupling agent. An example thereof includes a method of coupling an oligomer at hydroxyl group terminal end by using a perfluoro aromatic compound such as decafluorobiphenyl. The sulfonic-acid-group-containing segmented block copolymer can be synthesized also by modifying any terminal group of oligomer synthesized in advance and serving as hydrophilic and hydrophobic segments with highly reactive group and causing another oligomer to react thereto. Alternatively, in the reaction above, an oligomer may be used after it is purified and isolated after synthesis, it may be used as a synthesized solution as it is, or an oligomer purified and isolated may be used as a solution. Among these, a method of modifying any terminal group of oligomer synthesized in advance and serving as hydrophilic and hydrophobic segments with highly reactive group and causing another oligomer to react thereto is preferred. In that case, the modified oligomer and another oligomer that are equimolar preferably react to each other. In order to prevent gelation due to side reaction during reaction, however, the modified oligomer is preferably slightly excessive. To which extent the oligomer should be excessive is different depending on a molecular weight of an oligomer or a molecular weight of a target polymer, however, a range from 0. 1 to 50 mol % is preferred and a range from 0.5 to 10 mol % is more preferred. In addition, a terminal end of a hydrophobic segment is preferably modified with highly reactive group. Depending on a structure of a hydrophilic segment, modification reaction may not proceed successfully.

One of methods of synthesizing a sulfonic-acid-group-containing segmented block copolymer according to the first invention of the present application will be described hereinafter, however, the scope of the present invention is not limited thereto.

<Synthesis of Hydrophilic Oligomer>

A hydrophilic oligomer in the sulfonic-acid-group-containing segmented block copolymer according to the first invention of the present application can be synthesized by causing a sulfonated monomer expressed by Chemical Formula 4 below to react to various bisphenols or various bisthiophenols.

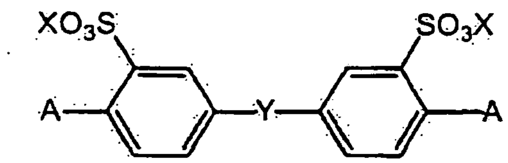

(Chemical Formula 4)

In Chemical Formula 4, X represents H or a univalent cation, Y represents sulfone group or carbonyl group, and A represents halogen element. X is preferably Na or K, and A is preferably F or Cl. In addition, preferably, various bisphenols or various bisthiophenols are provided excessively, so that terminal group of an oligomer is OH group or SH group. A degree of polymerization of an oligomer can be adjusted based on a mole fraction between the monomer expressed by Chemical Formula 4 and various bisphenols or various bisthiophenols.

Though reaction between the monomer expressed by Chemical Formula 4 and various bisphenols or various bisthiophenols can be caused with any known method, reaction is preferably caused as nucleophilic aromatic substitution in the presence of a basic compound. Reaction can be caused in a range from 0 to 350°C and preferably in a range from 50 to 250°C. If a temperature is lower than 0°C, reaction does not tend to proceed sufficiently. If a temperature is higher than 350°C, decomposition of a polymer also tends to start. Though reaction can also be caused in a nonsolvent, reaction is caused preferably in a solvent. Examples of a solvent that can be used include N-methyl-2-pyrrolidone, N, N-dimethylacetamide, N,N-dimethylformamide, dimethylsulfoxide, diphenylsulfone, and sulfolane, however, the solvent is not limited thereto and any solvent that can be used as a stable solvent in nucleophilic aromatic substitution may be employed. These organic solvents may be used alone or as a mixture of two or more types. Examples of a basic compound include sodium hydroxide, potassium hydroxide, sodium carbonate, potassium carbonate, sodium hydrogencarbonate, and potassium hydrogencarbonate, however, any basic compound that can cause aromatic bisphenols or aromatic bisthiophenols to have an active phenoxide structure or thiophenoxide structure may be used, without limited thereto. If X is potassium, use of potassium salt such as potassium carbonate is more preferred, and if X is sodium, use of sodium salt such as sodium carbonate is more preferred, because calculation of a molecular weight of an oligomer is facilitated. Water generated as a by-product can be removed by distillation out of a system together with an azeotropic solvent such as toluene, by using a water-absorbing material such as a molecular sieve, or by distillation together with a polymerization solvent. If nucleophilic aromatic substitution is caused in a solvent, a monomer is preferably prepared such that resultant polymer concentration is 5 to 50 weight % and more preferably in a range from 20 to 40 weight %. If the concentration is lower than 5 weight %, the degree of polymerization is less likely to increase. On the other hand, if the concentration is higher than 50 weight %, viscosity of a system of reaction becomes too high and post-treatment of a reaction product tends to be difficult. A polymerization solution may be used as it is for synthesis of a block copolymer, or it may be used as a solution after removal of such a by-product as inorganic salt, or it may be used after isolation and purification of a copolymer. Preferably, a method of isolating and purifying a copolymer is employed.

Any known method such as filtration, decantation after centrifugal sedimentation, dialysis through dissolution in water, and salting out through dissolution in water can be used as a method for removing inorganic salt which is a by-product from a solution of a hydrophilic oligomer, and filtration is preferred from a point of view of manufacturing efficiency and yield. If.salt is removed by filtration or centrifugal sedimentation, a copolymer can be recovered by dropping a solution into a nonsolvent of a hydrophilic segment. Alternatively, in the case of dialysis, the copolymer can be recovered by evaporation to dryness, and in the case of salting out, the copolymer can be recovered by filtration. An isolated hydrophilic oligomer is preferably purified by washing with a nonsolvent, reprecipitation, dialysis, or the like, and washing is preferred from a point of view of operation efficiency and purification efficiency. An organic solvent used in synthesis or purification is preferably removed as much as possible. The organic solvent is preferably removed by drying, and drying at a reduced pressure at a temperature in a range from 10 to 150°C is more preferred.

A nonsolvent of a hydrophilic oligomer can be selected from any organic solvents, however, it is preferably miscible with an aprotic polar solvent used for reaction. Specifically, examples of a nonsolvent include ketone-based solvents such as acetone, methyl ethyl ketone, diethyl ketone, dibutyl ketone, dipropyl ketone, diisopropyl ketone, and cyclohexanone, and alcohol-based solvents such as methanol, ethanol, propanol, isopropanol, and butanol, however, the nonsolvent is not limited thereto and other suitable nonsolvents can be employed.

<Synthesis of Hydrophobic Oligomer>

The hydrophobic oligomer in the sulfonic-acid-group-containing segmented block copolymer according to the first invention of the present application can be synthesized by causing a monomer expressed by Chemical Formula 5A or 5B below to react to various bisphenols or various bisthiophenols and thereafter causing a compound expressed by Chemical Formula 6A, 6B, 6C to react thereto.

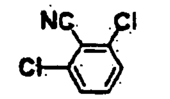

(Chemical Formula 5A)

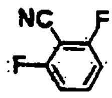

(Chemical Formula 5B)

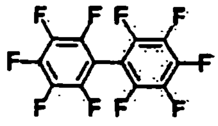

(Chemical Formula 6A)

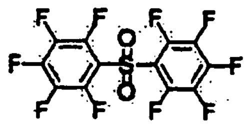

(Chemical Formula 6B)

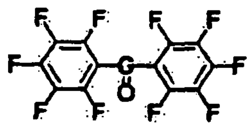

(Chemical Formula 6C)

Preferably, various bisphenols or various bisthiophenols are provided excessively, so that terminal group of an oligomer is OH group or SH group. A degree of polymerization of an oligomer can be adjusted based on a mole fraction between the monomer expressed by Chemical Formula 5A or 5B and various bisphenols or various bisthiophenols.

Though reaction between the monomer expressed by Chemical Formula 5A or 5B and various bisphenols or various bisthiophenols can be caused with any known method, reaction is preferably caused as nucleophilic aromatic substitution in the presence of a basic compound. Reaction can be caused in a range from 0 to 350°C and preferably in a range from 50 to 250°C. If a temperature is lower than 0°C, reaction does not tend to proceed sufficiently. If a temperature is higher than 350°C, decomposition of a polymer also tends to start. Though reaction can also be caused in a nonsolvent, reaction is caused preferably in a solvent. Examples of a solvent that can be used include aprotic polar solvents such as N-methyl-2-pyrrolidone, N,N-dimethylacetamide, N,N-dimethylformamide, dimethylsulfoxide, diphenylsulfone, and sulfolane, however, the solvent is not limited thereto and any solvent that can be used as a stable solvent in nucleophilic aromatic substitution may be employed. These organic solvents may be used alone or as a mixture of two or more types. Examples of a basic compound include sodium hydroxide, potassium hydroxide, sodium carbonate, potassium carbonate, sodium hydrogencarbonate, and potassium hydrogencarbonate, however, any basic compound that can cause aromatic bisphenols or aromatic bisthiophenols to have an active phenoxide structure or thiophenoxide structure may be used, without limited thereto. Water generated as a by-product can be removed by distillation out of a system together with an azeotropic solvent such as toluene, by using a water-absorbing material such as a molecular sieve, or by distillation together with a polymerization solvent. If nucleophilic aromatic substitution is caused in a solvent, a monomer is preferably prepared such that resultant polymer concentration is 1 to 20 weight % and more preferably in a range from 5 to 15 weight %. If the concentration is lower than 1 weight %, the degree of polymerization is less likely to increase. On the other hand, if the concentration is higher than 20 weight %, precipitation may occur depending on a polymer structure and reaction may stop.

A monomer expressed by Chemical Formula 5A or 5B is caused to react to various bisphenols or various bisthiophenols, and thereafter a compound expressed by Chemical Formula 6A or 6B above is caused to react to terminal group derived from various bisphenols or various bisthiophenols. Reaction may be caused after a reaction product obtained from the monomer expressed by Chemical Formula 5A or 5B and various bisphenols or various bisthiophenols is once isolated, or a reaction solution may be used as it is. From a point of view of simplicity, however, a reaction solution is preferably used as it is. Here, inorganic salt or the like resulted as a by-product through reaction may be removed by decantation or filtration.

If the compound expressed by Chemical Formula 6A or 6B above is caused to react to terminal group derived from various bisphenols or various bisthiophenols, reaction is preferably caused while the compound expressed by Chemical Formula 6A or 6B above is provided excessively. More preferably, reaction is preferably caused by gradually adding a reaction product obtained from the monomer expressed by Chemical Formula 5A or 5B and various bisphenols or various bisthiophenols to a solution containing the excessive compound expressed by Chemical Formula 6A or 6B above. If a large amount of reaction product is added at once or the compound expressed by Chemical Formula 6A or 6B above is insufficient, the reaction solution may be gelated. Any solvent dissolving each component may be employed as the solvent for use in reaction, and preferred examples thereof include aprotic polar solvents such as N-methyl-2-pyrrolidone, N,N-dimethylacetamide, N,N-dimethylformamide, dimethylsulfoxide, diphenylsulfone, and sulfolane, however, the solvent is not limited thereto. If the reaction product obtained from various bisphenols or various bisthiophenols comes in contact with carbon dioxide in air, a structure of its terminal group changes from a phenoxide structure or a thiophenoxide structure to a phenol structure or a thiophenol structure and reactivity lowers. Therefore, it is preferred to avoid contact with air. If isolation is carried out, it is preferred to add potassium carbonate, sodium carbonate or the like 1 to 5 time(s) by mole as much as phenol or thiophenol terminal end. A reaction temperature is set preferably in a range from 50 to 150°C and more preferably in a range from 70 to 130°C.

Any known method such as dropping of an oligomer into a nonsolvent and washing can be used as a method of removing inorganic salt which is a by-product or the excessive compound expressed by Chemical Formula 6A or 6B from the solution of the hydrophobic oligomer. Water or any organic solvent can be selected as a nonsolvent of the oligomer. Water is preferably used for removing inorganic salt. An organic solvent is preferably used for removing the compound expressed by Chemical Formula 6A or 6B. Though washing with both of water and an organic solvent is preferred, any of water and an organic solvent may be dropped first. An organic solvent used in synthesis or purification is preferably removed as much as possible. The organic solvent is preferably removed by drying, and drying at a reduced pressure at a temperature in a range from 10 to 150°C is more preferred.

An organic solvent, which is a nonsolvent, can be selected from any organic solvents, however, it is preferably miscible with an aprotic polar solvent used for reaction. Specifically, examples of an organic solvent include ketone-based solvents such as acetone, methyl ethyl ketone, diethyl ketone, dibutyl ketone, dipropyl ketone, diisopropyl ketone, and cyclohexanone, and alcohol-based solvents such as methanol, ethanol, propanol, isopropanol, and butanol, however, the organic solvent is not limited thereto and other suitable organic solvents can be employed.

<Synthesis of Segmented Block Copolymer>

A segmented block copolymer can be obtained by causing the hydrophobic oligomer and the hydrophilic oligomer synthesized as above to react to each other. One or more type of oligomer selected from the group consisting of oligomers independently different in a structure, a molecular weight, molecular weight distribution, and terminal group can be used as the hydrophobic oligomer and the hydrophilic oligomer. Though a molecular weight of each oligomer can be determined with any known method, a number-average molecular weight is preferably determined by quantitating terminal group. Any known method such as titration, colorimetry, labeling, NMR, and elementary analysis can be used for quantitating terminal group, however, NMR is preferred because it is simple and excellent in accuracy and $^1$H-NMR is more preferred. Though the hydrophobic oligomer according to the present invention is characterized by having a benzonitrile structure, dissolubility thereof in a solvent is poor because of its own structure. Therefore, if the hydrophobic oligomer is not dissolved in an appropriate deuterated solvent in NMR measurement, measurement is preferably conducted by adding a deuterated solvent such as deuterated dimethyl sulfoxide to a solution dissolved in a common solvent dissolving a hydrophobic oligomer, such as N-methyl-2-pyrrolidone.

Sulfonic acid group in the hydrophilic oligomer is preferably alkali metal salt, and more preferably Na or K. If a plurality of types of ions form sulfonic acid group and salt, an accurate molecular weight can be determined by analyzing composition in advance through elementary analysis. Treatment with excessive acid followed by treatment with metal salt or alkali metal hydroxide may be performed. The hydrophilic oligomer is preferably dried immediately before synthesis of a block copolymer so as to remove adsorbed moisture. Drying should only be performed by heating to 100°C or higher, however, drying under a reduced pressure is further preferred.

A mole fraction between the hydrophilic oligomer and the hydrophobic oligomer is preferably in a range from 0.9 to 1.1 and more preferably in a range from 0.95 to 1.05. If the hydrophilic oligomer and the hydrophobic oligomer are equimolar, the degree of polymerization increases, however, too high a degree of polymerization may adversely affect subsequent handling, and hence adjustment based on a mole fraction as appropriate is preferably made. In addition, an oligomer having perfluorophenyl group at a terminal end is preferably provided excessive. If the number of moles of an oligomer having perfluorophenyl group at a terminal end is extremely small, gelation reaction may occur, which is not preferred.

Reaction between the hydrophilic oligomer and the hydrophobic oligomer is preferably caused in a range from 50 to 150°C, more preferably in a range from 70 to 130°C, in an aprotic polar solvent such as N-methyl-2-pyrrolidone, N,N-dimethylacetamide, N,N-dimethylformamide, dimethylsulfoxide, diphenylsulfone, and sulfolane, in the presence of a basic compound such as potassium carbonate or sodium carbonate 1 to 5 time(s) by mole as much as phenol or thiophenol terminal end of the oligomer. The degree of polymerization may be adjusted based on a mole fraction between the oligomers as described previously, or polymerization may be short-stopped by cooling, short-stop at the terminal end or the like, by determining an end point based on viscosity or the like of the reaction solution. Reaction is preferably caused in an inert gas current such as nitrogen. Though solid content concentration in the reaction solution should only be in a range from 5 to 50 weight %, it is preferably in a range from 5 to 20 weight %, because poor reactivity is caused if the hydrophobic oligomer is not dissolved. Whether the hydrophobic oligomer has been dissolved or not can be determined by visually observing whether the solution is transparent or cloudy.

Any known method can be used for isolation and purification of a copolymer from a reaction solution. For example, a copolymer can be solidified by dropping a reaction solution into a nonsolvent of the copolymer such as water, acetone or methanol. Among these, water is preferred because of its ease in handing and ability to remove inorganic salt. In addition, in order to remove an oligomer component or a highly hydrophilic component, washing with hot water from 60°C to 100°C, a solvent mixture of water and an organic solvent (ketone-based solvents such as acetone, alcohol-based solvents such as methanol, ethanol and isopropanol), or the like is preferred.

Though an exemplary preferred structure of the segmented block copolymer according to the first invention of the present application will be shown below, the scope of the present invention is not limited thereto. In the formula below, X represents H or a univalent cation and each of n and m independently represents an integer from 2 to 100.

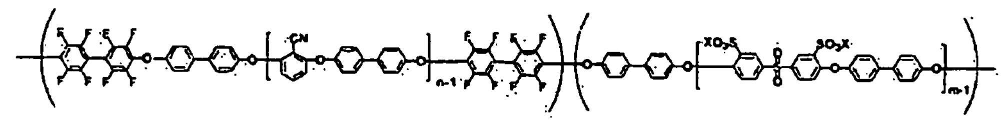

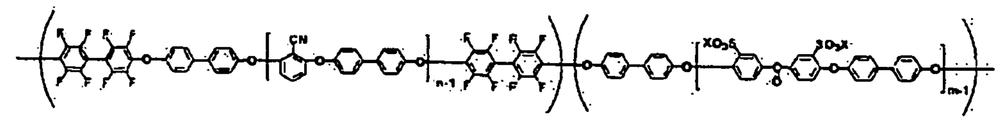

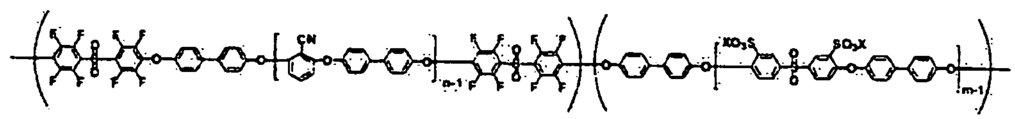

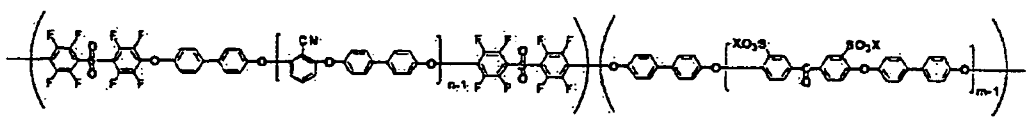

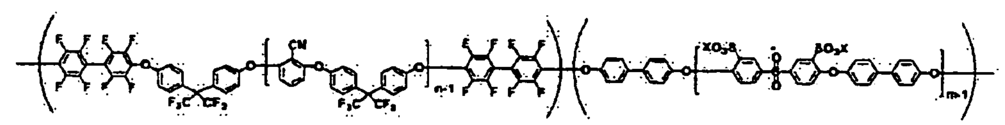

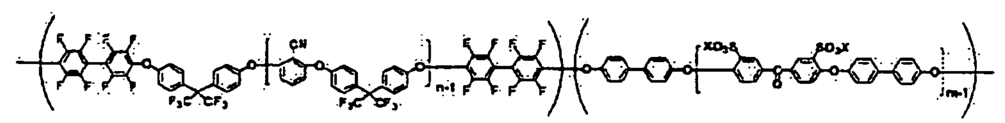

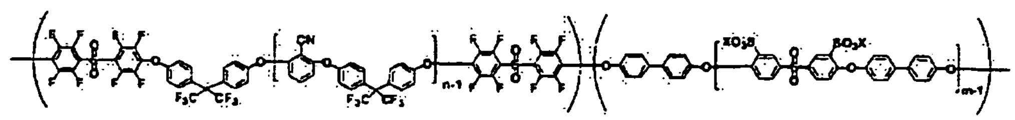

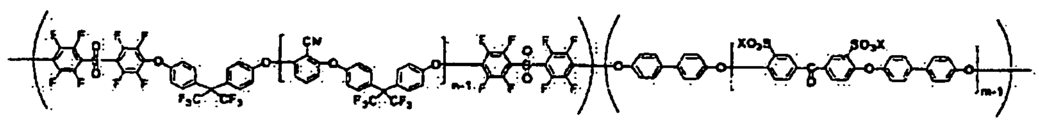

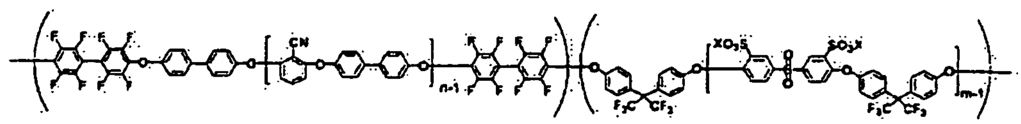

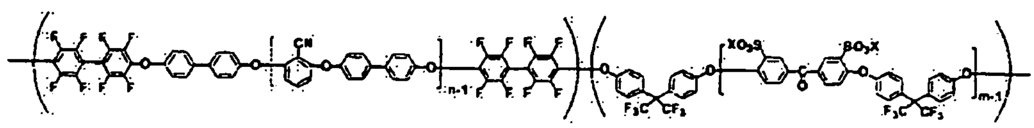

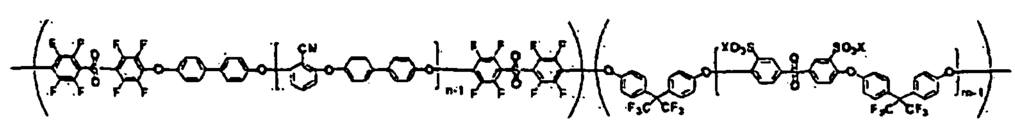

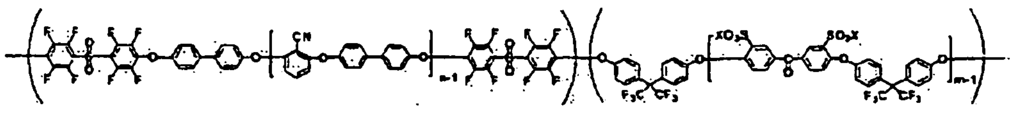

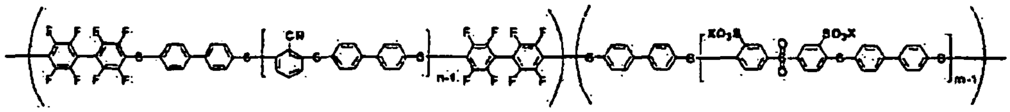

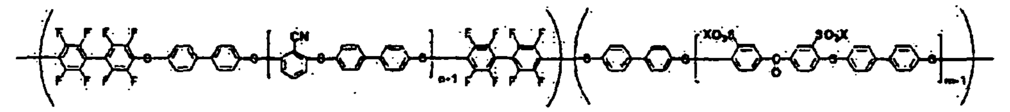

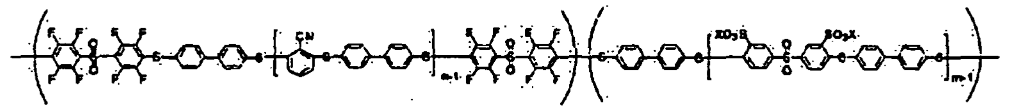

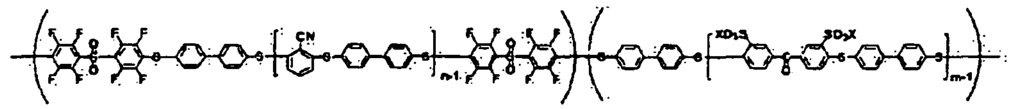

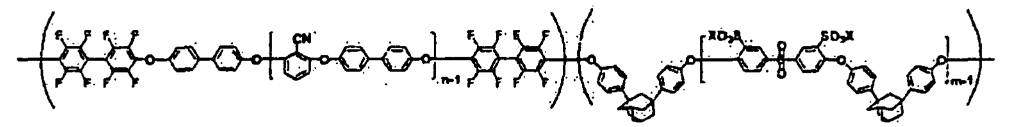

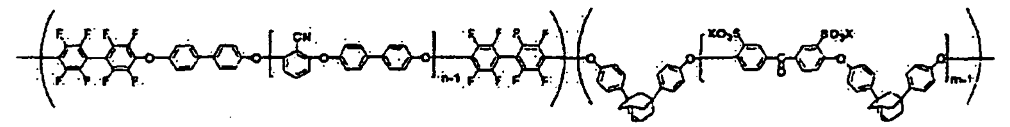

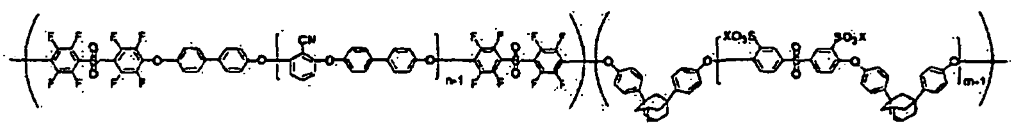

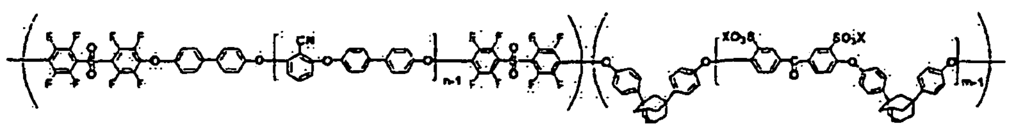

The second invention of the present application is directed to a method of manufacturing a sulfonic-acid-group-containing segmented block copolymer having a specific polymer structure and applications of the sulfonic-acid-group-containing segmented block copolymer, and the present invention will be described in further detail hereinafter with reference to embodiments.

The sulfonic-acid-group-containing segmented block copolymer in the second invention of the present application is obtained with the following manufacturing method:

A method of synthesizing a block copolymer by causing a hydrophilic oligomer, a hydrophobic oligomer and a chain extension agent to react to one another, characterized in that the hydrophobic oligomer contains in a molecule, a structure expressed by Chemical Formula 7 below

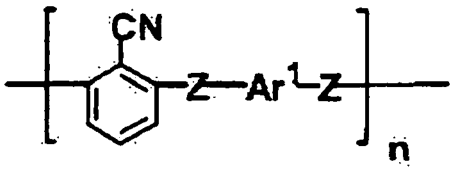

(Chemical Formula 7)

(where Z independently represents any of O and S atoms, $Ar^1$ represents divalent aromatic group, and n represents an integer from 2 to 100), and the hydrophilic oligomer contains in a molecule, a structure expressed by Chemical Formula 8 below

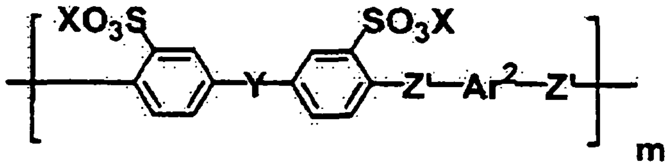

(Chemical Formula 8)

(where X represents H or a univalent cation, Y represents sulfonyl group or carbonyl group, Z' represents any of O and S atoms, $Ar^2$ represents divalent aromatic group, and m represents an integer from 2 to 100).

In use as a proton exchange membrane, X being H is preferred because proton conductivity is high. In working and molding a copolymer, X being a univalent ion of metal such as Na, K or Li is preferred, because stability of a copolymer is enhanced. Alternatively, X may be an organic cation such as monoamine. Y being sulfonyl group is preferred, because dissolubility of a copolymer in a solvent tends to be higher. $Ar^1$ and $Ar^2$ should only independently be any known divalent group mainly composed of aromatic-based group, and preferred examples include divalent aromatic group selected from the group expressed by Chemical Formulae 3A to 3N below

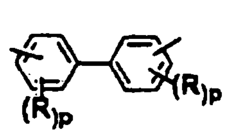

Chemical Formula 3A

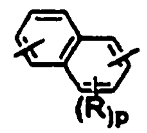

Chemical Formula 3B

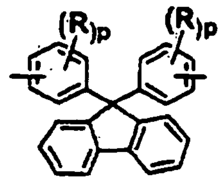

Chemical Formula 3C

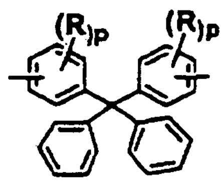

Chemical Formula 3D

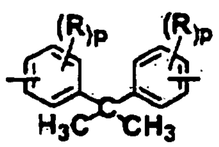

Chemical Formula 3E

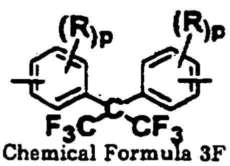

Chemical Formula 3F

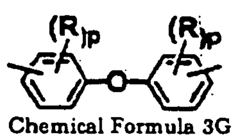

Chemical Formula 3G

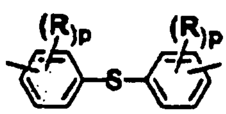

Chemical Formula 3H

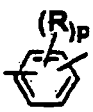

Chemical Formula 3I

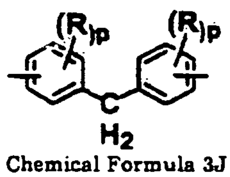

Chemical Formula 3J

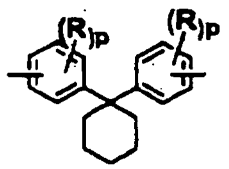

Chemical Formula 3K

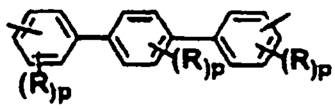

Chemical Formula 3L

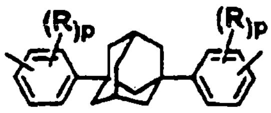

Chemical Formula 3M

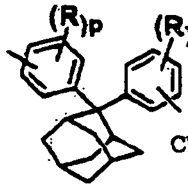

Chemical Formula 3N

(where R represents methyl group and p represents an integer from 0 to 2).

Regarding a copolymer with p being 1 or 2, in some cases, it is difficult to obtain a copolymer having a high molecular weight, and hence p is preferably 0. $Ar^1$ and $Ar^2$ more preferably independently have a structure expressed by Chemical Formula 3A, 3C, 3E, 3F, 3K, 3M, 3N among Chemical Formulae 3A to 3N above, further preferably have a structure expressed by Chemical Formula 3A', 3F' shown below, and still preferably have a structure expressed by Chemical Formula 3A'. In addition, both of $Ar^1$ and $Ar^2$ most preferably have a structure expressed by Chemical Formula 3A'. Moreover, both of $Ar^1$ and $Ar^2$ may independently have two or more types of structures selected from the structures expressed by Chemical Formulae 3A to 3N above. In that case, $Ar^1$ and $Ar^2$ preferably have at least a structure expressed by Chemical Formula 3A' below.

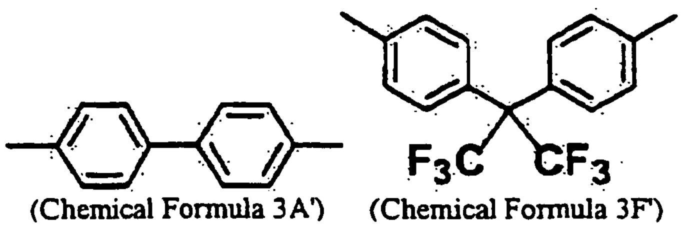

(Chemical Formula 3A') (Chemical Formula 3F')

At least any of Z and Z' is preferably an O atom, from a point of view of availability of a raw material or ease in synthesis. More preferably, both of Z and Z' are O atoms. It is noted that S atom may improve resistance to oxidation.

N in a range from 20 to 70 is preferred because mechanical characteristics of a membrane are improved. If n is less than 20, swelling property may be too high or durability may be lowered. If n exceeds 70, control of a molecular weight becomes difficult and synthesis of a copolymer having a designed structure may become difficult. N in a range from 30 to 60 is more preferred.

M not smaller than 3 and less than 25 is preferred, because a membrane suitable for a proton exchange membrane for a direct methanol fuel cell using methanol as fuel can be obtained. M in a range from 3 to 20 is more preferred. M less than 3 is not preferred, because characteristics similar to those of a membrane composed of a random copolymer can only be obtained. M equal to or greater than 25 is not preferred, because it is difficult to synthesize a copolymer applicable to a direct methanol fuel cell. If synthesis can be carried out, however, m equal to or greater than 25 does not give rise to a problem.

M not smaller than 25 and less than 70 is preferred, because a membrane suitable for a proton exchange membrane for a fuel cell using hydrogen as fuel can be obtained. M is more preferably in a range from 30 to 60. Even if m is less than 25, a copolymer to be used for a proton exchange membrane for a fuel cell using hydrogen as fuel can be synthesized, however, sufficient improvement in characteristics may not be expected. If m is 70 or greater, it may become difficult to synthesize a copolymer to be used for a proton exchange membrane for a fuel cell using hydrogen as fuel. If synthesis can be carried out, however, m equal to or greater than 70 does not give rise to a problem.

In the method of synthesizing a sulfonic-acid-group-containing segmented block copolymer according to the second invention of the present application, in order to prevent gelation due to side reaction during reaction, preferably, a chain extension agent and an oligomer are prepared in equimolar amount or the chain extension agent is slightly excessive. To which extent the chain extension agent should be excessive is different depending on a molecular weight of an oligomer or a molecular weight of a target polymer, however, a range from 0 to 50 mol % is preferred and a range from 0 to 10 mol % is more preferred.

A method of synthesizing a sulfonic-acid-group-containing segmented block copolymer according to the second invention of the present application will be described hereinafter, however, the scope of the present invention is not limited thereto.

<Synthesis of Hydrophilic Oligomer>

A hydrophilic oligomer in the sulfonic-acid-group-containing segmented block copolymer according to the second invention of the present application can be synthesized by causing a sulfonated monomer expressed by Chemical Formula 4 below to react to various bisphenols or various bisthiophenols. In addition, the hydrophilic oligomer may be synthesized by causing dihalide such as 4,4'-dichlorodiphenylsulfone or 2,6-dichlorobenzonitrile in addition to the sulfonated monomer expressed by Chemical Formula 4 below to react to various bisphenols or various bisthiophenols.

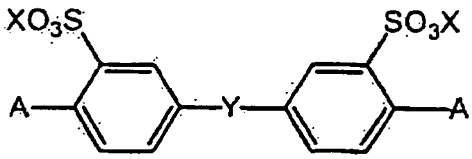

(Chemical Formula 4)

In Chemical Formula 4, X represents H or a univalent cation, Y represents sulfone group or carbonyl group, and A represents halogen element. X is preferably Na or K, and A is preferably F or Cl. In addition, preferably, various bisphenols or various bisthiophenols are provided excessively, so that terminal group of an oligomer is OH group or SH group. A degree of polymerization of an oligomer can be adjusted based on a mole fraction between the monomer expressed by Chemical Formula 4 and various bisphenols or various bisthiophenols.

Though reaction between the monomer expressed by Chemical Formula 4 and various bisphenols or various bisthiophenols can be caused with any known method, reaction is preferably caused as nucleophilic aromatic substitution in the presence of a basic compound. Reaction can be caused in a range from 0 to 350°C and preferably in a range from 50 to 250°C. If a temperature is lower than 0°C, reaction does not tend to proceed sufficiently. If a temperature is higher than 350°C, decomposition of a copolymer also tends to start. Though reaction can also be caused in a nonsolvent, reaction is caused preferably in a solvent. Examples of a solvent that can be used include N-methyl-2-pyrrolidone, N, N-dimethylacetamide, N,N-dimethylformamide, dimethylsulfoxide, diphenylsulfone, and sulfolane, however, the solvent is not limited thereto and any solvent that can be used as a stable solvent in nucleophilic aromatic substitution may be employed. These organic solvents may be used alone or as a mixture of two or more types. Examples of a basic compound include sodium hydroxide, potassium hydroxide, sodium carbonate, potassium carbonate, sodium hydrogencarbonate, and potassium hydrogencarbonate, however, any basic compound that can cause aromatic bisphenols or aromatic bisthiophenols to have an active phenoxide structure or thiophenoxide structure may be used, without limited thereto. Water generated as a by-product can be removed by distillation out of a system together with an azeotropic solvent such as toluene, by using a water-absorbing material such as a molecular sieve, or by distillation together with a polymerization solvent. If nucleophilic aromatic substitution is caused in a solvent, a monomer is preferably prepared such that resultant polymer concentration is 5 to 50 weight % and more preferably in a range from 20 to 40 weight %. If the concentration is lower than 5 weight %, the degree of polymerization is less likely to increase. On the other hand, if the concentration is higher than 50 weight %, viscosity of a system of reaction becomes too high and post-treatment of a reaction product tends to be difficult.

Any known method such as filtration, decantation after centrifugal sedimentation, dialysis through dissolution in water, and salting out through dissolution in water can be used as a method for removing inorganic salt which is a by-product from a solution of a hydrophilic oligomer, and filtration is preferred from a point of view of manufacturing efficiency and yield. If salt is removed by filtration or centrifugal sedimentation, a copolymer can be recovered by dropping a solution into a nonsolvent of a hydrophilic segment. Alternatively, in the case of dialysis, the copolymer can be recovered by evaporation to dryness, and in the case of salting out, the copolymer can be recovered by filtration. An isolated hydrophilic oligomer is preferably purified by washing with a nonsolvent, reprecipitation, dialysis, or the like, and washing is preferred from a point of view of operation efficiency and purification efficiency. An organic solvent used in synthesis or purification is preferably removed as much as possible. The organic solvent is preferably removed by drying, and drying at a reduced pressure at a temperature in a range from 10 to 150°C is more preferred.

A nonsolvent of a hydrophilic oligomer can be selected from any organic solvents, however, it is preferably miscible with an aprotic polar solvent used for reaction. Specifically, examples of a nonsolvent include ketone-based solvents such as acetone, methyl ethyl ketone, diethyl ketone, dibutyl ketone, dipropyl ketone, diisopropyl ketone, and cyclohexanone, and alcohol-based solvents such as methanol, ethanol, propanol, isopropanol, and butanol, however, the nonsolvent is not limited thereto and other suitable nonsolvents can be employed.

<Synthesis of Hydrophobic Oligomer>

The hydrophobic oligomer in the sulfonic-acid-group-containing segmented block copolymer according to the second invention of the present application can be synthesized by causing a monomer expressed by Chemical Formula

5A or 5B below to react to various bisphenols or various bisthiophenols.

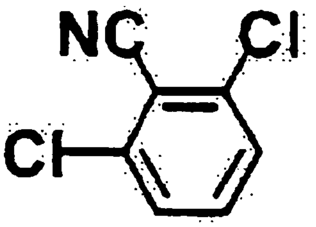

(Chemical Formula 5A)

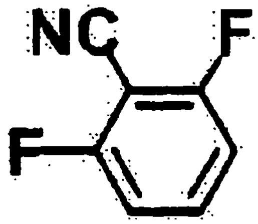

(Chemical Formula 5B)

Preferably, various bisphenols or various bisthiophenols are provided excessively, so that terminal group of an oligomer is OH group or SH group. A degree of polymerization of an oligomer can be adjusted based on a mole fraction between the monomer expressed by Chemical Formula 5A or 5B and various bisphenols or various bisthiophenols.

Though reaction between the monomer expressed by Chemical Formula 5A or 5B and various bisphenols or various bisthiophenols can be caused with any known method, reaction is preferably caused as nucleophilic aromatic substitution in the presence of a basic compound. Reaction can be caused in a range from 0 to 350°C and preferably in a range from 50 to 250°C. If a temperature is lower than 0°C, reaction does not tend to proceed sufficiently. If a temperature is higher than 350°C, decomposition of a copolymer also tends to start. Though reaction can also be caused in a nonsolvent, reaction is caused preferably in a solvent. Examples of a solvent that can be used include aprotic polar solvents such as N-methyl-2-pyrrolidone, N,N-dimethylacetamide, N,N-dimethylformamide, dimethylsulfoxide, diphenylsulfone, and sulfolane, however, the solvent is not limited thereto and any solvent that can be used as a stable solvent in nucleophilic aromatic substitution may be employed. These organic solvents may be used alone or as a mixture of two or more types. Examples of a basic compound include sodium hydroxide, potassium hydroxide, sodium carbonate, potassium carbonate, sodium hydrogencarbonate, and potassium hydrogencarbonate, however, any basic compound that can cause aromatic bisphenols or aromatic bisthiophenols to have an active phenoxide structure or thiophenoxide structure may be used, without limited thereto. Water generated as a by-product can be removed by distillation out of a system together with an azeotropic solvent such as toluene, by using a water-absorbing material such as a molecular sieve, or by distillation together with a polymerization solvent. If nucleophilic aromatic substitution is caused in a solvent, a monomer is preferably prepared such that resultant polymer concentration is 1 to 25 weight % and more preferably in a range from 5 to 15 weight %. If the concentration is lower than 1 weight %, the degree of polymerization is less likely to increase. On the other hand, if the concentration is higher than 25 weight %, precipitation may occur depending on a polymer structure and reaction may stop.

Any known method such as dropping of an oligomer into a nonsolvent and washing can be used as a method of removing inorganic salt which is a by-product from the solution of the hydrophobic oligomer. Water or any organic solvent can be selected as a nonsolvent of the oligomer. Water is preferably used for removing inorganic salt. Any of water and an organic solvent may be dropped first. An organic solvent used in synthesis or purification is preferably removed as much as possible. The organic solvent is preferably removed by drying, and drying at a reduced pressure at a temperature in a range from 10 to 150°C is more preferred.

An organic solvent, which is a nonsolvent, can be selected from any organic solvents, however, it is preferably miscible with an aprotic polar solvent used for reaction. Specifically, examples of an organic solvent include ketone-based solvents such as acetone, methyl ethyl ketone, diethyl ketone, dibutyl ketone, dipropyl ketone, diisopropyl ketone, and cyclohexanone, and alcohol-based solvents such as methanol, ethanol, propanol, isopropanol, and butanol, however, the organic solvent is not limited thereto and other suitable organic solvents can be employed.

<Synthesis of Segmented Block Copolymer>

A segmented block copolymer can be obtained by causing the hydrophobic oligomer and the hydrophilic oligomer synthesized as above to react to a chain extension agent. One or more type of oligomer selected from the group consisting of oligomers independently different in a structure, a molecular weight and molecular weight distribution can be used as the hydrophobic oligomer and the hydrophilic oligomer. Though a molecular weight of each oligomer can be determined with any known method, a number-average molecular weight is preferably determined by quantitating terminal group. Any known method such as titration, colorimetry, labeling, NMR, and elementary analysis can be used for quantitating terminal group, however, NMR is preferred because it is simple and excellent in accuracy and $^1$H-NMR is more preferred. Though the hydrophobic oligomer according to the present invention is characterized by having a benzonitrile structure, dissolubility in a solvent is poor because of its own structure. Therefore, if the hydrophobic oligomer is not dissolved in an appropriate deuterated solvent in NMR measurement, measurement is preferably conducted by adding

a deuterated solvent such as deuterated dimethyl sulfoxide to a solution dissolved in a common solvent dissolving a hydrophobic oligomer, such as N-methyl-2-pyrrolidone.

Sulfonic acid group in the hydrophilic oligomer is preferably alkali metal salt, and more preferably Na or K. If a plurality of types of ions form sulfonic acid group and salt, an accurate molecular weight can be determined by analyzing composition in advance through elementary analysis. Treatment with excessive acid followed by treatment with metal salt or alkali metal hydroxide may be performed. The hydrophilic oligomer is preferably dried immediately before synthesis of a block copolymer so as to remove adsorbed moisture. Drying should only be performed by heating to 100°C or higher, however, drying under a reduced pressure is further preferred.

(16) and (17) in the second invention of the present application will now be described hereinafter.
(16) The method of synthesizing a block copolymer described in (13) to (15), characterized in that halogen of an aromatic-based chain extension agent is fluorine.
(17) The method of synthesizing a block copolymer described in (16), characterized in that the aromatic-based chain extension agent is a perfluorochemical (that may contain group selected from the group consisting of cyano group, sulfonyl group, sulfinyl group, and carbonyl group).

An aromatic-based chain extension agent of which halogen is fluorine is preferred as the chain extension agent to be used, because halogen being fluorine brings about high reactivity and can suppress side reaction such as lowering in a segment length. In addition, the aromatic-based chain extension agent of which halogen is fluorine preferably has three or more fluorine atoms in one molecule, two or more fluorine atoms are more preferably adjacent to each other, and a perfluorochemical is preferred because higher reactivity is achieved. The aromatic-based chain extension agent of which halogen is fluorine may have electron-withdrawing group as substituent, and electron-withdrawing group preferably has ortho position or para position with respect to fluorine atom. Examples of electron-withdrawing group include cyano group, sulfonyl group, sulfinyl group, and carbonyl group, however, it is not limited thereto. Preferred examples of the aromatic-based chain extension agent of which halogen is fluorine include a compound in which a single aromatic ring (that may have electron-withdrawing group as substituent) is perfluorinated or an aromatic ring where a plurality of aromatic groups are linked by electron-withdrawing groups is perfluorinated, and more specifically, any of hexafluorobenzene, decafluorobiphenyl, decafluorobenzophenone, decafluorodiphenyl sulfone, and pentafluorobenzonitrile, or a mixture thereof can be exemplified. In addition, in such compounds as hexafluorobenzene, decafluorobiphenyl, decafluorobenzophenone, decafluorodiphenyl sulfone, and pentafluorobenzonitrile, a compound in which some of fluorine atoms are substituted can also be used so long as the requirement above is met. Examples of substituent for fluorine atom include hydrogen atom, other halogen atoms such as chlorine, bromine and iodine, and hydrocarbon radials such as phenoxy group, phenyl group and methyl group, however, the substituent is not limited thereto.

Reaction among the hydrophilic oligomer, the hydrophobic oligomer and the chain extension agent is preferably caused in a range from 50 to 160°C, more preferably in a range from 70 to 130°C, in an aprotic polar solvent such as N-methyl-2-pyrrolidone, N,N-dimethylacetamide, N,N-dimethylformamide, dimethylsulfoxide, diphenylsulfone, and sulfolane, in the presence of a basic compound such as potassium carbonate or potassium carbonate 1 to 5 time(s) by mole as much as phenol or thiophenol terminal end of the oligomer. The degree of polymerization may be adjusted based on a mole fraction between the oligomers as described previously, and contents of the hydrophilic oligomer and the hydrophobic oligomer may be adjusted also based on a mole fraction between the oligomers. Alternatively, polymerization may be short-stopped by cooling, short-stop at the terminal end or the like, by determining an end point based on viscosity or the like of the reaction solution. Reaction is preferably caused in an inert gas current such as nitrogen. Though solid content concentration in the reaction solution should only be in a range from to 25 weight %, it is preferably in a range from 5 to 20 weight %, considering reactivity and poor dissolubility of the hydrophobic oligomer. In addition, most preferably, the solid content concentration is in a range from 8 to 15 weight %. The solid content concentration herein refers to polymer concentration in a solution. Whether the hydrophobic oligomer has been dissolved or not can be determined by visually observing whether the solution is transparent or cloudy.

Polymerization of the segmented block copolymer may be carried out by using a polymerization solution of each oligomer as it is without purification as described previously or mixing polymerization solutions while such a by-product as inorganic salt has been removed. Specifically, each oligomer polymerization solution is mixed without isolating and purifying a copolymer from a polymerization solution of the oligomer or with only such a by-product as inorganic salt being removed from a solution, and then the chain extension agent is added to the mixture to cause reaction in the presence of a basic compound such as potassium carbonate or sodium carbonate. Polymerization is carried out through reaction preferably in a range from 50 to 160°C and more preferably in a range from 70 to 130°C. The degree of polymerization may be adjusted based on a mole fraction between the oligomers, and contents of the hydrophilic oligomer and the hydrophobic oligomer may be adjusted also based on a mole fraction between the oligomers. Alternatively, polymerization may be short-stopped by cooling, short-stop at the terminal end or the like, by determining an end point based on viscosity or the like of the reaction solution. Reaction is preferably caused in an inert gas current such as

nitrogen. Though solid content concentration in the reaction solution should only be in a range from 1 to 25 weight %, it is preferably in a range from 5 to 20 weight %, considering reactivity and poor dissolubility of the hydrophobic oligomer. In addition, most preferably, the solid content concentration is in a range from 8 to 15 weight %. Whether the hydrophobic oligomer has precipitated or not can be determined by visually observing whether the solution is transparent or cloudy.

Any known method can be used for isolation and purification of a copolymer from a reaction solution. For example, a copolymer can be solidified by dropping a reaction solution into a nonsolvent of a copolymer such as water, acetone or methanol. Among these, water is preferred because of its ease in handing and ability to remove inorganic salt. In addition, in order to remove an oligomer component or a highly hydrophilic component, washing with hot water from 60°C to 100°C, a solvent mixture of water and an organic solvent (ketone-based solvents such as acetone, alcohol-based solvents such as methanol, ethanol and isopropanol), or the like is preferred.

Though an exemplary preferred structure of the segmented block copolymer synthesized with the synthesizing method according to the second invention of the present application will be shown below, the scope of the present invention is not limited thereto. In addition, in the copolymer, a hydrophilic segment and a hydrophobic segment do not necessarily have to be linked alternately. In the formula below, Ar represents any of the chain extension agents described previously or a mixture thereof, X represents H or a univalent cation, and each of n and m independently represents an integer from 2 to 100.

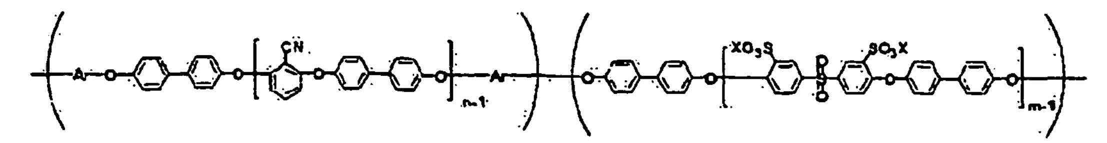

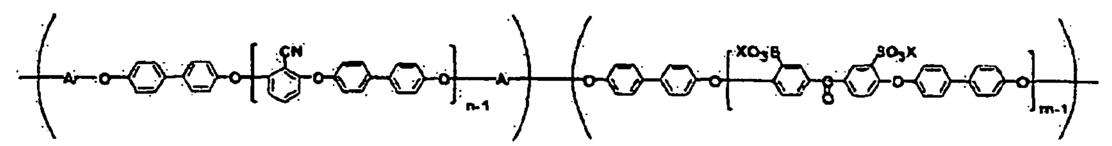

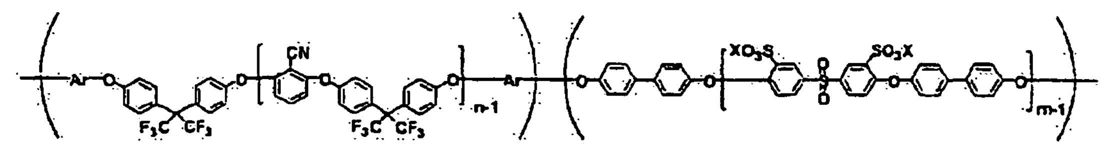

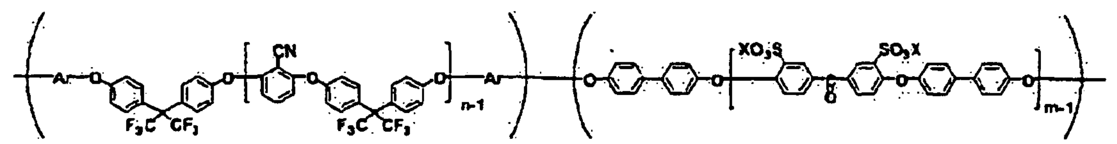

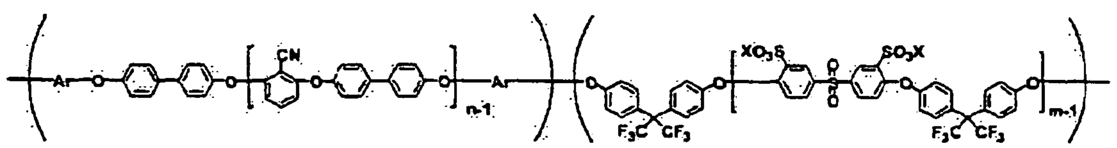

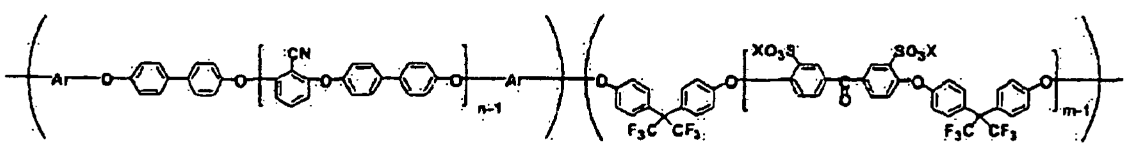

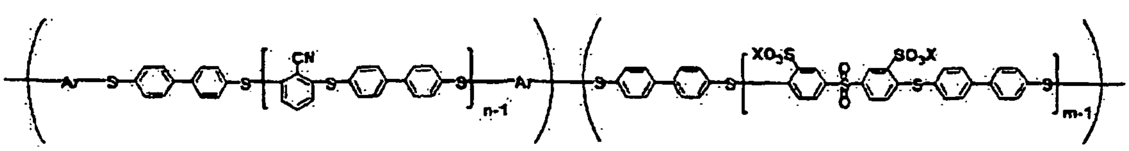

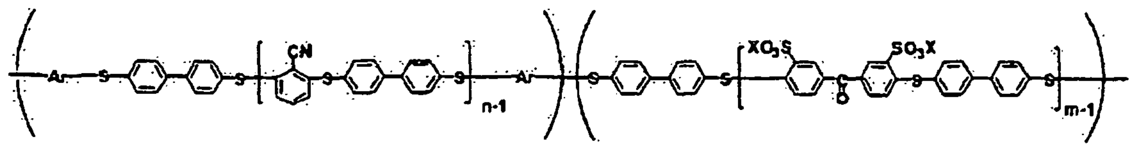

Ion exchange capacity of the segmented block copolymer in the first and second inventions of the present application is preferably from 0.5 to 2.7 meq/g. The ion exchange capacity equal to or lower than 0.5 meq/g is not preferred because proton conductivity is too low. The ion exchange capacity equal to or higher than 2.7 meq/g is not preferred because swelling is great and durability is lowered. If the ion exchange capacity is in a range from 0.7 to 2.0 meq/g, the segmented block copolymer has more preferred characteristics in proton conductivity, resistance to swelling, or the like. In addition, if the ion exchange capacity is in a range from 0.7 to 1.6 meq/g, the segmented block copolymer is low in methanol permeability and hence it is particularly suitable for a proton exchange membrane for a direct methanol fuel cell. Expressing a molecular weight of the sulfonic-acid-group-containing block copolymer according to the present invention in logarithmic viscosity at the time of measurement of 0.5 g/dL N-methyl-2-pyrrolidone solution at 30°C, the logarithmic viscosity equal to or higher than 0.5 is preferred from a point of view of physical property, the logarithmic viscosity equal to or higher than 0.9 is more preferred, and the logarithmic viscosity equal to or higher than 1.2 is further preferred. The logarithmic viscosity lower than 0.5 is not preferred because the physical property significantly lowers. The logarithmic viscosity exceeding 5.0 may lead to difficulty in handling, because viscosity of the solution in which the copolymer is dissolved is significantly too high.

The sulfonic-acid-group-containing block copolymer according to the first and second inventions of the present application may be mixed with other substances or compounds for use as a composition. Examples of a substance to be mixed include fibrous substances, heteropoly acids such as phosphotungstic acid and phosphomolybdic acid, acid compounds such as low-molecular-weight sulfonic acid or phosphoric acid and phosphoric acid derivatives, a silicic acid compound, zirconium phosphate, and the like. The content of a mixture is preferably less than 50 mass %. The content equal to or higher than 50 mass % is not preferred because physical property of moldability is impeded. A fibrous substance is preferred as a substance to be mixed in terms of suppression of swelling property, and an inorganic fibrous substance such as potassium titanate fiber is more preferred.

In addition, use as a composition as mixed with other polymers is also possible. For these polymers, for example, polyesters such as polyethylene terephthalate, polybutylene terephthalate and polyethylene naphthalate, polyamides such as nylon 6, nylon 6,6, nylon 6,10, and nylon 12, acrylate-based resins, polyacrylic-acid-based resins and polymethacrylate-based resins such as polymethyl methacrylate, polymethacrylate esters, polymethyl acrylate, and polyacrylic esters, various types of polyolefin- or polyurethane-based resins including polyethylene, polypropylene, polystyrene, and diene-based polymers, cellulose-based resins such as cellulose acetate and ethyl cellulose, aromatic-based polymers such as polyarylate, aramid, polycarbonate, polyphenylene sulfide, polyphenylene oxide, polysulfone, polyethersulfone, polyether ether ketone, polyetherimide, polyimide, polyamide-imide, polybenzimidazole, polybenzoxazole, and polybenzothiazole, and thermosetting resins such as epoxy resin, phenolic resin, novolac resin, and benzoxazine resin can be employed.

In use for such a composition, the sulfonic-acid-group-containing block copolymer according to the present invention is preferably contained by 50 mass % or more and less than 100 mass % with respect to the composition as a whole. More preferably, the sulfonic-acid-group-containing block copolymer according to the present invention is contained by 70 mass % or more and less than 100 mass %. If the content of the sulfonic-acid-group-containing block copolymer according to the present invention is less than 50 mass % of the composition as a whole, the proton exchange membrane containing this composition is low in concentration of sulfonic acid group and it is less likely to obtain good proton conductivity. In addition, a unit containing sulfonic acid group has a non-continuous phase and mobility of ions that conduct tends to lower. It is noted that the composition according to the present invention may contain, as necessary, various additives such as an antioxidant, a thermal stabilizer, a lubricant, a tackifier, a plasticizer, a cross-linker, a viscosity modifier, an antistatic, an antibacterial agent, an antifoaming agent, a dispersant, and a polymerization inhibitor.

The sulfonic-acid-group-containing block copolymer according to the first and second inventions of the present application may employ a solution dissolved in an appropriate solvent, as a composition. An appropriate solvent can be selected from aprotic polar solvents such as N,N-dimethylformamide, N,N-dimethylacetamide, dimethylsulfoxide, sulfolane, diphenylsulfone, N-methyl-2-pyrrolidone, and hexamethylphosphoramide, however, the solvent is not limited thereto. Among these, dissolution in N-methyl-2-pyrrolidone, N,N-dimethylacetamide or the like is preferred. A plurality of these solvents may be mixed for use in a tolerable range. Concentration of a compound in a solution is preferably in a range from 0.1 to 50 mass %, more preferably in a range from 5 to 20 weight %, and further preferably in a range from 5 to 15 weight %. If concentration of the compound in the solution is lower than 0.1 mass %, it tends to be difficult to obtain a good molded product. If the concentration of the compound in the solution exceeds 50 mass %, workability tends to lower. A compound described previously or the like may further be mixed in the solution for use.

Sulfonic acid group in the copolymer in the sulfonic-acid-group-containing block copolymer composition according to the first and second inventions of the present application may be an acid or salt with a cation, however, from a point of view of stability of sulfonic acid group, salt with a cation is preferred. In the case of salt, it can be subjected to acid treatment as necessary, for example, after molding or the like, for conversion to acid.

The sulfonic-acid-group-containing block copolymer and the composition thereof according to the first and second inventions of the present application can be made into a molded body such as a fiber or a film with any method such as extrusion, spinning, rolling, or casting. Among these, molding from a solution dissolved in an appropriate solvent is preferred.

A conventionally known method can be used as a method of obtaining a molded body from a solution. For example, a molded body can be obtained, for example, by removing a solvent by heating, drying under a reduced pressure, or immersion in a compound nonsolvent that is miscible with a solvent dissolving a compound. If the solvent is an organic solvent, the solvent is preferably distilled out through heating or drying under a reduced pressure. Here, molding into various shapes such as fibrous shape, film shape, pellet shape, plate shape, rod shape, pipe shape, ball shape, and block shape can also be carried out, in a form of a composite with other compounds as necessary. Combination with a compound similar in dissolution behavior is preferred from a point of view of good moldability. Sulfonic acid group in the molded body thus obtained may contain a form of salt with a cation, however, it may be converted to free sulfonic acid group through acid treatment as necessary.

An ion conduction membrane can also be fabricated from the sulfonic-acid-group-containing block copolymer and the composition thereof according to the first and second inventions of the present application. The ion conduction membrane may be a composite membrane with a support structure such as a porous membrane, a nonwoven fabric, fibril, and paper, in addition to the sulfonic-acid-group-containing copolymer according to the present invention. The obtained ion conduction membrane can be used as a proton exchange membrane for a fuel cell.

A most preferred technique for molding the ion conduction membrane is casting from a solution, and the ion conduction membrane can be obtained by removing the solvent from the cast solution as described above. The solvent is preferably removed by drying, from a point of view of evenness of the ion conduction membrane. In addition, in order to avoid decomposition and alteration of the compound or the solvent, drying under a reduced pressure at a temperature as low as possible can also be carried out. Moreover, if the solution has high viscosity, a substrate or the solution is heated to carry out casting at a high temperature. Then, viscosity of the solution lowers and casting can easily be carried out. Though a thickness of the solution in casting is not particularly restricted, the thickness is preferably from 10 to 1000 $\mu$m. More preferably, the thickness is from 50 to 500 $\mu$m. If the thickness of the solution is smaller than 10 $\mu$m, it is likely that a shape as the ion conduction membrane cannot be maintained. If the solution has a thickness greater than 1000 $\mu$m, it is likely that an uneven ion conduction membrane is formed. A known method can be used for a method of controlling a thickness of a cast solution. A thickness can be controlled based on an amount or concentration of the solution, for example, by using an applicator, a doctor blade or the like so as to achieve a constant thickness, or by using a glass petri dish or the like so as to make a casting area constant. An evener membrane can be obtained by adjusting a removal rate of the solvent in the cast solution. For example in heating, at an initial stage, a low temperature can be set so as to lower an evaporation rate. Alternatively, in immersion in a nonsolvent such as water, a solidification rate of a compound can be adjusted, for example, by leaving the solution for an appropriate period of time in air or in an inert gas.

The proton exchange membrane according to the first and second inventions of the present application can have any thickness depending on a purpose, however, it is preferably as thin as possible from a point of view of proton conductivity. Specifically, the proton exchange membrane has a thickness preferably from 5 to 200 $\mu$m, further preferably from 5 to 100 $\mu$m, and most preferably from 20 to 80 $\mu$m. If the proton exchange membrane has a thickness smaller than 5 $\mu$m, handling of the proton exchange membrane is difficult and short-circuiting or the like tends to occur when a fuel cell is fabricated. If the proton exchange membrane has a thickness greater than 200 $\mu$m, the proton exchange membrane has a high electrical resistance value and power generation performance of a fuel cell tends to be lower. In use as the proton exchange membrane, the membrane may contain sulfonic acid group made of metal salt, however, it can be converted to free sulfonic acid through appropriate acid treatment. Here, treatment of a membrane obtained with or without heating by immersion in an aqueous solution such as sulfuric acid or hydrochloric acid is also effective. In addition, the proton exchange membrane has proton conductivity of preferably $1.0 \times 10^{-3}$ S/cm or higher. If the proton conductivity is $1.0 \times 10^{-3}$ S/cm or higher, it is likely that good output is obtained from a fuel cell including the proton exchange membrane. If the proton conductivity is lower than $1.0 \times 10^{-3}$ S/cm, lowering in output from the fuel cell tends to occur. More preferably, the proton conductivity is in a range from $1.0 \times 10^{-2}$ to $1.0 \times 10^{-0}$ S/cm. Further, in order to achieve high durability, swelling property is preferably as low as possible. Too high swelling property is not preferred, because it leads to lower strength of a membrane and hence lower durability. Too low swelling property, however, is not preferred, because necessary proton conductivity may not be obtained. A preferred range of swelling property in use as the proton exchange membrane for a fuel cell is exemplarily shown as a value in a case of treatment with hot water at 80°C. Here, a water absorption ratio (weight % of absorbed water with respect to dry weight of a copolymer) is preferably from 20 to 130 weight % and more preferably from 30 to 110 weight %. An area swelling ratio (a ratio of an

amount of increase in area due to swelling with respect to an area of a membrane before swelling) is preferably in a range from 0 to 20 % and more preferably in a range from 0 to 15 %. Swelling property can be adjusted based on an amount of sulfonic acid group in a copolymer, a chain length of a hydrophilic segment, a chain length of a hydrophobic segment, or the like. As an amount of sulfonic acid group is greater, water absorption can be enhanced. As a chain length of a hydrophilic segment is made longer, water absorption can further be enhanced. An area swelling ratio can be made smaller by decreasing an amount of sulfonic acid group or by making a chain length of a hydrophobic segment longer. In addition, swelling property of a membrane can be controlled also based on conditions in the steps of manufacturing a membrane from a copolymer (a drying temperature, a drying rate, concentration of a solution, composition of a solvent).

In order to form a phase separation structure, normally, a membrane should only be manufactured with the method as described above, however, a membrane can also be manufactured by adding a nonsolvent such as water to a copolymer solution for the purpose of accelerating phase separation.

In addition, by setting the proton exchange membrane according to the present invention described above, or a film or the like onto an electrode, an assembly of the proton exchange membrane according to the present invention, or the film or the like and the electrode can be obtained. A conventionally known method can be employed as a method of fabricating this assembly. For example, a method of applying an adhesive to a surface of an electrode for adhesion of the proton exchange membrane and the electrode to each other, a method of heating the proton exchange membrane and the electrode and applying pressure thereto, or the like is available. Among these methods, the method of applying an adhesive mainly composed of a sulfonic-acid-group-containing poly(arylene ether)-based compound and a composition thereof according to the present invention to a surface of an electrode for adhesion is preferred, because it is expected that adhesion between the proton exchange membrane and the electrode is improved and proton conductivity of the proton exchange membrane is less likely to be impeded.

A fuel cell can also be fabricated by using the assembly of the proton exchange membrane, or the film or the like, and the electrode described above. Since the proton exchange membrane according to the present invention, or the film or the like, has excellent heat resistance, workability and proton conductivity, a fuel cell that can withstand an operation at a high temperature, can easily be fabricated, and can provide good output can be provided. The proton exchange membrane according to the present invention is suitable not only for a polymer electrolyte fuel cell (PEFC) using hydrogen as fuel but also for a direct methanol fuel cell (DMFC) using methanol as fuel, because methanol permeability thereof is low. In addition, since the proton exchange membrane according to the present invention has excellent heat resistance and barrier property, it is also suitable for a fuel cell of a type extracting hydrogen from hydrocarbon such as methanol, gasoline and ether by means of a reformer.

In addition, the sulfonic-acid-group-containing segmented block copolymer according to the first and second inventions of the present application can also be used as a binder for a catalyst of an electrode in a fuel cell. An excellent electrode can be obtained, because of higher durability and better proton conductivity than a conventional binder. In use as a binder, the sulfonic-acid-group-containing segmented block copolymer can be used in such a state as being dissolved or dispersed in an appropriate solvent. For the solvent, aprotic polar solvents such as N,N-dimethylformamide, N,N-dimethylacetamide, dimethylsulfoxide, sulfolane, diphenylsulfone, N-methyl-2-pyrrolidone, and hexamethylphosphoramide, alcohols such as methanol and ethanol, ethers such as dimethyl ether and ethylene glycol monomethyl ether, ketones such as acetone, methyl ethyl ketone and cyclohexanone, and a solvent mixture of such an organic solvent and water can be used.

Examples

Though the present invention will specifically be described hereinafter with reference to Examples, the present invention is not limited to these Examples. It is noted that various types of measurement were conducted as follows.

<Viscosity of Solution>

Polymer powders were dissolved in N-methyl-2-pyrrolidone at concentration of 0.5 g/dL, viscosity was measured in a thermostat at 30°C using an Ubbelohde viscometer, and evaluation was made based on logarithmic viscosity (In [ta/tb])/c (ta representing the number of seconds for a sample solution to fall, tb representing the number of seconds for only a solvent to fall, and c representing polymer concentration).

<Ion Exchange Capacity>

One hundred mg dried proton exchange membrane was immersed in 50 ml NaOH aqueous solution at 0.01 N and the solution was stirred overnight at 25°C. Thereafter, neutralization titration using an HCl aqueous solution at 0.05 N was carried out. For neutralization titration, a potentiometric titration apparatus COMTITE-980 manufactured by Hiranuma Sangyo Corporation was used. Ion exchange capacity was calculated based on the expression below.

$$\text{Ion exchange capacity [meq/g]} = (10 - \text{an amount of titration [ml]})/2$$

<Proton Conductivity>

A platinum wire (having a diameter of 0.2 mm) was pressed against a surface of a membrane sample in an elongated shape on a self-made measurement probe (made of Teflon®), the sample was held in a thermo-hygrostat oven (H-20-01 of Nagano Science Co., Ltd.) at 80°C at 95 % RH, and impedance between platinum wires was measured with 1250 FREQUENCY RESPONSE ANALYSER of SOLARTRON. Measurement was conducted with a distance between electrodes being varied, and conductivity having contact resistance between the membrane and the platinum wire canceled was calculated from a gradient obtained by plotting resistance measurement values estimated from the distance between the electrodes and a C-C plot, based on the expression below.

$$\text{Conductivity [S/cm]} = 1/\text{membrane width [cm]} \times \text{membrane thickness [cm]} \times \text{gradient between resistance electrodes } [\Omega/\text{cm}]$$

<NMR Measurement>

A copolymer (of which sulfonic acid group being Na or K salt) was dissolved in a solvent, and measurement was conducted by using UNITY-500 of VARIAN Inc., at a room temperature when $^1$H-NMR was used and at a temperature of 70°C when $^{13}$C-NMR was used. A solvent mixture of N-methyl-2-pyrrolidone and deuterated dimethyl sulfoxide (85/15 vol./vol.) was employed as the solvent. $^1$H-NMR spectrum of a hydrophilic oligomer and a hydrophobic oligomer forming a hydrophilic segment and a hydrophobic segment respectively was measured, and a number-average molecular weight was determined from each integration ratio of a peak derived from terminal group and a peak of a skeleton portion. For example, in an example of a hydrophobic oligomer A in Synthesis Example 1 below, a peak of proton at ortho position of ether linkage in a biphenyl structure that is derived from terminal group (a portion linked to perfluorobiphenyl) and a peak thereof in the skeleton were detected at 7.2 ppm and 7.3 ppm, respectively. The number-average molecular weight was thus determined based on the integration ratios of these peaks. Alternatively, in an example of a hydrophilic oligomer A in Synthesis Example 5 below, a peak of proton at ortho position of ether linkage in a biphenyl structure that is derived from terminal group (ortho position of phenolic hydroxyl group) and a peak thereof in the skeleton were detected at 6.8 ppm and 7.3 ppm, respectively. The number-average molecular weight was thus determined based on the integration ratios of these peaks. Regarding a block copolymer, a composition ratio of a hydrophilic segment and a hydrophobic segment was analyzed with $^1$H-NMR and whether a segment length decreased or not was confirmed with $^{13}$C-NMR. If a molecular weight of each segment decreased due to side reaction in synthesis of a block copolymer, a peak derived from exchange reaction between the segments is detected by $^{13}$C-NMR For example, in a block copolymer having a structure in Comparative Example 1 below, a peak derived from exchange reaction appeared at 155.5 ppm and 157.0 ppm, whereas a peak could not clearly be confirmed in a block copolymer in Example 1 below having a substantially similar structure, with merely a trace being observed. By thus using $^{13}$C-NMR, whether a segment chain length derived from each oligomer was maintained or not was confirmed. In addition, in other block copolymers described in Examples below as well, a peak derived from exchange could not clearly be confirmed, as in the block copolymer in Example 1. In a block copolymer in Example 19, it originally includes a structure exhibiting a peak the same as that derived from exchange, and therefore exchange cannot clearly be confirmed.

<Evaluation of Swelling Property>

The proton exchange membrane left for one day in a room at 23°C at 50 % RH was cut into a 50 mm square, that was in turn immersed in hot water at 80°C for 24 hours. After immersion, a dimension and a weight of the membrane were quickly measured. The membrane was dried at 120°C for 3 hours and a dry weight was measured. A water absorption ratio and an area swelling ratio were calculated based on the expressions below. A dimension of the membrane was measured by measuring a length of two orthogonal sides linked at a specific vertex.

$$\text{Water absorption ratio (\%)} = \{\text{weight (g) after immersion} - \text{dry weight (g)}\} \div \text{dry weight (g)} \times 100$$

$$\text{Area swelling ratio (\%)} = \{\text{side length A (mm) after immersion} \times \text{side length B (mm) after immersion}\} \div \{50\times50\} \times 100 - 100$$

<Methanol Permeability>

In a room at 25°C, two glass baths were coupled to each other with a sample serving as a diaphragm, one bath was filled with 5 M methanol aqueous solution and another bath was filled with distilled water, and concentration of methanol in the bath filled with distilled water was quantitated every appropriate time. Methanol was quantitated with gas chromatography, and concentration of methanol was calculated by using a calibration curve prepared from a peak area at the time when a methanol solution at prescribed concentration was supplied in advance. A methanol permeability coefficient was calculated from an inclination of plots of obtained methanol concentration with respect to lapse of time, based on the expression below.

$$\text{Methanol permeability coefficient (mmol} \bullet \text{m}^{-1} \bullet \text{sec}^{-1}) = \text{inclination of plot (mmol} \bullet \text{sec}^{-1}) \div \text{membrane area (m}^2) \times \text{membrane thickness (m)}$$

Fabrication of a proton exchange membrane from the obtained copolymer will be described below.

<Proton Exchange Membrane Fabrication Method A>

Here, 2.0 g copolymer (of which sulfonic acid group is of a salt type) was dissolved in 18 mL N-methyl-2-pyrrolidone (abbreviated as NMP), and the solution was cast on a glass plate to a thickness of 500 μm with an applicator, followed by heating and drying at 100°C for 1 hour and at 150°C for 1 hour. Thereafter, the glass plate was left cooled to a temperature around a room temperature, and the glass plate together with the membrane was immersed in water to separate the membrane. The separated membrane was immersed in aqua pura, and thereafter immersed for 1 hour in sulfuric acid at 1 N so as to convert sulfonic acid group to an acid type. Then, the membrane was washed with aqua pura to remove free sulfuric acid and then subjected to air-drying, and thus the proton exchange membrane was obtained.

<Proton Exchange Membrane Fabrication Method B>

Here, 20.0 g copolymer (of which sulfonic acid group is of a salt type) was dissolved in 180 mL N-methyl-2-pyrrolidone (abbreviated as NMP), the solution was pressurized and filtered, the solution was continuously cast to a thickness of 400 μm on a film made of polyethylene terephthalate and having a thickness of 190 μm, and a membrane obtained by heating and drying at 130°C for 30 minutes was wound up together with the film made of polyethylene terephthalate. The obtained membrane was continuously immersed in aqua pura while it remained attached to the film made of polyethylene terephthalate, and thereafter continuously immersed in 1 mol/L sulfuric acid aqueous solution for 30 minutes so as to convert sulfonic acid group into an acid type. Then, the membrane was washed with aqua pura to remove free sulfuric acid, and then dried to separate the film made of polyethylene terephthalate. The proton exchange membrane was thus obtained.

Synthesis of the hydrophilic and hydrophobic oligomers according to the first invention of the present application will be shown below.

<Synthesis Example 1: Hydrophobic Oligomer A>

Here, 49.97 g (290.5 mmol) 2,6-dichlorobenzonitrile (abbreviated as DCBN), 54.99 g (295.3 mmol) 4,4'-biphenol (abbreviated as BP), 46.94 g (339.6 mmol) potassium carbonate, 750 mL NMP, and 150 mL toluene were placed in a 1000 mL side arm flask to which a nitrogen introduction pipe, an agitation blade, a Dean-Stark trap, and a thermometer were attached, and they were heated in a nitrogen current while being stirred in an oil bath. Dehydration by azeotrope with toluene was carried out at 140°C and thereafter toluene was wholly distilled out. Thereafter, a temperature was

raised to 200°C and heating for 15 hours was performed. In another 1000 mL side arm flask to which a nitrogen introduction pipe, an agitation blade, a reflux condenser, and a thermometer were attached, 200 mL NMP and 4.85 g perfluoro biphenyl were placed and heated to 110°C in an oil bath in a nitrogen current while being stirred. A reaction solution of DCBN and BP was supplied thereto by using a dropping funnel for 2 hours while stirring. After supply was completed, stirring was further performed for 2 hours. After the reaction solution was cooled to a room temperature, it was introduced in 3000 mL aqua pura so as to solidify an oligomer. The oligomer was washed further with aqua pura three times so as to remove NMP and inorganic salt. The oligomer washed with water was filtered out and thereafter dried at 100°C for 2 hours. Thereafter, the oligomer was cooled to a room temperature and washed with 3000 mL acetone twice so as to remove excessive perfluoro biphenyl. The oligomer was again filtered out followed by drying under a reduced pressure at 120°C for 16 hours, to thereby obtain hydrophobic oligomer A. The number-average molecular weight determined in $^{1}$H-NMR measurement was 13880. A chemical structure of hydrophobic oligomer A is shown below.

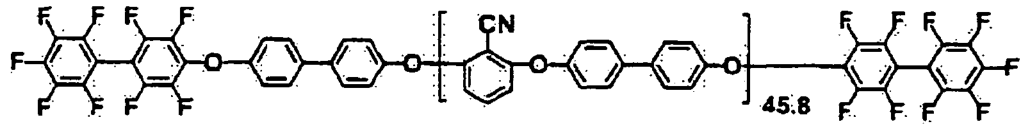

<Synthesis Example 2: Hydrophobic Oligomer B>

Here, 49.97 g (290.5 mmol) DCBN, 54.99 g (295.3 mmol) BP, 46.94 g (339.6 mmol) potassium carbonate, 770 mL NMP, and 130 mL toluene were placed in a 1000 mL side arm flask to which a nitrogen introduction pipe, an agitation blade, a Dean-Stark trap, and a thermometer were attached, and they were heated in a nitrogen current while being stirred in an oil bath. Dehydration by azeotrope with toluene was carried out at 140°C and thereafter toluene was wholly distilled out. Thereafter, a temperature was raised to 200°C and heating for 15 hours was performed. In another 1000 mL side arm flask to which a nitrogen introduction pipe, an agitation blade, a reflux condenser, and a thermometer were attached, 200 mL NMP and 8.09 g perfluoro biphenyl were placed and heated to 110°C in an oil bath in a nitrogen current while being stirred. A reaction solution of DCBN and BP was supplied thereto by using a dropping funnel for 2 hours while stirring. After supply was completed, stirring was further performed for 3 hours. After the reaction solution was cooled to a room temperature, it was introduced in 3000 mL acetone so as to solidify an oligomer. Supernatant containing fine precipitates was removed and further washing with acetone was performed twice. Thereafter, washing with aqua pura was performed three times so as to remove NMP and inorganic salt. Thereafter, the oligomer was filtered out followed by drying under a reduced pressure at 120°C for 16 hours, to thereby obtain a hydrophobic oligomer B. The number-average molecular weight determined in $^{1}$H-NMR measurement was 11260. A chemical structure of hydrophobic oligomer B is shown below.

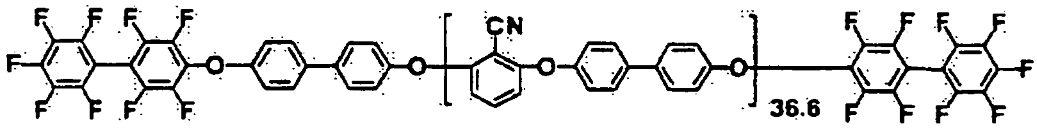

<Synthesis Example 3: Hydrophobic Oligomer C>

A hydrophobic oligomer C was synthesized as in Synthesis Example 1, except for using 5.78 g perfluoro diphenyl sulfone instead of 4.85 g perfluoro biphenyl. The number-average molecular weight determined in $^{1}$H-NMR measurement was 14010. A chemical structure of hydrophobic oligomer C is shown below.

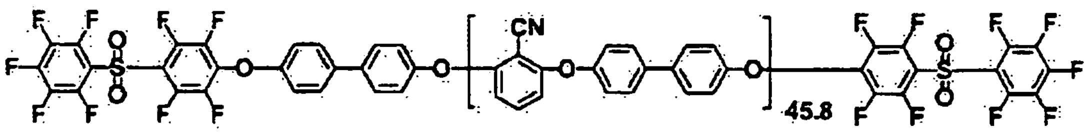

<Synthesis Example 4: Hydrophobic Oligomer D>

A hydrophobic oligomer D was obtained with an operation the same as in Synthesis Example 1, by placing 29.49 g (171.5 mmol) DCBN, 59.35 g (176.5 mmol) 2,2-bis(4-hydroxyphenyl)hexafluoropropane (abbreviated as BFP),

28.06 g (203.0 mmol) potassium carbonate, 700 mL NMP, and 150 mL toluene in a 1000 mL side arm flask to which a nitrogen introduction pipe, an agitation blade, a Dean-Stark trap, and a thermometer were attached. The number-average molecular weight determined in $^1$H-NMR measurement was 14250. A chemical structure of hydrophobic oligomer D is shown below.

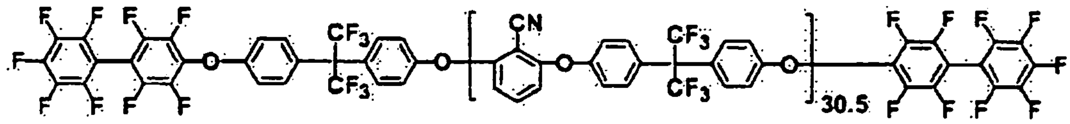

<Synthesis Example 5: Hydrophobic Oligomer H>

Here, 49.97 g (290.5 mmol) DCBN, 57.02 g (306.2 mmol) BP, 46.55 g (336.8 mmol) potassium carbonate, 770 mL NMP, and 130 mL toluene were placed in a 1000 mL side arm flask to which a nitrogen introduction pipe, an agitation blade, a Dean-Stark trap, and a thermometer were attached, and they were heated in a nitrogen current while being stirred in an oil bath. Dehydration by azeotrope with toluene was carried out at 140°C and thereafter toluene was wholly distilled out. Thereafter, a temperature was raised to 200°C and heating for 15 hours was performed. In another 1000 mL side arm flask to which a nitrogen introduction pipe, an agitation blade, a reflux condenser, and a thermometer were attached, 200 mL NMP and 30.09 g perfluoro biphenyl were placed and heated to 110°C in an oil bath in a nitrogen current while being stirred. A reaction solution of DCBN and BP was supplied thereto by using a dropping funnel for 2 hours while stirring. After supply was completed, stirring was further performed for 3 hours. After the reaction solution was cooled to a room temperature, it was introduced in 3000 mL acetone so as to solidify an oligomer. Supernatant containing fine precipitates was removed and further washing with acetone was performed twice. Thereafter, washing with aqua pura was performed three times so as to remove NMP and inorganic salt. Thereafter, the oligomer was filtered out followed by drying under a reduced pressure at 120°C for 16 hours, to thereby obtain a hydrophobic oligomer H. The number-average molecular weight determined in $^1$H-NMR measurement was 5810. A chemical structure of hydrophobic oligomer H is shown below.

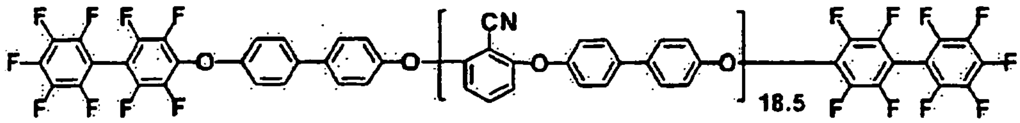

<Synthesis Example 6: Hydrophobic Oligomer I>

A hydrophobic oligomer I was synthesized as in Synthesis Example 1, except for using 5.26 g perfluorobenzophenone instead of 4.85 g perfluoro biphenyl. The number-average molecular weight determined in $^1$H-NMR measurement was 13050. A chemical structure of hydrophobic oligomer I is shown below.

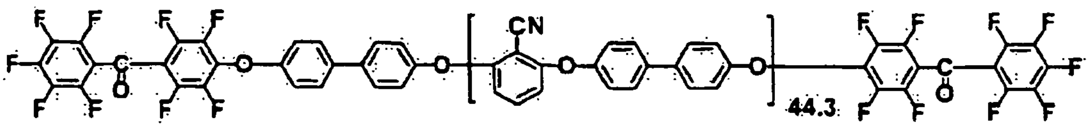

<Synthesis Example 7: Hydrophilic Oligomer A>

Here, 250.0 g (508.9 mmol) disodium-3,3'-disulfonate-4,4'-dichlorodiphenylsulfone (abbreviated as S-DCDPS), 97.04 g (520.7 mmol) BP, 66.23 g (624.9 mmol) sodium carbonate, 650 mL NMP, and 150 mL toluene were placed in a 2000 mL side arm flask to which a nitrogen introduction pipe, an agitation blade, a Dean-Stark trap, and a thermometer were attached, and they were heated in a nitrogen current while being stirred in an oil bath. Dehydration by azeotrope with toluene was carried out at 140°C and thereafter toluene was wholly distilled out. Thereafter, a temperature was raised to 200°C and heating for 16 hours was performed. In succession, 500 mL NMP was introduced and cooling to a room temperature while stirring was carried out. The obtained solution was aspirated and filtered through a 25G2 glass filter, and a yellow, transparent solution was obtained. The obtained solution was dropped into 3 L acetone to solidify an oligomer. The oligomer was further washed with acetone three times and thereafter filtered out, followed by drying under a reduced pressure. Hydrophilic oligomer A was thus obtained. The number-average molecular weight determined

in $^{1}H$-NMR measurement was 25560. A chemical structure of hydrophilic oligomer A is shown below.

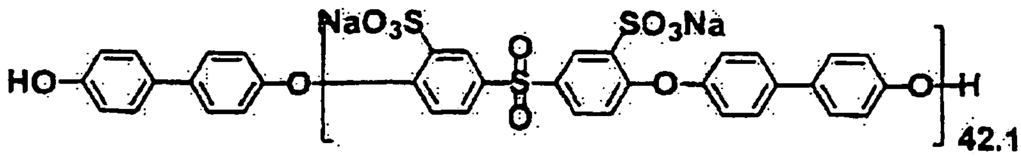

<Synthesis Example 8: Hydrophilic Oligomer B>

A hydrophilic oligomer B was obtained as in Synthesis Example 7, by placing 250.0 g (508.9 mmol) S-DCDPS, 96.62 g (518.5 mmol) BP, 65.95 g (622.2 mmol) sodium carbonate, 650 mL NMP, and 150 mL toluene in a 2000 mL side arm flask to which a nitrogen introduction pipe, an agitation blade, a Dean-Stark trap, and a thermometer were attached. The number-average molecular weight determined in $^{1}H$-NMR measurement was 31340. A chemical structure of hydrophilic oligomer B is shown below.

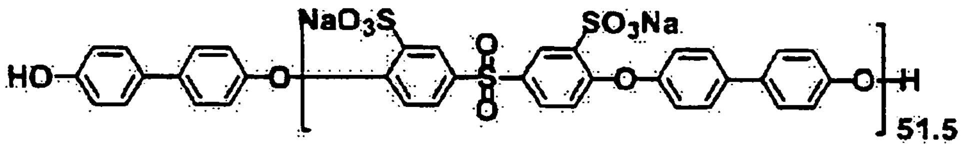

<Synthesis Example 9: Hydrophilic Oligomer C>

A hydrophilic oligomer C was obtained as in Synthesis Example 7, by placing 250.0 g (508.9 mmol) S-DCDPS, 97.46 g (523.0 mmol) BP, 66.52 g (627.7 mmol) sodium carbonate, 650 mL NMP, and 150 mL toluene in a 2000 mL side arm flask to which a nitrogen introduction pipe, an agitation blade, a Dean-Stark trap, and a thermometer were attached. The number-average molecular weight determined in $^{1}H$-NMR measurement was 20920. A chemical structure of hydrophilic oligomer C is shown below.

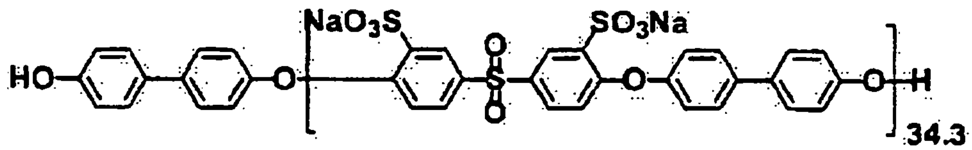

<Synthesis Example 10: Hydrophilic Oligomer D>

A hydrophilic oligomer D was obtained as in Synthesis Example 7, by placing 250.0 g (508.9 mmol) S-DCDPS, 175.09 g (523.0 mmol) BFP, 66.23 g (624.9 mmol) sodium carbonate, 800 mL NMP, and 150 mL toluene in a 2000 mL side arm flask to which a nitrogen introduction pipe, an agitation blade, a Dean-Stark trap, and a thermometer were attached. The number-average molecular weight determined in $^{1}H$-NMR measurement was 24380. A chemical structure of hydrophilic oligomer D is shown below.

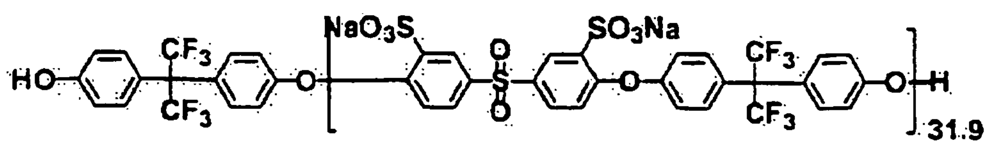

<Synthesis Example 11: Hydrophilic Oligomer E>

A hydrophilic oligomer E was obtained as in Synthesis Example 7, by placing 231.7 g (508.9 mmol) sodium 4,4'-dichlorobenzophenone-3,3-disulfonate, 97.04 g (520.7 mmol) BP, 66.23 g (624.9 mmol) sodium carbonate, 800 mL NMP, and 150 mL toluene in a 2000 mL side arm flask to which a nitrogen introduction pipe, an agitation blade, a Dean-Stark trap, and a thermometer were attached. The number-average molecular weight determined in $^{1}H$-NMR measurement was 23530. A chemical structure of hydrophilic oligomer E is shown below.

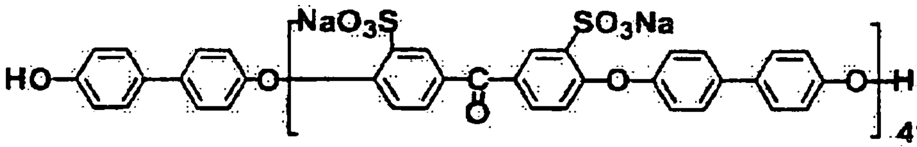

41.1

<Synthesis Example 12: Hydrophilic Oligomer H>

A hydrophilic oligomer H was obtained as in Synthesis Example 7, by placing 250.0 g (508.9 mmol) S-DCDPS, 106.18 g (570.2 mmol) BP, 69.50 g (655.8 mmol) sodium carbonate, 650 mL NMP, and 150 mL toluene in a 2000 mL side arm flask to which a nitrogen introduction pipe, an agitation blade, a Dean-Stark trap, and a thermometer were attached. The number-average molecular weight determined in $^1$H-NMR measurement was 3890. A chemical structure of hydrophilic oligomer H is shown below.

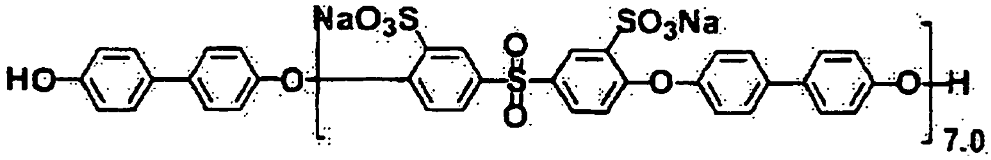

7.0

<Synthesis Example 13: Hydrophilic Oligomer I>

A hydrophilic oligomer I was obtained as in Synthesis Example 7, by placing 250.0 g (508.9 mmol) S-DCDPS, 167.72 g (523.5 mmol) 1,3-bis(4-hydroxyphenyl)adamantane, 63.80 g (602.0 mmol) sodium carbonate, 650 mL NMP, and 150 mL toluene in a 2000 mL side arm flask to which a nitrogen introduction pipe, an agitation blade, a Dean-Stark trap, and a thermometer were attached. The number-average molecular weight determined in $^1$H-NMR measurement was 24700. A chemical structure of hydrophilic oligomer I is shown below.

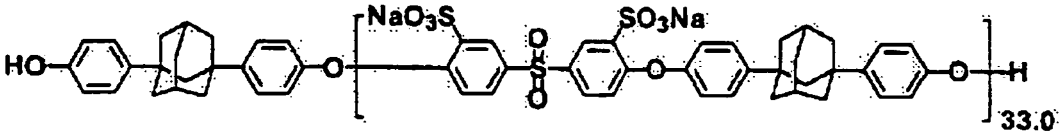

33.0

<Example 1>

Here, 45.00 g hydrophilic oligomer A, 24.61 g hydrophobic oligomer A, 0.28 g sodium carbonate, and 400 mL NMP were placed in a 1000 mL side arm flask to which a nitrogen introduction pipe, an agitation blade, a Dean-Stark trap, and a thermometer were attached, and stirred and dissolved in an oil bath at 50°C in a nitrogen current. Thereafter, heating to 110°C was performed to cause reaction for 10 hours. Thereafter, a temperature was cooled to a room temperature, and the solution was dropped into 3 L aqua pura, to solidify a copolymer. After the copolymer was washed with aqua pura three times, the copolymer was treated at 80°C for 16 hours while being immersed in aqua pura. Thereafter, the aqua pura was removed and washing with hot water was performed. Thereafter, washing with hot water was repeated again. Further, the copolymer from which water had been removed was immersed in a solvent mixture of 1000 mL isopropanol and 500 mL water at a room temperature for 16 hours, and then the copolymer was taken out and washed. The same operation was performed again. Thereafter, the copolymer was filtered out through filtration and dried under a reduced pressure at 120°C for 12 hours, to thereby obtain a sulfonic-acid-group-containing segmented block copolymer A. Copolymer A had logarithmic viscosity of 2.1 dL/g. A proton exchange membrane A was obtained from the obtained copolymer with proton exchange membrane fabrication method A. A chemical structure of copolymer A is shown below.

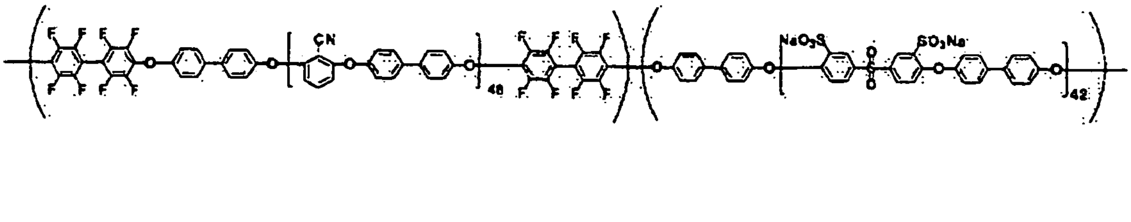

<Example 2>

A sulfonic-acid-group-containing segmented block copolymer B was obtained as in Example 1, by using 42.27 g hydrophilic oligomer B, 18.72 g hydrophobic oligomer A, 0.37 g sodium carbonate, and 350 mL NMP. Copolymer B had logarithmic viscosity of 2.6 dL/g. A proton exchange membrane B was obtained from the obtained copolymer with the method above. Copolymer B is identical to copolymer A in chemical structure, except that m is 52.

<Example 3 >

A sulfonic-acid-group-containing segmented block copolymer C was obtained as in Example 1, by using 42.27 g hydrophilic oligomer A, 18.62 g hydrophobic oligomer B, 0.46 g sodium carbonate, and 350 mL NMP. Copolymer C had logarithmic viscosity of 3.2 dL/g. A proton exchange membrane C was obtained from the obtained copolymer with the method above. Copolymer C is identical to copolymer A in chemical structure, except that n is 37.

<Example 4>

A sulfonic-acid-group-containing segmented block copolymer D was obtained as in Example 1, by using 42.27 g hydrophilic oligomer C, 22.75 g hydrophobic oligomer B, 0.56 g sodium carbonate, and 370 mL NMP. Copolymer D had logarithmic viscosity of 2.5 dL/g. A proton exchange membrane D was obtained from the obtained copolymer with the method above. Proton exchange membrane D had a methanol permeability coefficient of 0.016 (mmol • $m^{-1}$• $sec^{-1}$). A chemical structure of copolymer D is shown below.

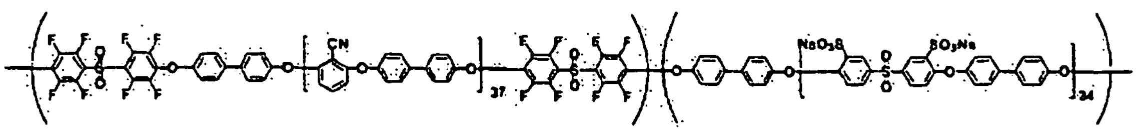

<Example 5>

A sulfonic-acid-group-containing segmented block copolymer E was obtained as in Example 1, by using 42.27 g hydrophilic oligomer D, 24.29 g hydrophobic oligomer C, 0.48 g sodium carbonate, and 380 mL NMP. Copolymer E had logarithmic viscosity of 2.1 dL/g. A proton exchange membrane E was obtained from the obtained copolymer with the method above. A chemical structure of copolymer E is shown below.

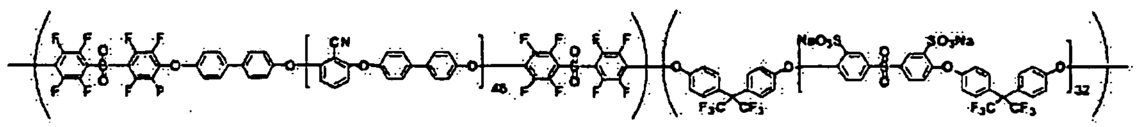

<Example 6>

A sulfonic-acid-group-containing segmented block copolymer F was obtained as in Example 1, by using 43.00 g hydrophilic oligomer A, 23.97 g hydrophobic oligomer D, 0.47 g sodium carbonate, and 380 mL NMP. Copolymer F had logarithmic viscosity of 3.1 dL/g. A proton exchange membrane F was obtained from the obtained copolymer with the method above. A chemical structure of copolymer F is shown below.

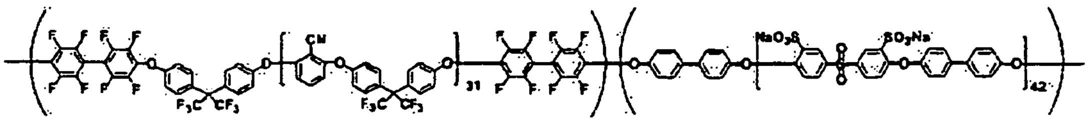

<Example 7>

A sulfonic-acid-group-containing segmented block copolymer M was obtained as in Example 1, by using 39.58 g hydrophilic oligomer E, 23.97 g hydrophobic oligomer D, 0.47 g sodium carbonate, and 380 mL NMP. Copolymer M had logarithmic viscosity of 2.1 dL/g. A proton exchange membrane M was obtained from the obtained copolymer with the method above. A chemical structure of copolymer M is shown below.

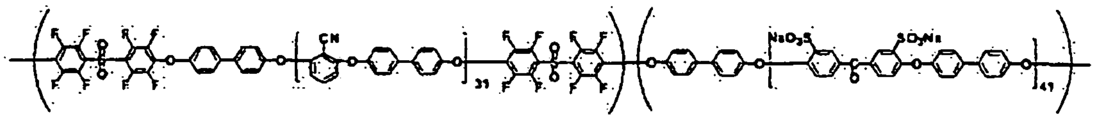

<Example 8>

A sulfonic-acid-group-containing segmented block copolymer K was obtained as in Example 1, by using 22.00 g hydrophilic oligomer H, 32.75 g hydrophobic oligomer H, 1.56 g sodium carbonate, and 390 mL NMP. Copolymer K had logarithmic viscosity of 2.4 dL/g. A proton exchange membrane K was obtained from the obtained copolymer with the method above. Proton exchange membrane K had a methanol permeability coefficient of 0.004 (mmol • $m^{-1}$ • $sec^{-1}$). Polymer K is identical to copolymer A in chemical structure, except that m is 7 and n is 18.5.

<Example 9>

A sulfonic-acid-group-containing segmented block copolymer L was obtained as in Example 1, by using 25.00 g hydrophilic oligomer I, 14.05 g hydrophobic oligomer A, 0.28 g sodium carbonate, and 270 mL NMP. Copolymer L had logarithmic viscosity of 2.1 dL/g. A proton exchange membrane L was obtained from the obtained copolymer with the method above. A chemical structure of copolymer L is shown below.

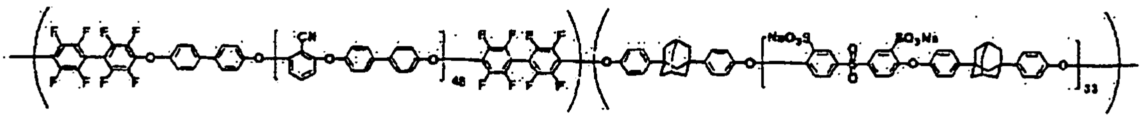

<Example 10>

A sulfonic-acid-group-containing segmented block copolymer N was obtained as in Example 1, by using 37.15 g hydrophilic oligomer A, 19.58 g hydrophobic oligomer I, 0.50 g sodium carbonate, and 340 mL NMP. Copolymer N had logarithmic viscosity of 2.8 dL/g. A proton exchange membrane N was obtained from the obtained copolymer with the method above. A chemical structure of copolymer N is shown below.

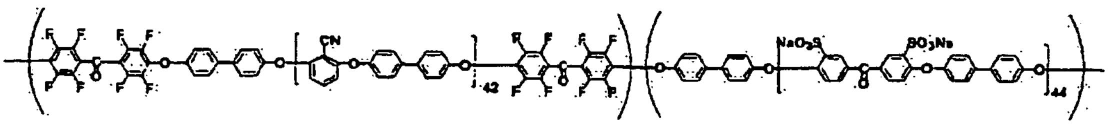

<Example 11>

A proton exchange membrane O was obtained from copolymer A, with proton exchange membrane fabrication method B.

<Comparative Example 1>

Hydrophobic oligomer E and a hydrophilic oligomer F having structures below respectively were synthesized as in Synthesis Examples above, except that a raw material to be used or an amount prepared was changed.

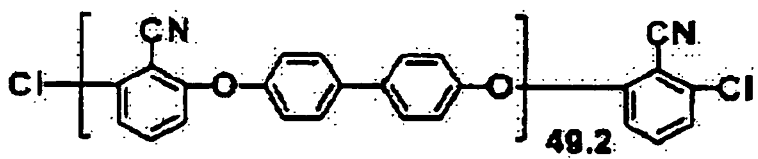

(Hydrophobic Oligomer E Number-Average Molecular Weight 14200)

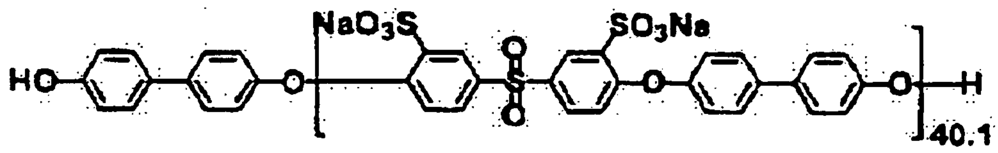

(Hydrophilic Oligomer F Number-Average Molecular Weight 24110)

A sulfonic-acid-group-containing segmented block copolymer G was obtained as in Example 1, by using 44.06 g hydrophilic oligomer F, 23.89 g hydrophobic oligomer E, 0.47 g sodium carbonate, and 380 mL NMP. Copolymer G had logarithmic viscosity of 1.5 dL/g. A proton exchange membrane G was obtained from the obtained copolymer with the method the same as in Examples, except that a reaction temperature was set to 160°C and a reaction time was set to 60 hours. A chemical structure of copolymer G is shown below.

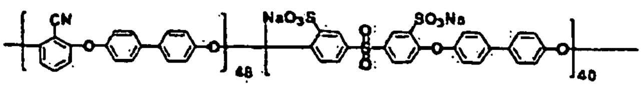

<Comparative Example 2>

A hydrophobic oligomer F having a structure below was synthesized as in Synthesis Examples above, except that a raw material to be used or an amount prepared was changed.

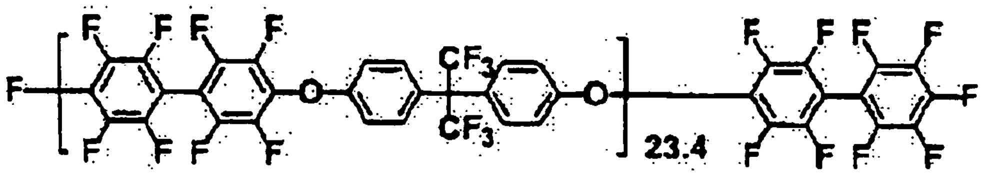

(Hydrophobic Oligomer F Number-Average Molecular Weight 15090)

A sulfonic-acid-group-containing segmented block copolymer H was obtained as in Example 1, by using 44.06 g hydrophilic oligomer F, 25.38 g hydrophobic oligomer F, 0.47 g sodium carbonate, and 380 mL NMP. Copolymer H had logarithmic viscosity of 2.5 dL/g. A proton exchange membrane H was obtained from the obtained copolymer with the method above. A chemical structure of copolymer H is shown below.

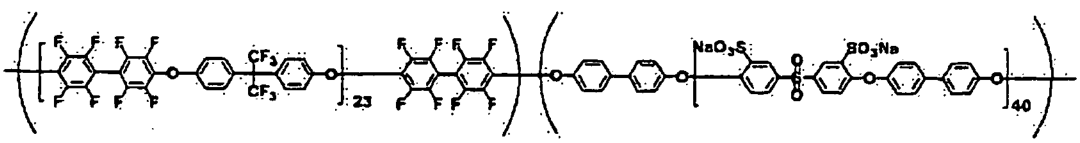

<Comparative Example 3>

A hydrophilic oligomer G having a structure below was synthesized as in Synthesis Examples above, except that a raw material to be used or an amount prepared was changed.

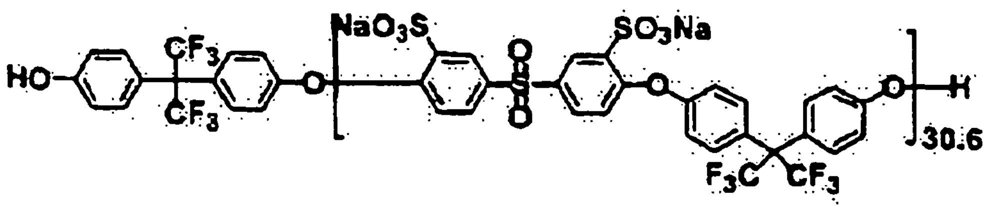

(Hydrophilic Oligomer G Number-Average Molecular Weight 23390)

A sulfonic-acid-group-containing segmented block copolymer I was obtained as in Example 1, by using 42.74 g hydrophilic oligomer G, 25.38 g hydrophobic oligomer F, 0.47 g sodium carbonate, and 380 mL NMP. Copolymer I had logarithmic viscosity of 1.9 dL/g. A proton exchange membrane I was obtained from the obtained copolymer with the method above. A chemical structure of copolymer I is shown below.

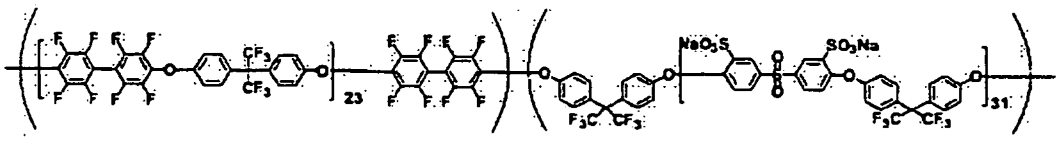

<Comparative Example 4>

A hydrophobic oligomer G having a structure below was synthesized as in Synthesis Examples above, except that a raw material to be used or an amount prepared was changed.

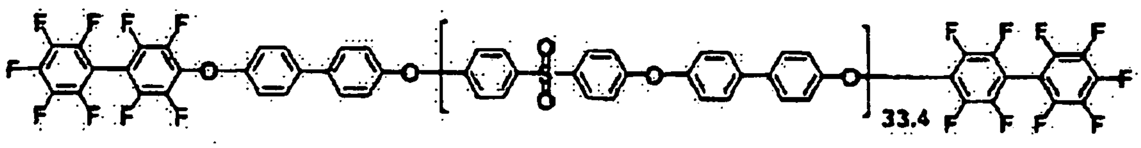

(Hydrophobic Oligomer G Number-Average Molecular Weight 14190)

A sulfonic-acid-group-containing block copolymer J was obtained as in Example 1, by using 44.06 g hydrophilic oligomer F, 23.87 g hydrophobic oligomer G, 0.47 g sodium carbonate, and 380 mL NMP. Copolymer J had logarithmic viscosity of 1.3 dL/g. A proton exchange membrane J was obtained from the obtained copolymer with the method above. A chemical structure of copolymer J is shown below.

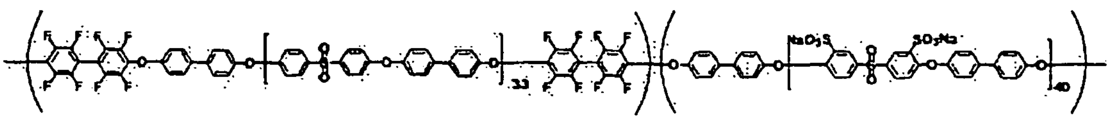

Table 1 and Table 2 show results of evaluation of the proton exchange membranes obtained in Examples and Comparative Examples.

Table 1

| | Proton Exchange Membrane | Copolymer | Oligomer/Number-Average Molecular Weight | | Thickness (μm) | Ion Exchange Capacity (meq/g) | Proton Conductivity (S/cm) | Swelling Property | |
|---|---|---|---|---|---|---|---|---|---|
| | | | Hydrophilic | Hydrophobic | | | | Water Absorption Ratio (wt%) | Area Swelling (%) |
| Example 1 | A | A | A/25560 | A/13880 | 32 | 1.59 | 0.27 | 85 | 10 |
| Example 2 | B | B | B/31340 | A/13880 | 31 | 1.95 | 0.41 | 108 | 13 |
| Example 3 | C | C | A/25560 | B/11260 | 32 | 1.86 | 0.35 | 102 | 12 |
| Example 4 | D | D | C/20920 | B/11260 | 32 | 1.31 | 0.18 | 70 | 9 |
| Example 5 | E | E | D/24380 | C/14010 | 32 | 1.72 | 0.30 | 95 | 12 |
| Example 6 | F | F | A/25560 | D/14250 | 31 | 1.81 | 0.33 | 98 | 13 |
| Comparative Example 1 | G | G | F/24110 | E/14200 | 32 | 1.89 | 0.24 | 95 | 35 |
| Comparative Example 2 | H | H | F/24110 | F/15090 | 32 | 1.63 | 0.28 | 137 | 19 |
| Comparative Example 3 | I | I | G/23390 | F/15090 | 32 | 1.72 | 0.30 | 138 | 22 |
| Comparative Example 4 | J | J | F/24110 | G/14190 | 32 | 1.67 | 0.28 | 141 | 21 |

Table 2

| | Proton Exchange Membrane | Copolymer | Oligomer/Number-Average Molecular Weight | | Thickness (μm) | Ion Exchange Capacity (meq/g) | Proton Conductivity (S/cm) | Swelling Property | |
|---|---|---|---|---|---|---|---|---|---|
| | | | Hydrophilic | Hydrophobic | | | | Water Absorption Ratio (wt %) | Area Swelling (%) |
| Example 7 | M | M | E/23530 | D/14250 | 29 | 1.79 | 0.29 | 81 | 8 |
| Example 8 | K | K | H/3890 | H/5810 | 28 | 0.87 | 0.05 | 38 | 5 |
| Example 9 | L | L | I/24700 | A/13880 | 29 | 1.42 | 0.20 | 67 | 7 |
| Example 10 | N | N | A/25560 | I/13050 | 27 | 1.82 | 0.30 | 83 | 8 |
| Example 11 | O | A | A/25560 | A/13880 | 15 | 1.61 | 0.28 | 84 | 9 |
| Comparative Example 1 | G | G | F/24110 | E/14200 | 32 | 1.89 | 0.24 | 95 | 35 |
| Comparative Example 2 | H | H | F/24110 | F/15090 | 32 | 1.63 | 0.28 | 137 | 19 |
| Comparative Example 3 | I | I | G/23390 | F/15090 | 32 | 1.72 | 0.30 | 138 | 22 |
| Comparalive Example 4 | J | J | F/24110 | G/14190 | 32 | 1.67 | 0.28 | 141 | 21 |

<Example 12: Addition of Fibrous Filler>

A proton exchange membrane was obtained as in Example 1, except for adding 5 weight % potassium hexatitanate fibers (manufactured by Otsuka Chemical Co., Ltd.; trade name: TISMO N; average fiber diameter of 0.3 to 0.6 μm; and average fiber length of 10 to 20 μm) to the copolymer obtained in Synthesis Example 1. Proton conductivity and a water absorption ratio of the obtained membrane were equivalent to those in Example 1, however, an area swelling ratio was as low as 7%, that is, swelling property was improved.

<Example 13 : Evaluation of Power Generation by Direct Methanol Fuel Cell (DMFC) Including Proton Exchange Membrane D Fabricated in Example 4>

A small amount of ultrapure water and isopropyl alcohol were added so as to wet Pt/Ru catalyst carrying carbon (TEC61E54 of Tanaka Kikinzoku Kogyo K. K.), and thereafter a solution of 20 % Nafion® manufactured by DuPont (product number: SE-20192) was added thereto such that a weight ratio between Pt/Ru catalyst carrying carbon and Nafion® was 2.5:1, followed by stirring. An anode catalyst paste was thus prepared. This catalyst paste was applied by screen printing to carbon paper TGPH-060 manufactured by Toray Industries, Inc. and serving as a gas diffusion layer, such that an amount of attached platinum is 2 mg/cm$^2$, followed by drying. Carbon paper with anode electrode catalyst layer was thus fabricated. In addition, cathode catalyst paste was prepared by adding a small amount of ultrapure water and isopropyl alcohol so as to wet Pt catalyst carrying carbon (TEC10V40E of Tanaka Kikinzoku Kogyo K. K.), and thereafter adding a solution of 20 % Nafion® manufactured by DuPont (product number: SE-20192) thereto such that a weight ratio between Pt catalyst carrying carbon and Nafion® was 2.5:1, followed by stirring. This catalyst paste was applied to carbon paper TGPH-060 manufactured by Toray Industries, Inc. and subjected to water-repellent treatment, such that an amount of attached platinum was 1 mg/cm$^2$, followed by drying. Carbon paper with cathode electrode catalyst layer was thus fabricated. A membrane sample was sandwiched between these two types of carbon paper with electrode catalyst layer above such that an electrode catalyst layer was in contact with the membrane sample, that was pressurized and heated for 3 minutes at 200°C at 6 MPa with hot pressing. A membrane electrode assembly was thus fabricated. This assembly was incorporated in a test fuel cell FC25-02SP manufactured by Electrochem Inc., and power generation tests were conducted using a fuel cell power generation tester (manufactured by Toyo Corporation). In power generation, at a cell temperature of 70°C, 1 mol/L methanol aqueous solution (1.5 mL/min) adjusted to 70°C and high-purity air gas (80 mL/min) adjusted to 70°C were supplied to the anode and the cathode respectively, and an output voltage at current density of 0.2 A/cm$^2$ was measured. Then, an output voltage of 0.29 V was exhibited.

<Comparative Example 5: Evaluation of Power Generation by DMFC Including Commercially Available Proton Exchange Membrane>

Power generation was evaluated as in Example 13, except that proton exchange membrane Nafion® (trade name) 117 manufactured by DuPont was employed and a temperature for pressing was set to 150°C. Nafion® (trade name) 117 had a methanol permeability coefficient of 0.69 (mmol •m$^{-1}$ •sec$^{-1}$). An output voltage at current density of 0.2 A/cm$^2$ was measured, however, the output voltage was merely 0.19 V, that was worse than in Example 12.

<Example 14: Evaluation of Power Generation by Fuel Cell (PEFC) Including Proton Exchange Membrane in Example 1 and Using Hydrogen as Fuel>

Catalyst paste was prepared by adding commercially available 40 % Pt catalyst carrying carbon (catalyst for fuel cell TEC10V40E of Tanaka Kikinzoku Kogyo K. K.) and a small amount of ultrapure water and isopropanol to a solution of 20 % Nafion® (trade name) manufactured by DuPont and thereafter stirring the solution until the solution becomes homogeneous. This catalyst paste was evenly applied to carbon paper TGPH-060 manufactured by Toray Industries, Inc. such that an amount of attached platinum was 0.5 mg/cm$^2$, followed by drying. A gas diffusion layer with electrode catalyst layer was thus fabricated. A polymer electrolyte membrane was sandwiched between the gas diffusion layers with electrode catalyst layer above such that an electrode catalyst layer was in contact with the membrane, that was pressurized and heated for 3 minutes at 200°C at 8 MPa with hot pressing. A membrane electrode assembly was thus fabricated. Power generation characteristics were evaluated by incorporating this assembly in a test fuel cell FC25-02SP manufactured by Electrochem Inc., and supplying hydrogen and air humidified at 75°C to the anode and the cathode respectively, at a cell temperature of 80°C. An output voltage at current density of 0.5 A/cm$^2$ immediately after start was adopted as an initial output. In addition, for evaluating durability, a continuous operation was performed under the conditions above with 2000 hours being set as the upper limit, while an open circuit voltage was measured three times in 1 hour. The time when the open circuit voltage was lower than the value immediately after start by 10 % or more was assumed as an endurance time. The initial voltage in PEFC power generation evaluation where the proton

exchange membrane in Example 1 was used was 0.71 V, and voltage lowering was 3 % even after lapse of 2000 hours in the continuous operation.

<Comparative Example 6>

Using the proton exchange membrane in Comparative Example 2, PEFC power generation was evaluated as in Example 14. Output was lowered by 10 % in 1576 hours, that was worse than in Example 14.

Synthesis of the hydrophilic and hydrophobic oligomers according to the second invention of the present application will be shown below.

<Synthesis Example 14: Hydrophobic Oligomer J>

Here, 65.00 g (376.8 mmol) 2,6-dichlorobenzonitrile (abbreviated as DCBN), 71.62 g (384.3 mmol) 4,4'-biphenol (abbreviated as BP), 58.43 g (422.8 mmol) potassium carbonate, and 950 mL NMP were placed in a 2000 mL side arm flask to which a nitrogen introduction pipe, an agitation blade, a Dean-Stark trap, and a thermometer were attached, and they were heated in a nitrogen current while being stirred in an oil bath. A temperature was raised to 200°C and stirring was carried out for 4 hours. After the reaction solution was cooled to a room temperature, it was introduced in 3000 mL aqua pura so as to solidify an oligomer. Further, washing with aqua pura was performed three times so as to remove NMP and inorganic salt. The oligomer washed with water was filtered out, followed by drying under a reduced pressure at 120°C for 16 hours, to thereby obtain a hydrophobic oligomer J (Chemical Formula 47). The number-average molecular weight determined in $^1$H-NMR measurement was 10572.

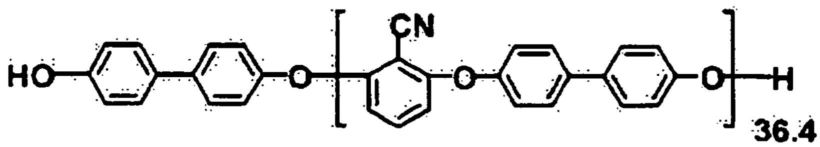

<Synthesis Example 15: Hydrophobic Oligomer K>

A hydrophobic oligomer K (Chemical Formula 48) was obtained with an operation the same as in Synthesis Example 14, by placing 30.00 g (173.9 mmol) DCBN, 32.87 g (176.4 mmol) BP, 29.25 g (211.7 mmol) potassium carbonate, and 440 mL NMP in a 1000 mL side arm flask to which a nitrogen introduction pipe, an agitation blade, a Dean-Stark trap, and a thermometer were attached. The number-average molecular weight determined in $^1$H-NMR measurement was 12169.

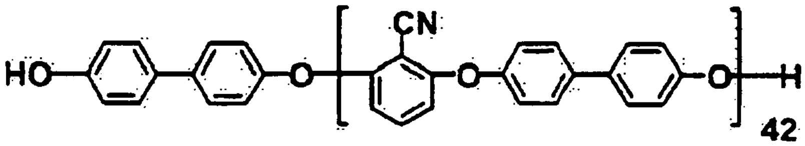

<Synthesis Example 16: Hydrophobic Oligomer L>

A hydrophobic oligomer L (Chemical Formula 49) was obtained with an operation the same as in Synthesis Example 14, by placing 29.49 g (171.5 mmol) DCBN, 59.35 g (176.5 mmol) 2,2-bis(4-hydroxyphenyl)hexafluoropropane (abbreviated as BFP), 28.06 g (203.0 mmol) potassium carbonate, 700 mL NMP, and 150 mL toluene in a 1000 mL side arm flask to which a nitrogen introduction pipe, an agitation blade, a Dean-Stark trap, and a thermometer were attached. The number-average molecular weight determined in $^1$H-NMR measurement was 13620.

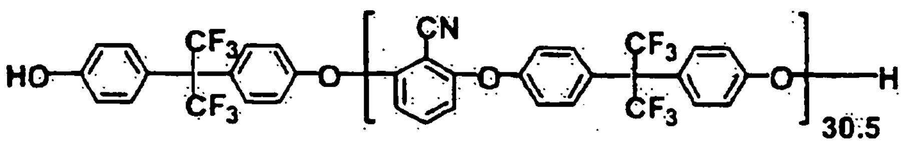

<Synthesis Example 17: Hydrophilic Oligomer M>

Here, 200.0 g (407.1 mmol) disodium-3,3'-disulfonate-4,4'-dichlorodiphenylsulfone (abbreviated as S-DCDPS), 77.41 g (415.4 mmol) BP, 63.2 g (457.0 mmol) potassium carbonate, and 720 mL NMP were placed in a 2000 mL side arm flask to which a nitrogen introduction pipe, an agitation blade, a Dean-Stark trap, and a thermometer were attached, and they were heated in a nitrogen current while being stirred in an oil bath. Thereafter, a temperature was raised to 200°C and heating for 18 hours was performed. In succession, 300 mL NMP was introduced and cooling to a room temperature while stirring was carried out. The obtained solution was aspirated and filtered through a 25G2 glass filter, and the obtained solution was dropped into 3L acetone to solidify an oligomer. The oligomer was further washed with acetone three times and thereafter filtered out, followed by drying under a reduced pressure. A hydrophilic oligomer M (Chemical Formula 50) was thus obtained. The number-average molecular weight determined in $^1$H-NMR measurement was 24361.

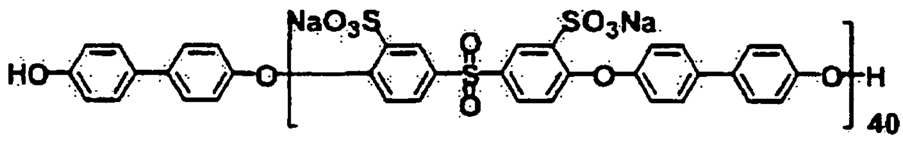

<Synthesis Example 18: Hydrophilic Oligomer N>

A hydrophilic oligomer N (Chemical Formula 51) was obtained as in Synthesis Example 17, by placing 200.0 g (407.1 mmol) S-DCDPS, 77.7 g (416.8 mmol) BP, 63.37 g (458.5 mmol) potassium carbonate, and 720 mL NMP in a 2000 mL side arm flask to which a nitrogen introduction pipe, an agitation blade, a Dean-Stark trap, and a thermometer were attached. The number-average molecular weight determined in $^1$H-NMR measurement was 20920.

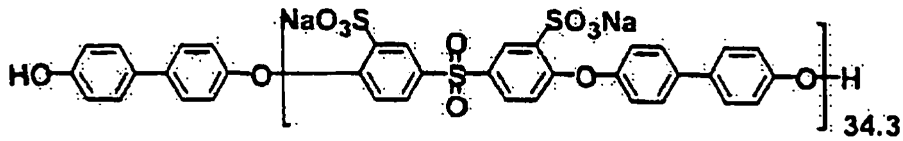

<Synthesis Example 19: Hydrophilic Oligomer O>

A hydrophilic oligomer O (Chemical Formula 52) was obtained as in Synthesis Example 17, by placing 30.0 g (61.1 mmol) S-DCDPS, 17.96 g (96.3 mmol) BP, 5.67 g (32.9 mmol) DCBN, 14.65 g (106.0 mmol) potassium carbonate, and 140 mL NMP in a 200 mL side arm flask to which a nitrogen introduction pipe, an agitation blade, a Dean-Stark trap, and a thermometer were attached. The number-average molecular weight determined in $^1$H-NMR measurement was 19898.

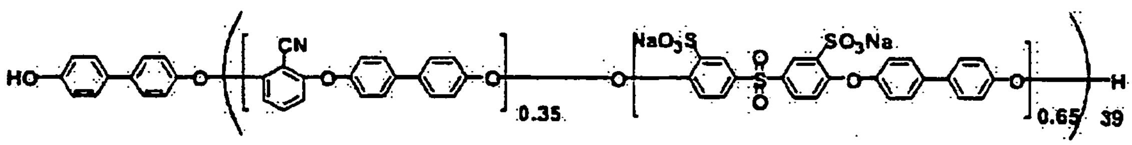

<Synthesis Example 20: Hydrophilic Oligomer P>

A hydrophilic oligomer P (Chemical Formula 53) was obtained as in Synthesis Example 17, by placing 250.0 g (508.9 mmol) S-DCDPS, 175.09 g (523.0 mmol) BFP, 66.23 g (624.9 mmol) sodium carbonate, 800 mL NMP, and 150 mL toluene in a 2000 mL side arm flask to which a nitrogen introduction pipe, an agitation blade, a Dean-Stark trap, and a thermometer were attached. The number-average molecular weight determined in $^1$H-NMR measurement was 243 80.

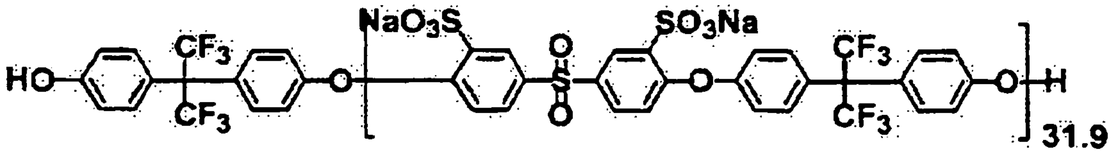

<Example 15>

Here, 7.00 g hydrophilic oligomer M, 4.53 g hydrophobic oligomer J, and 110 mL NMP were placed in a 200 mL side arm flask to which a nitrogen introduction pipe, an agitation blade, a Dean-Stark trap, and a thermometer were attached, and stirred and dissolved in an oil bath at 70°C in a nitrogen current. Thereafter, 0.24 g decafluorobiphenyl (DFB) and 0.11 g potassium carbonate were added, and heating to 110°C was performed to cause reaction for 10 hours. Solid content concentration in the reaction solution was set to 10 weight %. Thereafter, a temperature was cooled to a room temperature, and the solution was dropped into 1 L aqua pura, to solidify a copolymer. After the copolymer was washed with aqua pura three times, the copolymer was treated at 80°C for 5 hours while being immersed in aqua pura. Further, the copolymer from which water had been removed was immersed in a solvent mixture of 1000 mL isopropanol and 500 mL water at a room temperature for 16 hours, and the copolymer was taken out and washed. The same operation was performed again. Thereafter, the copolymer was filtered out through filtration and dried under a reduced pressure at 120°C for 12 hours, to thereby obtain a sulfonic-acid-group-containing segmented block copolymer K (Chemical Formula 54). Copolymer K had logarithmic viscosity of 3.1 dL/g. A proton exchange membrane K was obtained from the obtained copolymer with the method above.

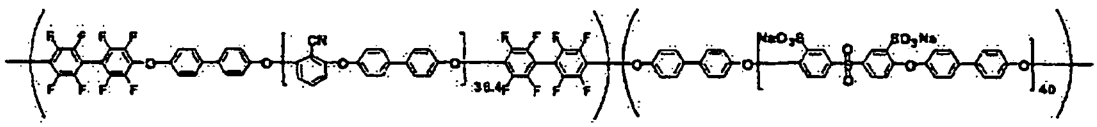

<Example 16>

A sulfonic-acid-group-containing segmented block copolymer L (Chemical Formula 55) was obtained as in Example 1, by using 7.00 g hydrophilic oligomer M, 4.95 g hydrophobic oligomer K, 0.12 g potassium carbonate, 0.27 g DFB, and 110 mL NMP. Copolymer L had logarithmic viscosity of 3.4 dL/g. A proton exchange membrane L was obtained from the obtained copolymer with the method above. Copolymer L is identical to copolymer K in chemical structure, except for difference in a degree of polymerization of oligomer.

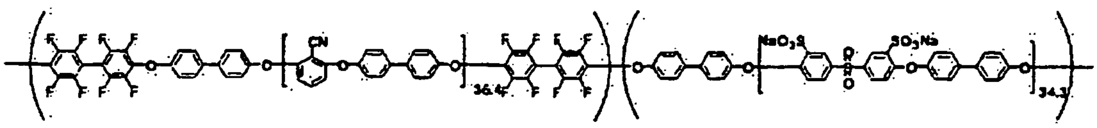

<Example 17>

A sulfonic-acid-group-containing segmented block copolymer M (Chemical Formula 56) was obtained as in Example 14, by using 7.00 g hydrophilic oligomer N, 4.5 g hydrophobic oligomer J, 0.12 g potassium carbonate, 0.22 g DFB, and 111 mL NMP. Copolymer M had logarithmic viscosity of 2.9 dL/g. A proton exchange membrane M was obtained from the obtained copolymer with the method above. Copolymer M is identical to copolymer K in chemical structure, except for difference in a degree of polymerization of oligomer.

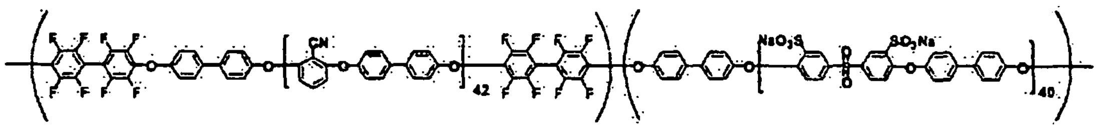

<Example 18>

A sulfonic-acid-group-containing segmented block copolymer N (Chemical Formula 57) was obtained as in Example 14, by using 7.00 g hydrophilic oligomer N, 4.47 g hydrophobic oligomer K, 0.11 g potassium carbonate, 0.24

g DFB, and 110 mL NMP. Copolymer N had logarithmic viscosity of 2.7 dL/g. A proton exchange membrane N was obtained from the obtained copolymer with the method above. Copolymer N is identical to copolymer K in chemical structure, except for difference in a degree of polymerization of oligomer.

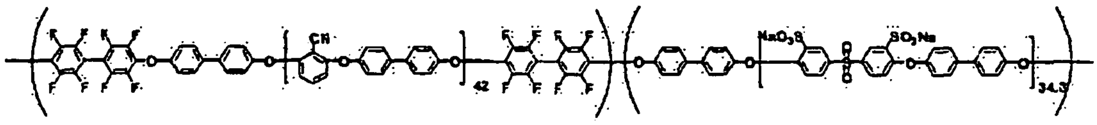

<Example 19>

A sulfonic-acid-group-containing segmented block copolymer O (Chemical Formula 58) was obtained as in Example 14, by using 7.00 g hydrophilic oligomer M, 4.53 g hydrophobic oligomer J, 0.11 g potassium carbonate, 0.13 g hexafluorobenzene (HB), and 110 mL NMP. Copolymer O had logarithmic viscosity of 2.9 dL/g. A proton exchange membrane O was obtained from the obtained copolymer with the method above. Copolymer O is identical to copolymer K in chemical structure, except that HB was employed as the chain extension agent.

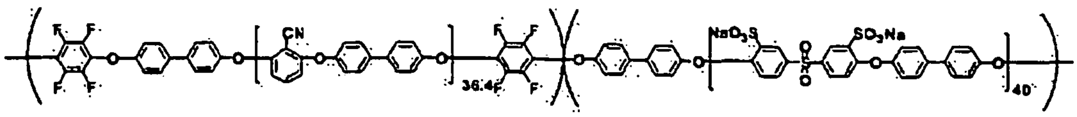

<Example 20>

A sulfonic-acid-group-containing segmented block copolymer P (Chemical Formula 59) was obtained as in Example 14, by using 7.00 g hydrophilic oligomer O, 4.47 g hydrophobic oligomer J, 0.12 g potassium carbonate, 0.26 g DFB, and 110 mL NMP. Copolymer P had logarithmic viscosity of 3.4 dL/g. A proton exchange membrane P was obtained from the obtained copolymer with the method above. A chemical structure of copolymer P includes a benzonitrile structure also in a hydrophilic segment, as a random structure.

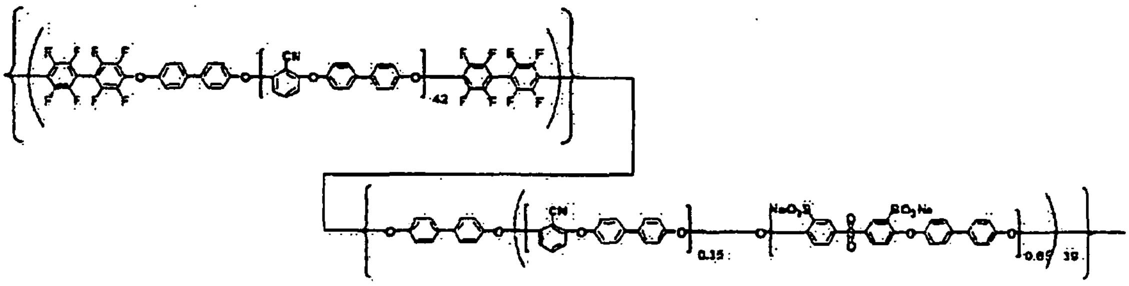

<Example 21>

A sulfonic-acid-group-containing segmented block copolymer Q (Chemical Formula 60) was obtained as in Example 14, by using 7.00 g hydrophilic oligomer P, 4.91 g hydrophobic oligomer L, 0.10 g potassium carbonate, 0.26 g DFB, and 110 mL NMP. Copolymer Q had logarithmic viscosity of 2.5 dL/g. A proton exchange membrane Q was obtained from the obtained copolymer with the method above.

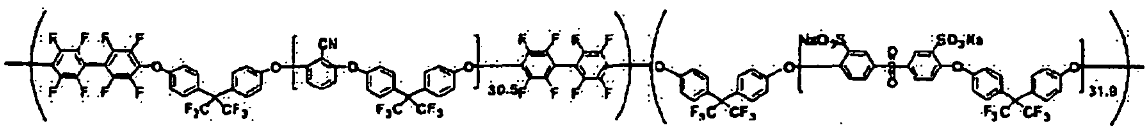

<Example 22>

A hydrophobic oligomer M was polymerized at a preparation ratio the same as in Synthesis Example 14, with 317 ml NMP. In addition, a hydrophilic oligomer Q was polymerized at a preparation ratio the same as in Synthesis

Example 17, with 200 ml NMP. These polymerization solutions were mixed and stirred for 1 hour. Thereafter, 1.68 g DFB was added, and heating to 110°C was carried out for reaction for 10 hours. Purification was performed as in Example 14, to thereby obtain a sulfonic-acid-group-containing segmented block copolymer R (Chemical Formula 61). Copolymer R had logarithmic viscosity of 3.5 dL/g. A proton exchange membrane R was obtained from the obtained copolymer with the method above.

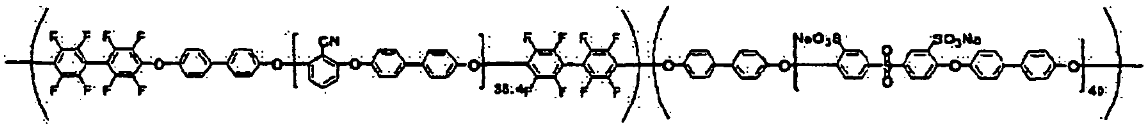

<Comparative Example 7>

Hydrophobic oligomer M having Cl terminal end was synthesized as in Synthesis Example 14, by setting a DCBN preparation amount to be excessive. The number-average molecular weight of hydrophobic oligomer M being 14200. Hydrophilic oligomer Q having OH terminal end was synthesized with the method the same as in Synthesis Example 17, except for change in a preparation amount. Hydrophilic oligomer Q had the number-average molecular weight of 24110.

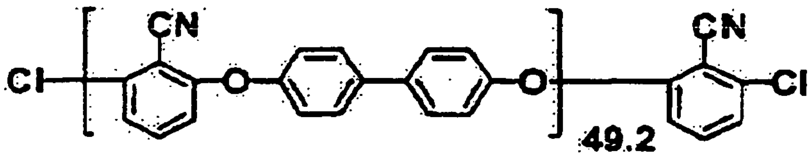

(Hydrophobic Oligomer M Number-Average Molecular Weight 14200)

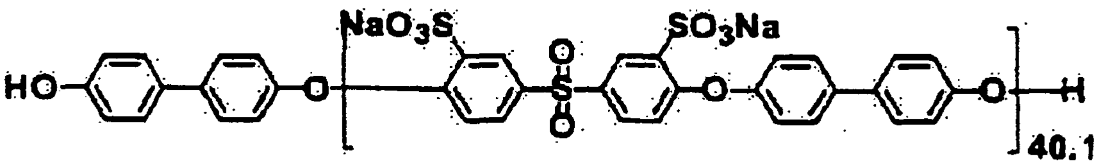

(Hydrophilic Oligomer Q Number-Average Molecular Weight 24110)

A sulfonic-acid-group-containing segmented block copolymer S (Chemical Formula 63) was obtained as in Example 14 except for using 44.06 g hydrophilic oligomer Q, 23.89 g hydrophobic oligomer M, 0.47 g potassium carbonate, and 380 mL NMP and not using a chain extension agent. Copolymer S had logarithmic viscosity of 1.5 dL/g. A proton exchange membrane S was obtained from the obtained copolymer with the method the same as in Examples, except that a reaction temperature was set to 160°C and a reaction time was set to 60 hours.

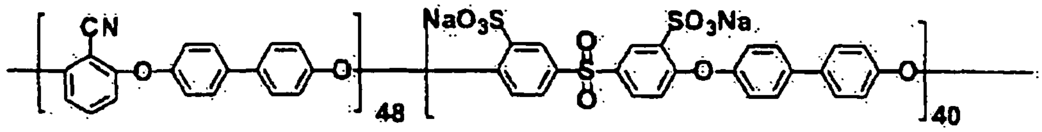

<Comparative Example 8>

A hydrophobic oligomer N (Chemical Formula 64) was synthesized as in Synthesis Example 14, except that 4,4'-dichlorodiphenyl sulfone (DCDPS) was employed as a monomer instead of DCBN and preparation was changed. Hydrophobic oligomer N had the number-average molecular weight of 13560.

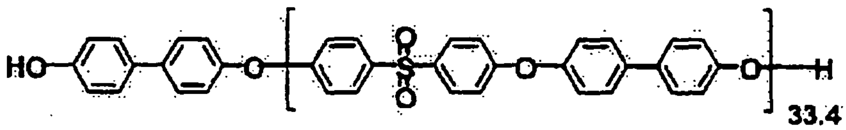

A sulfonic-acid-group-containing segmented block copolymer T (Chemical Formula 65) was obtained with the method the same as in Example 14, except that a preparation amount was changed, a hydrophobic oligomer to be used was changed from J to N, and a hydrophilic oligomer was changed from M to Q. Copolymer T had logarithmic viscosity of 2.3 dL/g. A proton exchange membrane T was obtained from the obtained copolymer with the method the same as in Examples.

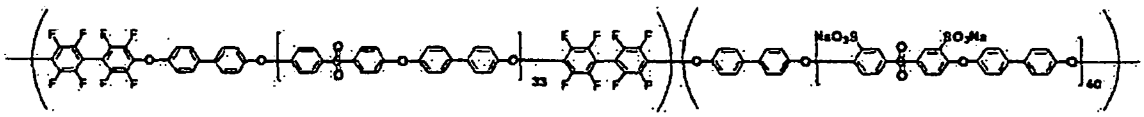

Table 3 shows results of evaluation of proton exchange membranes obtained in Examples and Comparative Examples.

Table 3

| | Proton Exchange Membrane | Copolyin er | Oligomer/Number-Average Molecular Weight | | Thickness ($\mu$m) | Ion Exchange Capacity (meq/g) | Proton Conductivity (S/cm) | Swelling Property | |
|---|---|---|---|---|---|---|---|---|---|
| | | | Hydrophilic | Hydrophobic | | | | Water Absorption Ratio (wt %) | Area Swelling (%) |
| Example 15 | K | K | M/24361 | J/10572 | 32 | 1.35 | 0.17 | 71 | 5 |
| Example 16 | L | L | M/24361 | K/12169 | 31 | 1.55 | 0.26 | 81 | 8 |
| Example 17 | M | M | N/20920 | J/10572 | 29 | 1.45 | 0.27 | 78 | 6 |
| Example 18 | N | N | N/20920 | K/12169 | 32 | 1.58 | 0.28 | 70 | 6 |
| Example 19 | O | O | M/24361 | J/10572 | 32 | 1.43 | 0.21 | 77 | 8 |
| Example 20 | P | P | O/19898 | J/10572 | 28 | 1.38 | 0.19 | 69 | 9 |
| Example 21 | Q | Q | P/24380 | L/13620 | 32 | 1.65 | 0.24 | 82 | 12 |
| Example 22 | R | R | Q | M | 30 | 1.59 | 0.23 | 73 | 7 |
| Comparative Example 7 | S | S | Q/24110 | M/14200 | 32 | 1.89 | 0.24 | 95 | 35 |
| Comparative Example 8 | T | T | Q/24110 | N/13560 | 30 | 1.60 | 0.23 | 79 | 14 |

<Example 23: Evaluation of Power Generation by Fuel Cell (PEFC) Including Proton Exchange Membrane in Example 17 and Using Hydrogen as Fuel>

Catalyst paste was prepared by adding commercially available 40 % Pt catalyst carrying carbon (catalyst for fuel cell TEC10V40E of Tanaka Kikinzoku Kogyo K. K.) and a small amount of ultrapure water and isopropanol to a solution of 20 % Nafion® (trade name) manufactured by DuPont and thereafter stirring the solution until the solution becomes homogeneous. This catalyst paste was evenly applied to carbon paper TGPH-060 manufactured by Toray Industries, Inc. such that an amount of attached platinum was 0.5 mg/cm$^2$, followed by drying. A gas diffusion layer with electrode catalyst layer was thus fabricated. A polymer electrolyte membrane was sandwiched between the gas diffusion layers with electrode catalyst layer above such that an electrode catalyst layer was in contact with the membrane, that was pressurized and heated for 3 minutes at 200°C at 8 MPa with hot pressing. A membrane electrode assembly was thus fabricated. Power generation characteristics were evaluated by incorporating this assembly in a test fuel cell FC25-02SP manufactured by Electrochem Inc., and supplying hydrogen and air humidified at 75°C to the anode and the cathode respectively, at a cell temperature of 80°C. An output voltage at current density of 0.5 A/cm$^2$ immediately after start was adopted as an initial output. In addition, for evaluating durability, a continuous operation was performed under the conditions above with 2000 hours being set as the upper limit, while an open circuit voltage was measured three times in 1 hour. The time when the open circuit voltage was lower than the value immediately after start by 10 % or more was assumed as an endurance time. The initial voltage in PEFC power generation evaluation where the proton exchange membrane in Example 16 was used was 0.73 V, and voltage lowering was 4 % even after lapse of 2000 hours in the continuous operation. Namely, an endurance time was not shorter than 2000 hours.

<Comparative Example 9>

Using the proton exchange membrane in Comparative Example 7, PEFC power generation was evaluated as in Example 23. Output was lowered by 10 % in 1670 hours and an endurance time was 1670 hours, that was worse than in Example 23.

INDUSTRIAL APPLICABILITY

It can be seen from the foregoing that the proton exchange membrane according to the present invention is a proton exchange membrane lower in area swelling and excellent in dimension stability in spite of proton conductivity equal to or greater than that of the proton exchange membranes in Comparative Examples different in structure. Such an advantage may be derived from a benzonitrile structure in a copolymer forming the proton exchange membrane according to the present invention. The sulfonic-acid-group-containing segmented block copolymer according to the present invention can be used for a proton exchange membrane for a fuel cell capable of exhibiting high output and high durability, and can greatly contribute to industrial development.

## Claims

1. A block copolymer comprising one or more hydrophilic segment and one or more hydrophobic segment in a molecule, and having a structure expressed by Chemical Formula 1 below

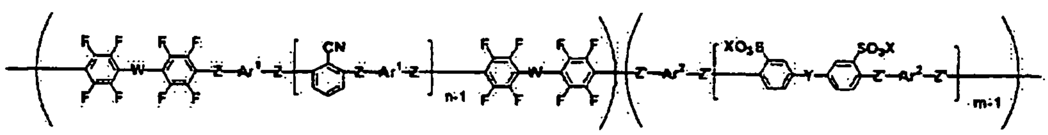

(Chemical Formula 1)

(where X represents H or a univalent cation, Y represents sulfonyl group or carbonyl group, each of Z and Z' independently represents any of O and S atoms, W represents one or more group selected from the group consisting of direct bond between benzenes, sulfone group and carbonyl group, each of Ar$^1$ and Ar$^2$ independently represents divalent aromatic group, and each of n and m independently represents an integer from 2 to 100), **characterized in that**
logarithmic viscosity measured at 30°C, of a 0.5 g/dL solution containing N-methyl-2-pyrrolidone as a solvent is in a range from 0.5 to 5.0 dL/g.

2. The block copolymer containing sulfonic acid group according to claim 1, **characterized in that** $Ar^2$ has a structure represented by a structure expressed by Chemical Formula 2 below

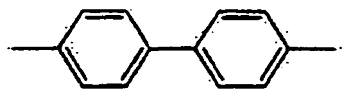

(Chemical Formula 2).

3. The block copolymer containing sulfonic acid group according to claim 1, **characterized in that** $Ar^1$ has a structure represented by a structure expressed by Chemical Formula 2 above.

4. The block copolymer containing sulfonic acid group according to claim 1, **characterized in that** both of $Ar^1$ and $Ar^2$ have a structure represented by a structure expressed by Chemical Formula 2 above.

5. The block copolymer containing sulfonic acid group according to claims 1 to 4, **characterized in that** at least any of Z and Z' represents O atom.

6. The block copolymer containing sulfonic acid group according to claims 1 to 4, **characterized in that** both of Z and Z' represent O atom.

7. The block copolymer containing sulfonic acid group according to claims 1 to 6, **characterized in that** W represents direct bond between benzene rings.

8. The sulfonic-acid-group-containing segmented block copolymer according to claims 1 to 7, **characterized in that** n is in a range from 10 to 70.

9. The sulfonic-acid-group-containing segmented block copolymer according to claim 8, **characterized in that** m is 3 or greater and less than 10.

10. The sulfonic-acid-group-containing segmented block copolymer according to claim 9, **characterized in that** m/n is in a range from 0.4 to 1.0.

11. The sulfonic-acid-group-containing segmented block copolymer according to claim 8, **characterized in that** m is 10 or greater and less than 70.

12. The sulfonic-acid-group-containing segmented block copolymer according to claim 11, **characterized in that** m/n is in a range from 0.4 to 1.5.

13. A method of synthesizing a block copolymer by causing a hydrophilic oligomer, a hydrophobic oligomer and an aromatic-based chain extension agent having two or more halogens in a molecule to react to one another, **characterized in that**
the hydrophobic oligomer contains in a molecule, a structure expressed by Chemical Formula 7 below

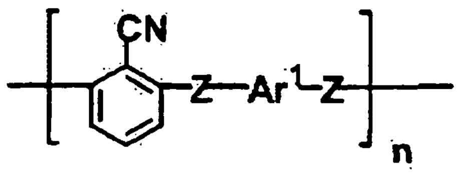

(Chemical Formula 7)

(where Z independently represents any of O and S atoms, $Ar^1$ represents divalent aromatic group, and n represents an integer from 2 to 100), and
the hydrophilic oligomer contains in a molecule, a structure expressed by Chemical Formula 8 below

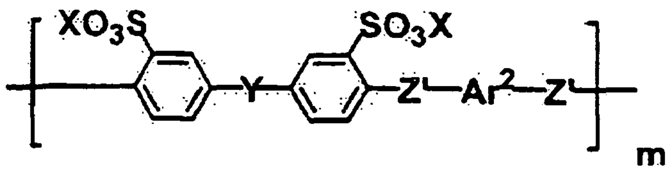

(Chemical Formula 8)

(where X represents H or a univalent cation, Y represents sulfonyl group or carbonyl group, Z' represents any of O and S atoms, $Ar^2$ represents divalent aromatic group, and m represents an integer from 2 to 100).

**14.** The method of synthesizing a block copolymer according to claim 13, **characterized in that** each of terminal ends of the hydrophilic oligomer and the hydrophobic oligomer is OH group.

**15.** The method of synthesizing a block copolymer according to claim 13, **characterized in that** each of terminal ends of the hydrophilic oligomer and the hydrophobic oligomer is SH group.

**16.** The method of synthesizing a block copolymer according to claims 13 to 15, **characterized in that** halogen of the aromatic-based chain extension agent is fluorine.

**17.** A molded product made of the block copolymer according to claims 1 to 12 or the block copolymer obtained with the synthesizing method according to claims 13 to 16.

**18.** A proton exchange membrane for a fuel cell made of the block copolymer according to claims 1 to 12 or the block copolymer obtained with the synthesizing method according to claims 13 to 16.

**19.** A block copolymer composition composed of the block copolymer according to claims 1 to 12 or the block copolymer obtained with the synthesizing method according to claims 13 to 16.

**20.** A molded product obtained from the block copolymer composition according to claim 19.

**21.** A proton exchange membrane for a fuel cell obtained from the block copolymer composition according to claim 19.

**22.** The proton exchange membrane for a fuel cell according to claim 19, **characterized by** including a fibrous substance.

**23.** A fuel cell proton exchange membrane electrode assembly including the proton exchange membrane for a fuel cell according to any of claims 18, 21 and 22.

**24.** A fuel cell including the fuel cell proton exchange membrane electrode assembly according to claim 23.

**Patentansprüche**

**1.** Blockcopolymer, umfassend ein oder mehrere hydrophile Segmente und ein oder mehrere hydrophobe Segemente in einem Molekül und mit einer Struktur, ausgedrückt durch die nachstehende chemische Formel 1

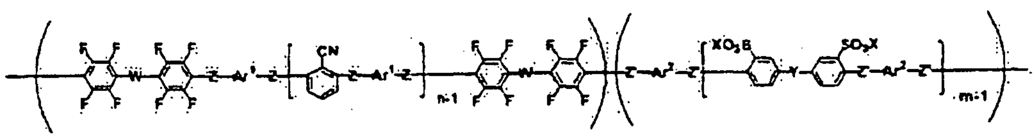

(chemische Formel 1)

worin X H oder ein einwertiges Kation darstellt, Y eine Sulfonylgruppe oder eine Carbonylgruppe darstellt, Z und Z'

jeweils unabhängig voneinander eines von O- und S-Atomen darstellt, W ein oder mehrere Gruppen darstellt, ausgewählt aus der Gruppe, bestehend aus einer direkten Bindung zwischen Benzolen, einer Sulfongruppe und einer Carbonylgruppe, $Ar^1$ und $Ar^2$ jeweils unabhängig voneinander eine zweiwertige aromatische Gruppe darstellen und n und m jeweils unabhängig voneinander eine ganze Zahl von 2 bis 100 darstellen), **dadurch gekennzeichnet, daß** die logarithmische Viskosität, gemessen bei 30°C, einer 0,5 g/dL Lösung, enthaltend N-Methyl-2-pyrrolidon als ein Lösungsmittel, in einem Bereich von 0,5 bis 5,0 dL/g ist.

**2.** Blockcopolymer, enthaltend eine Sulfonsäuregruppe, gemäß Anspruch 1, **dadurch gekennzeichnet, daß** $Ar^2$ eine Struktur aufweist, dargestellt durch eine Struktur, ausgedrückt durch durch die nachstehende chemische Formel 2,

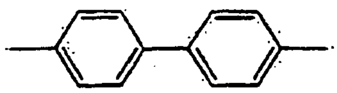

(chemische Formel 2).

**3.** Blockcopolymer, enthaltend eine Sulfonsäuregruppe, gemäß Anspruch 1, **dadurch gekennzeichnet, daß** $Ar^1$ eine Struktur aufweist, dargestellt durch eine Struktur, ausgedrückt durch die vorstehende chemische Formel 2.

**4.** Blockcopolymer, enthaltend eine Sulfonsäuregruppe, gemäß Anspruch 1, **dadurch gekennzeichnet, daß** $Ar^1$ und $Ar^2$ beide eine Struktur aufweisen, dargestellt durch eine Struktur, ausgedrückt durch die vorstehende chemische Formel 2.

**5.** Blockcopolymer, enthaltend eine Sulfonsäuregruppe, gemäß den Ansprüchen 1 bis 4, **dadurch gekennzeichnet, daß** mindestens eines von Z und Z' ein O-Atom darstellt.

**6.** Blockcopolymer, enthaltend eine Sulfonsäuregruppe, gemäß den Ansprüchen 1 bis 4, **dadurch gekennzeichnet, daß** Z und Z' beide ein O-Atom darstellen.

**7.** Blockcopolymer, enthaltend eine Sulfonsäuregruppe, gemäß den Ansprüchen 1 bis 6, **dadurch gekennzeichnet, daß** W eine direkte Bindung zwischen Benzolringen darstellt.

**8.** Sulfonsäuregruppe-enthaltendes, segmentiertes Blockcopolymer gemäß den Ansprüchen 1 bis 7, **dadurch gekennzeichnet, daß** n in einem Bereich von 10 bis 70 liegt.

**9.** Sulfonsäuregruppe-enthaltendes segmentiertes Blockcopolymer gemäß Anspruch 8, **dadurch gekennzeichnet, daß** m 3 oder größer und weniger als 10 ist.

**10.** Sulfonsäuregruppen-enthaltendes segmentiertes Blockcopolymer gemäß Anspruch 9, **dadurch gekennzeichnet, daß** m/n in einem Bereich von 0,4 bis 1,0 liegt.

**11.** Sulfonsäuregruppe-enthaltendes segmentiertes Blockcopolymer gemäß Anspruch 8, **dadurch gekennzeichnet, daß** m 10 oder größer und weniger als 70 ist.

**12.** Sulfonsäuregruppe-enthaltendes segmentiertes Blockcopolymer gemäß Anspruch 11, **dadurch gekennzeichnet, daß** m/n in einem Bereich von 0,4 bis 1,5 liegt.

**13.** Verfahren zum Synthetisieren eines Blockcopolymers durch Bewirken, daß ein hydrophiles Oligomer, ein hydrophobes Oligomer und ein Kettenverlängerungsmittel auf aromatischer Basis mit zwei oder mehr Halogenen in einem Molekül miteinander reagieren, **dadurch gekennzeichnet, daß** das hydrophobe Oligomer in einem Molekül eine Struktur, ausgedrückt durch die nachstehende chemische Formel 7, enthält,

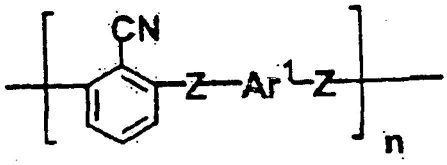

(chemische Formel 7)

(worin Z unabhänig voneinander eines von O- und S-Atomen darstellt, $Ar^1$ eine zweiwertige aromatische Gruppe darstellt und n eine ganze Zahl von 2 bis 100 darstellt) und
das hydrophile Oligomer in einem Molekül eine Struktur, ausgedrückt durch die nachstehende chemische Formel 8, enthält,

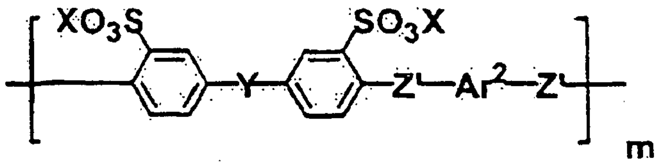

(chemische Formel 8)

worin X H oder ein einwertiges Kation darstellt, Y eine Sulfonylgruppe oder eine Carbonylgruppe darstellt, Z' eines von O- und S-Atomen darstellt, $Ar^2$ eine zweiwertige aromatische Gruppe darstellt und m eine ganze Zahl von 2 bis 100 darstellt).

**14.** Verfahren zum Synthetisieren eines Blockcopolymers gemäß Anspruch 13, **dadurch gekennzeichnet, daß** die terminalen Enden des hydrophilen Oligomers und des hydrophoben Oligomers jeweils eine OH-Gruppe sind.

**15.** Verfahren zum Synthetisieren eines Blockcopolymers gemäß Anspruch 13, **dadurch gekennzeichnet, daß** die terminalen Enden des hydrophilen Oligomers und des hydrophoben Oligomers jeweils eine SH-Gruppe sind.

**16.** Verfahren zum Synthetisieren eines Blockcopolymers gemäß den Ansprüchen 13 bis 15, **dadurch gekennzeichnet, daß** das Halogen des Kettenverlängerungsmittels auf aromatischer Basis Fluor ist.

**17.** Formgegenstand, hergestellt aus dem Blockcopolymer gemäß den Ansprüchen 1 bis 12 oder aus dem Blockcopolymer, erhalten durch das Syntheseverfahren gemäß den Ansprüchen 13 bis 16.

**18.** Protonenaustauschmembran für eine Brennstoffzelle, hergestellt aus dem Blockcopolymer gemäß den Ansprüchen 1 bis 12 oder dem Blockcopolymer, erhalten durch das Syntheseverfahren gemäß den Ansprüchen 13 bis 16.

**19.** Blockcopolymerzusammensetzung, umfassend das Blockcopolymer gemäß den Ansprüchen 1 bis 12 oder das Blockcopolymer, erhalten durch das Syntheseverfahren gemäß den Ansprüchen 13 bis 16.

**20.** Formgegenstand, erhalten aus der Blockcopolymerzusammensetzung gemäß Anspruch 19.

**21.** Protonenaustauschmembran für eine Brennstoffzelle, erhalten aus der Blockcopolymerzusammensetzung gemäß Anspruch 19.

**22.** Protonenaustauschmembran für eine Brennstoffzelle gemäß Anspruch 19, **gekennzeichnet durch** das Einschließen einer faserförmigen Substanz.

**23.** Protonenbrennstoffzelle-Protonenaustauschmembran-Elektrodeneinheit, welche die Protonenaustauschmembran für eine Brennstoffzelle gemäß einem der Ansprüche 18, 21 und 22 einschließt.

**24.** Brennstoffzelle, welche die Brennstoffzelle-Protonenaustauschmembran-Elektrodeneinheit gemäß Anspruch 23 einschließt.

**Revendications**

**1.** Copolymère séquencé comprenant un ou plusieurs segments hydrophiles et un ou plusieurs segments hydrophobes dans une molécule, et ayant une structure exprimée par la formule chimique 1 ci-dessous

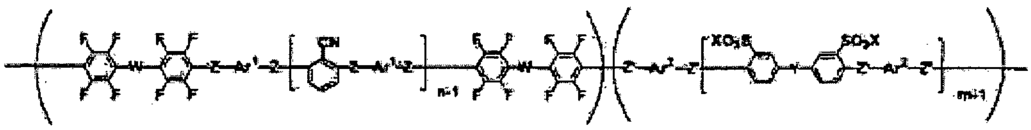

(Formule chimique 1)

(où X représente H ou un cation univalent, Y représente un groupe sulfonyle ou un groupe carbonyle, chacun de Z et Z'représente indépendamment l'un quelconque des atomes O et S, W représente un ou plusieurs groupes choisis parmi le groupe consistant en une liaison directe entre des benzènes, un groupe sulfone et un groupe carbonyle, chacun de $Ar^1$ et $Ar^2$ représente indépendamment un groupe aromatique divalent, et chacun de n et m représente indépendamment un nombre entier de 2 à 100),
**caractérisé en ce que**
la viscosité logarithmique mesurée à 30 °C, d'une solution à 0,5 g/dL contenant de la N-méthyl-2-pyrrolidone comme solvant est dans une plage de 0,5 à 5,0 dL/g.

**2.** Copolymère séquencé contenant un groupe acide sulfonique selon la revendication 1, **caractérisé en ce que** $Ar^2$ a une structure représentée par une structure exprimée par la formule chimique 2 ci-dessous

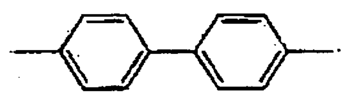

(Formule chimique 2)

**3.** Copolymère séquencé contenant un groupe acide sulfonique selon la revendication 1, **caractérisé en ce que** $Ar^1$ a une structure représentée par une structure exprimée par la formule chimique 2 ci-dessus.

**4.** Copolymère séquencé contenant un groupe acide sulfonique selon la revendication 1, **caractérisé en ce que** à la fois $Ar^1$ et $Ar^2$ ont une structure représentée par une structure exprimée par la formule chimique 2 ci-dessus.

**5.** Copolymère séquencé contenant un groupe acide sulfonique selon les revendications 1 à 4, **caractérisé en ce que** au moins l'un quelconque de Z et Z'représente un atome O.

**6.** Copolymère séquencé contenant un groupe acide sulfonique selon les revendications 1 à 4, **caractérisé en ce que** à la fois Z et Z'représentent un atome O.

**7.** Copolymère séquencé contenant un groupe acide sulfonique selon les revendications 1 à 6, **caractérisé en ce que** W représente une liaison directe entre des cycles benzène.

**8.** Copolymère séquencé segmenté contenant un groupe acide sulfonique selon les revendications 1 à 7, **caractérisé**

**en ce que**
n est dans une plage de 10 à 70.

9. Copolymère séquencé segmenté contenant un groupe acide sulfonique selon la revendication 8, **caractérisé en ce que**
m est égal à 3 ou plus et est inférieur à 10.

10. Copolymère séquencé segmenté contenant un groupe acide sulfonique selon la revendication 9, **caractérisé en ce que**
m/n est dans une plage de 0,4 à 1,0.

11. Copolymère séquencé segmenté contenant un groupe acide sulfonique selon la revendication 8, **caractérisé en ce que**
m est égal à 10 ou plus et est inférieur à 70.

12. Copolymère séquencé contenant un groupe acide sulfonique selon la revendication 11, **caractérisé en ce que**
m/n est dans une plage de 0,4 à 1,5.

13. Procédé de synthèse d'un copolymère séquencé en amenant un oligomère hydrophile, un oligomère hydrophobe et un agent d'extension de chaîne à base aromatique ayant deux halogènes ou plus dans une molécule à réagir les uns avec les autres, **caractérisé en ce que**
l'oligomère hydrophobe contient, dans une molécule, une structure exprimée par la formule chimique 7 ci-dessous

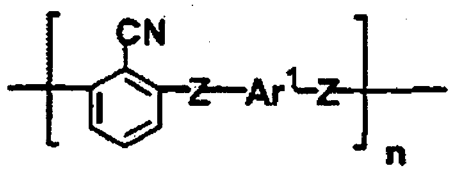

(Formule chimique 7)

(où Z représente indépendamment l'un quelconque des atomes O et S, $Ar^1$ représente un groupe aromatique divalent, et n représente un nombre entier de 2 à 100), et
l'oligomère hydrophile contient, dans une molécule, une structure exprimée par la formule chimique 8 ci-dessous

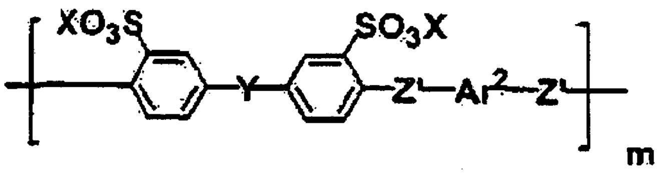

(Formule chimique 8)

(où X représente H ou un cation univalent, Y représente un groupe sulfonyle ou un groupe carbonyle, Z'représente l'un quelconque des atomes 0 et S, $Ar^2$ représente un groupe aromatique divalent, et m représente un nombre entier de 2 à 100).

14. Procédé de synthèse d'un copolymère séquencé selon la revendication 13, **caractérisé en ce que**
chacune des extrémités terminales de l'oligomère hydrophile et de l'oligomère hydrophobe est un groupe OH.

15. Procédé de synthèse d'un copolymère séquencé selon la revendication 13, **caractérisé en ce que**
chacune des extrémités terminales de l'oligomère hydrophile et de l'oligomère hydrophobe est un groupe SH.

**16.** Procédé de synthèse d'un copolymère séquencé selon les revendications 13 à 15, **caractérisé en ce que** l'halogène de l'agent d'extension de chaîne à base aromatique est le fluor.

**17.** Produit moulé constitué du copolymère séquencé selon les revendications 1 à 12 ou du copolymère séquencé obtenu grâce au procédé de synthèse selon les revendications 13 à 16.

**18.** Membrane échangeuse de protons pour une pile à combustible constituée du copolymère séquencé selon les revendications 1 à 12 ou du copolymère séquencé obtenu grâce au procédé de synthèse selon les revendications 13 à 16.

**19.** Composition de copolymère séquencé composée du copolymère séquencé selon les revendications 1 à 12 ou du copolymère séquencé obtenu grâce au procédé de synthèse selon les revendications 13 à 16.

**20.** Produit moulé obtenu à partir de la composition de copolymère séquencé selon la revendication 19.

**21.** Membrane échangeuse de protons pour une pile à combustible obtenue à partir de la composition de copolymère séquencée selon la revendication 19.

**22.** Membrane échangeuse de protons pour une pile à combustible selon la revendication 19, **caractérisée en ce qu'**elle comprend une substance fibreuse.

**23.** Ensemble d'électrode à membrane échangeuse de protons de pile à combustible comprenant la membrane échangeuse de protons pour une pile à combustible selon l'une quelconque des revendications 18, 21 et 22.

**24.** Pile à combustible comprenant l'ensemble d'électrode à membrane échangeuse de protons de pile à combustible selon la revendication 23.

FIG.1

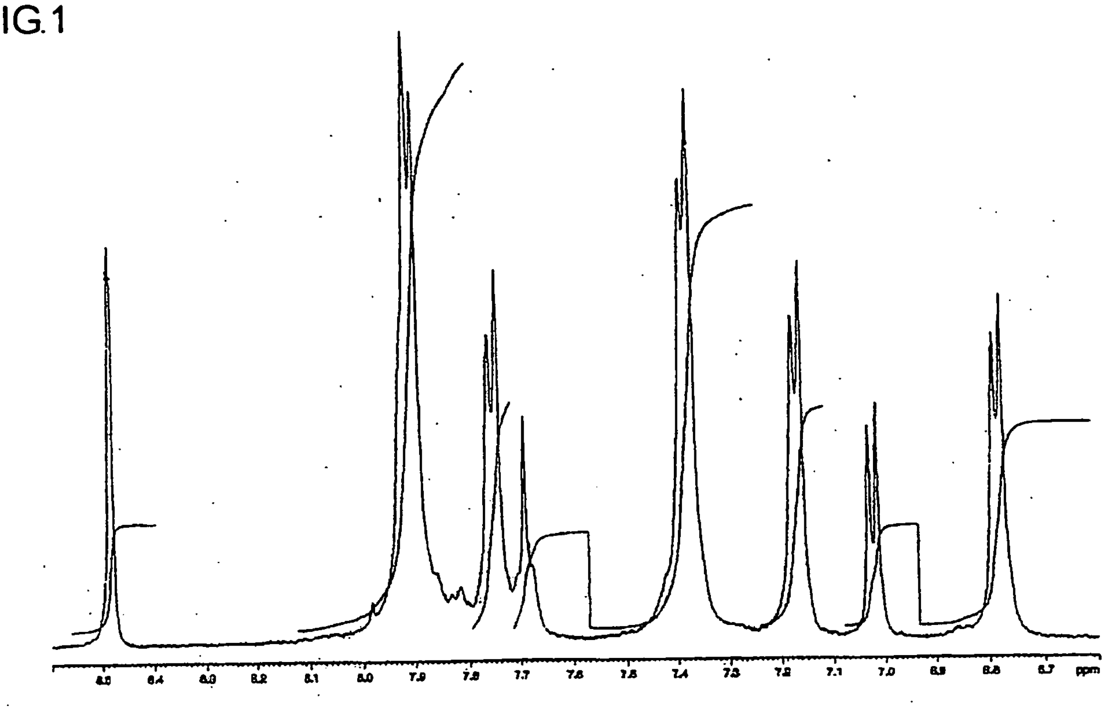

FIG.2

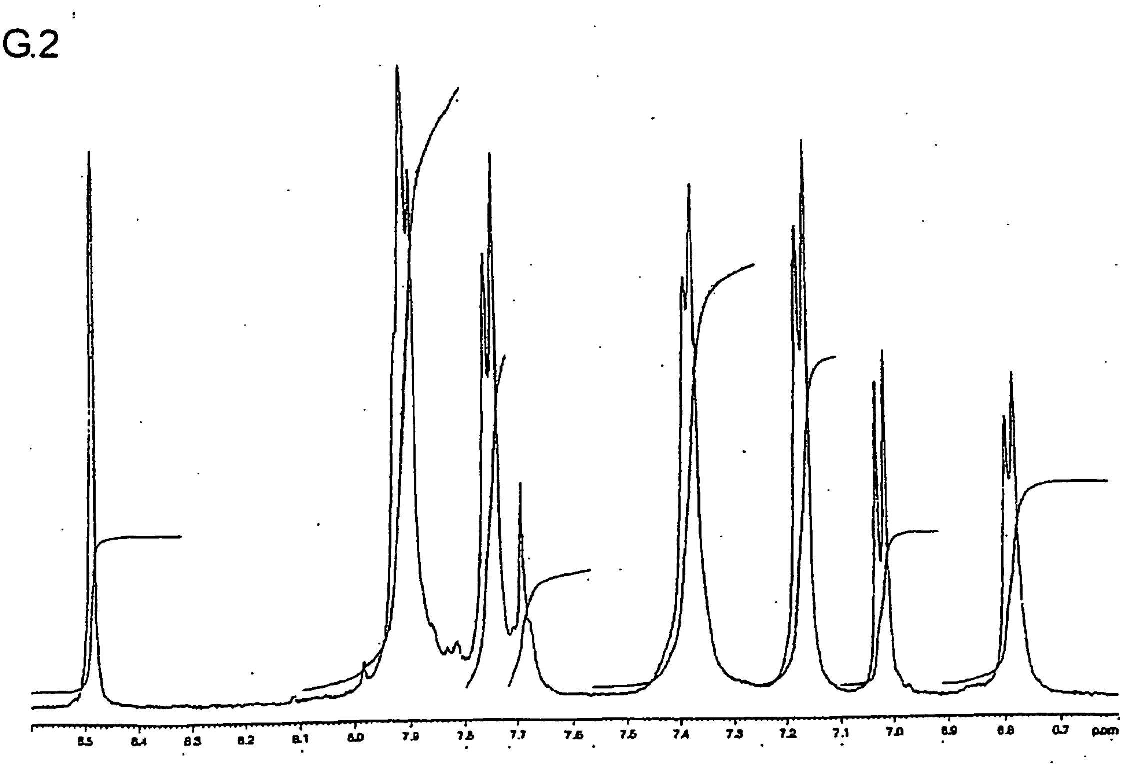

FIG.3

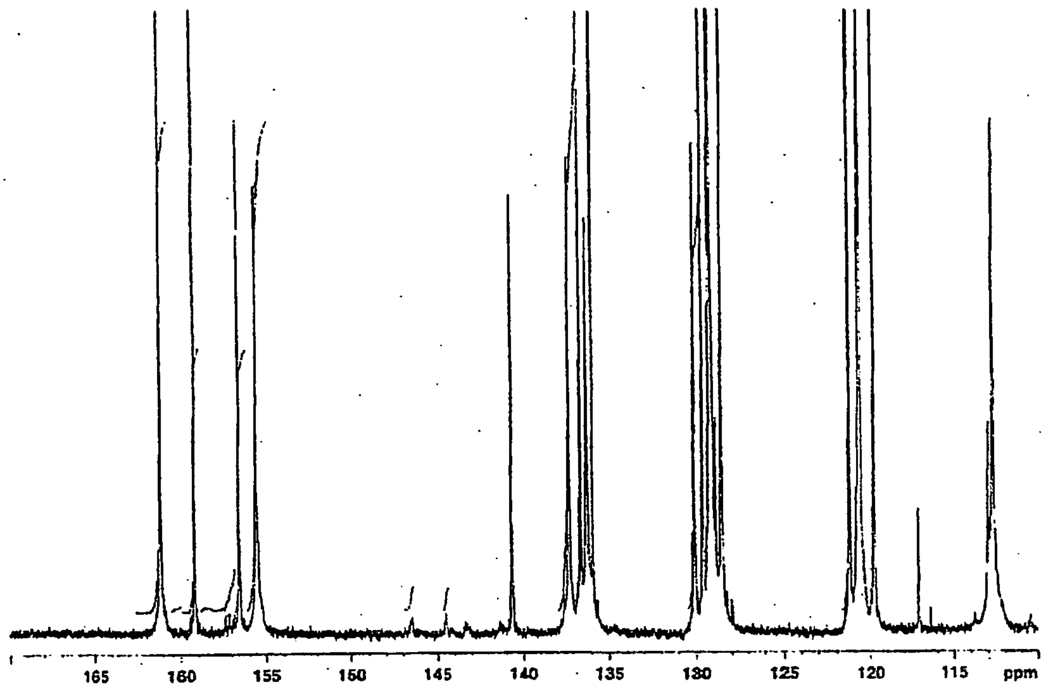
165
160
155
150
145
140
135
130
125
120
115
ppm

FIG.4

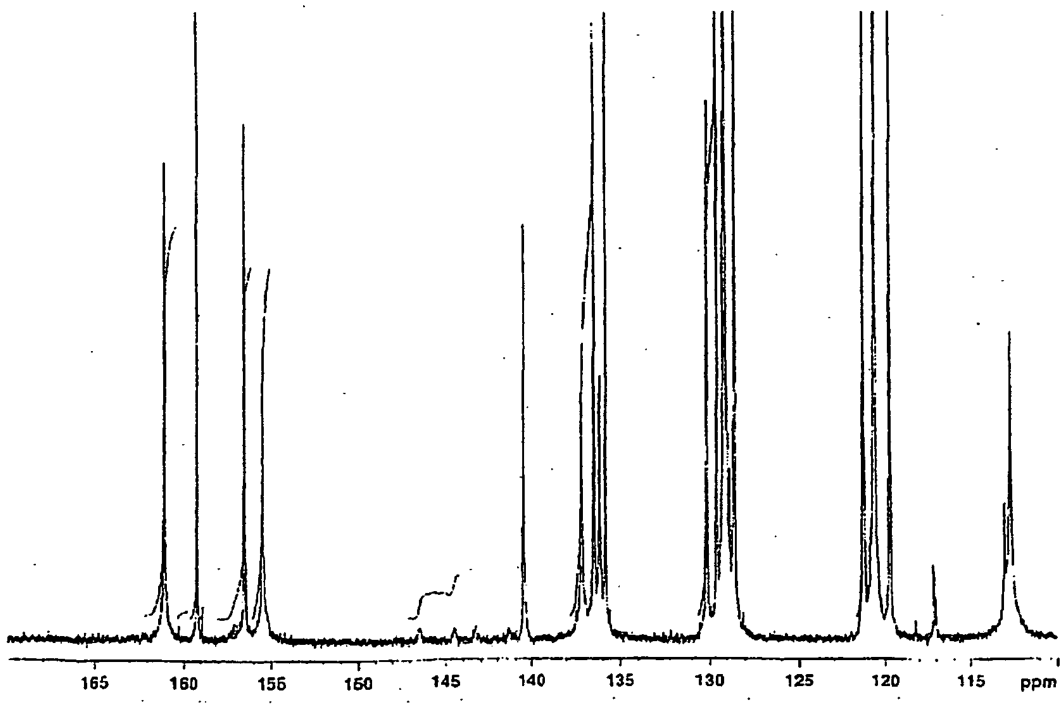
165
160
155
150
145
140
135
130
125
120
115
ppm

FIG.5

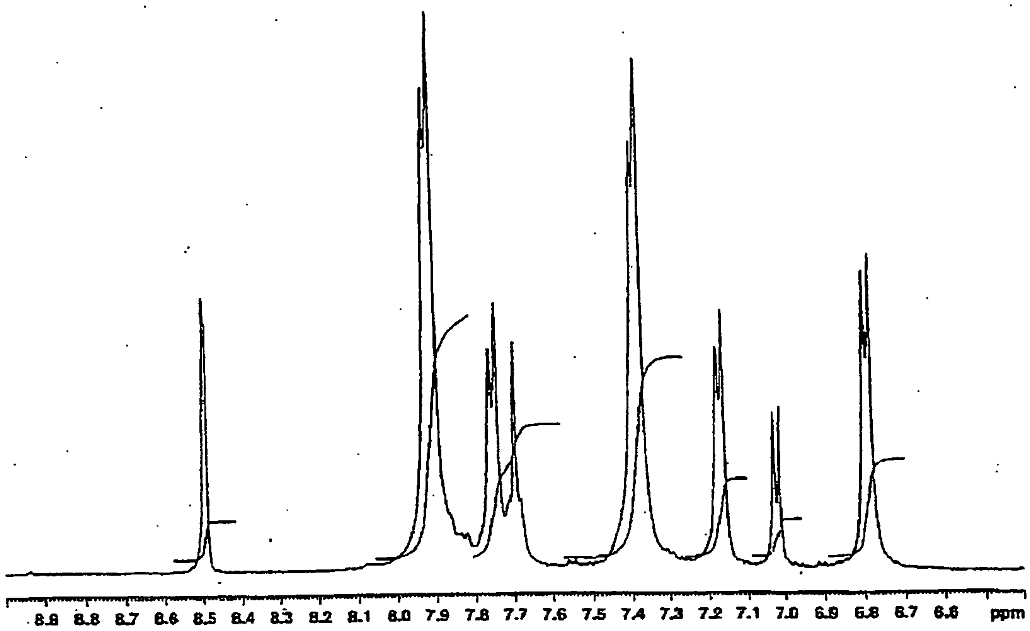
8.9 8.8 8.7 8.6 8.5 8.4 8.3 8.2 8.1 8.0 7.9 7.8 7.7 7.6 7.5 7.4 7.3 7.2 7.1 7.0 6.9 6.8 6.7 6.6 ppm

FIG.6

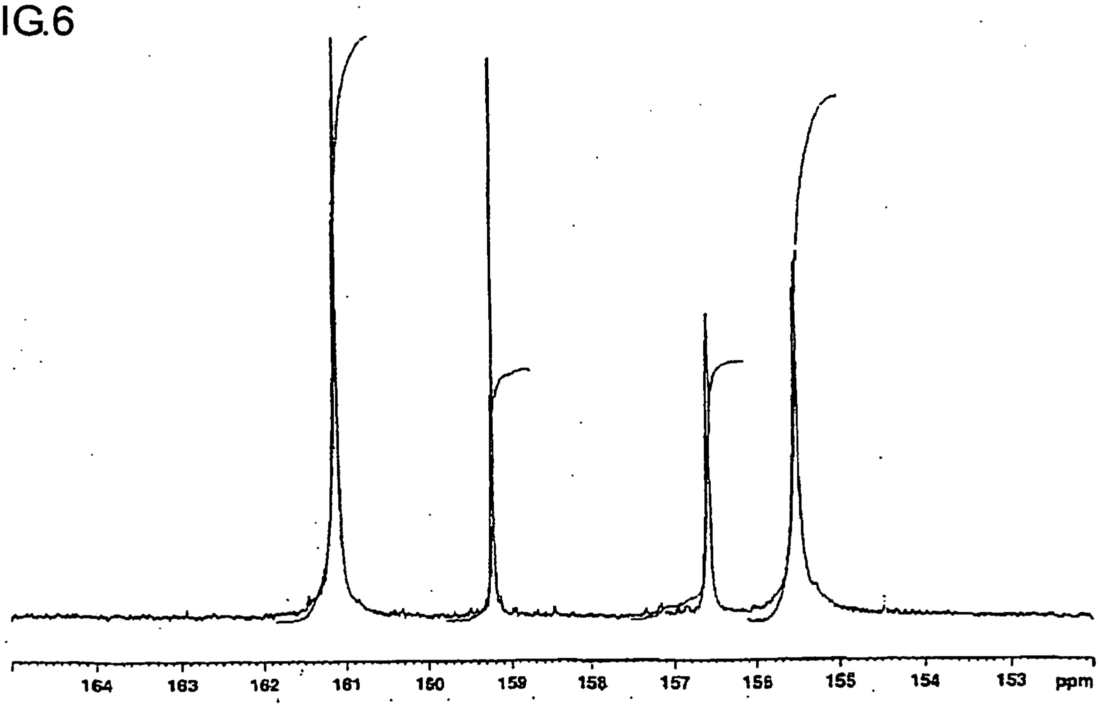
164 163 162 161 160 159 158 157 156 155 154 153 ppm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20020091225 A
- JP 63258930 A
- JP 2001250567 A
- US 2001278978 A
- US 200331232 B
- US 2004190003 A
- US 2007515513 A
- US 2005126684 A
- US 2006176666 A


### Non-patent literature cited in the description


- Sulfonated Polysulfone as Promising Membranes for Polymer Electrolyte Fuel Cells. **F. LUFRANO et al.** Journal of AppLied Polymer Science, the United States. John Wiley & Sons, Inc, 2000, vol. 77, 1250-1257
- Hydrophilic-hydrophobic multiblock copolymers based on poly(arylene ether sulfone) via low-temperature coupling reactions for proton exchange membrane fuel cells. **HAE-SEUNG LEE ; ABHISHEK ROY ; OZMA LANE ; STUART DUNN ; JAMES E. MCGRATH.** Polymer, the United States. Elsevier Ltd, 2008, vol. 49, 715-723